(19) ...

Europäisches Patentamt

European Patent Office

Office européen des brevets

(11) **EP 4 468 254 A1**

(12) **EUROPEAN PATENT APPLICATION**
published in accordance with Art. 153(4) EPC

(43) Date of publication:
**27.11.2024 Bulletin 2024/48**

(21) Application number: **23773840.6**

(22) Date of filing: **21.03.2023**

(51) International Patent Classification (IPC):
***G06V 10/774*** (2022.01)

(52) Cooperative Patent Classification (CPC):
**G06N 3/0499; G06N 3/08; G06V 10/762;
G06V 10/764; G06V 10/774**

(86) International application number:
**PCT/CN2023/082740**

(87) International publication number:
**WO 2023/179593 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.03.2022 CN 202210290759**

(71) Applicant: **Huawei Technologies Co., Ltd.
Shenzhen, Guangdong 518129 (CN)**

(72) Inventors:
• **HU, Bin
Shenzhen, Guangdong 518129 (CN)**
• **WANG, Jian
Shenzhen, Guangdong 518129 (CN)**
• **LIU, Wenliang
Shenzhen, Guangdong 518129 (CN)**
• **LI, Rong
Shenzhen, Guangdong 518129 (CN)**

(74) Representative: **Gill Jennings & Every LLP
The Broadgate Tower
20 Primrose Street
London EC2A 2ES (GB)**

(54) **DATA PROCESSING METHOD AND DEVICE**

(57) Embodiments of this application provide a data processing method and apparatus. The method includes: determining a feedforward neural network model, where input information of an $I^{th}$ layer in the feedforward neural network model includes category distribution information of training data and a first data feature, output information of the $I^{th}$ layer includes a second data feature, the first data feature is an output of an $(1-1)^{th}$ layer, both the first data feature and the second data feature are classification or clustering information representing the training data, and I is a positive integer greater than 1; obtaining to-be-processed data of unknown classification or clustering information; and inputting the to-be-processed data into the feedforward neural network model to determine a data feature of the to-be-processed data, where the data feature of the to-be-processed data is the classification or clustering information representing the to-be-processed data, and the data feature of the to-be-processed data is used to determine a classification or clustering result of the to-be-processed data. In this way, communication overheads can be reduced, the feedforward neural network architecture is more flexible, and a black box problem of a neural network can be interpreted.

FIG. 10

## Description

This application claims priority to Chinese Patent Application No. 202210290759.2, filed with the China National Intellectual Property Administration on March 23, 2022 and entitled "DATA PROCESSING METHOD AND APPARATUS", which is incorporated herein by reference in its entirety.

## TECHNICAL FIELD

This application relates to the field of artificial intelligence technologies, and in particular, to a data processing method and apparatus.

## BACKGROUND

In recent years, the development of deep learning has led to research on a deep learning-based wireless communication technology in the academia and industry. A research result proves that a deep learning technology can improve performance of a wireless communication system, and has potential to be applied to a physical layer to perform interference adjustment, channel estimation, signal detection, signal processing, and other aspects.

A conventional communication transceiver design may be replaced by an autoencoder, a transmit end and a receive end are modeled using a neural network, data distribution is learned by using a large quantity of training samples, and a result is predicted. For example, a neural network may be trained according to a back propagation (back propagation, BP) algorithm. A learning process of the BP algorithm includes a forward propagation process and a back propagation process. In the forward propagation process, input information is processed by an input layer and a hidden layer in sequence and then is sent to an output layer to obtain an excitation response. In the back propagation process, a difference between the excitation response and a corresponding expected target output is calculated as an objective function, and partial derivatives of the objective function with respect to weights of neurons are calculated layer by layer, to form a gradient of the objective function with respect to a weight vector, so that the weight can be modified. Learning of the neural network is completed in a weight modification process. When an error reaches an expected value, the learning of the neural network ends. However, in the BP algorithm, there is no corresponding theoretical guidance for selecting a quantity of network layers and a quantity of neurons, and when a network structure is modified, retraining needs to be performed. There is no reliable mathematical interpretability for a network output result. The implementation of the neural network is considered as a "black box", which cannot be widely recognized in theory. In addition, gradient disappearance or gradient explosion caused by execution of the BP algorithm has not been effectively resolved.

## SUMMARY

Embodiments of this application disclose a data processing method and apparatus, so that communication overheads can be reduced, a feedforward neural network architecture is more flexible, and a black box problem of a neural network can be interpreted.

A first aspect of embodiments of this application discloses a data processing method, including: determining a feedforward neural network model, where input information of an $l^{th}$ layer in the feedforward neural network model includes category distribution information of training data and a first data feature, output information of the $l^{th}$ layer includes a second data feature, the first data feature is an output of an $(l-1)^{th}$ layer, both the first data feature and the second data feature are classification or clustering information representing the training data, and 1 is a positive integer greater than 1; obtaining to-be-processed data of unknown classification or clustering information; and inputting the to-be-processed data into the feedforward neural network model to determine a data feature of the to-be-processed data, where the data feature of the to-be-processed data is the classification or clustering information representing the to-be-processed data, and the data feature of the to-be-processed data is used to determine a classification or clustering result of the to-be-processed data.

In the foregoing method, compared with a BP algorithm in which a transmit-end network needs to be updated through gradient backhaul, the method in embodiments of this application can reduce communication overheads caused by training and interaction, and improve training efficiency. A receive end needs to train only a task-related readout layer network. In addition, a structure of the feedforward neural network is more flexible, and accuracy can be improved by increasing a quantity of network layers. In other words, when a value of l is larger, accuracy of the classification or clustering result of the to-be-processed data is higher, thereby avoiding a problem that retraining is needed due to different adaptations to different transmission/receiving networks. In addition, the feedforward neural network model is interpretable, and a black box problem of a neural network can be interpreted. In addition, the output data feature of the to-be-processed data may be used as data preprocessing, and can be used for a subsequent readout layer operation.

In a possible implementation, a dimension of the data feature of the to-be-processed data is related to a data type of the to-be-processed data.

In another possible implementation, when l=2, and the first data feature is an output of a 1st layer, input information of the 1st layer includes the category distribution information of the training data and the training data, where the training data includes category labels, and the category distribution information of the training data is determined based on the category labels in the training data.

In another possible implementation, the determining a feedforward neural network model includes: obtaining the first data feature $Z^{l-1}$; and determining network parameters of the $l$th layer based on the first data feature $Z^{l-1}$ and the category distribution information $\Pi_i$ of the training data, where the second data feature is determined based on the first data feature $Z^{l-1}$ and the network parameters of the $l$th layer.

In another possible implementation, that the second data feature is determined based on the first data feature $Z^{l-1}$ and the network parameters of the $l$th layer includes: determining an objective function gradient expression based on the network parameters of the $l$th layer and the first data feature $Z^{l-1}$; and determining the second data feature $Z^l$ based on the first data feature $Z^{l-1}$, the category distribution information $\Pi_i$ of the training data, and the objective function gradient expression.

In another possible implementation, the determining network parameters of the $l$th layer based on the first data feature $Z^{l-1}$ and the category distribution information $\Pi_i$ of the training data includes: determining, based on the first data feature $Z^{l-1}$ and the category distribution information $\Pi_i$ of the training data, a regularized autocorrelation matrix of data whose category label corresponds to each category in the training data; and determining the network parameters of the $l$th layer based on the regularized autocorrelation matrix of the data whose category label corresponds to each category in the training data.

In another possible implementation,

$$S_i = \frac{1}{m_i} Z^{l-1} \Pi_i (Z^{l-1})^T;$$

$$\widehat{S}_i = \epsilon I + S_i;$$

and

$$U_i^l = \sum_{j \neq i}^{K} \frac{\alpha_{i,j}}{m_i} \left( -\widehat{S}_i^{-1} \widehat{S}_j \widehat{S}_i^{-1} + \widehat{S}_j^{-1} \right),$$

where $m_i$ is a quantity of pieces of data whose category label corresponds to an $i$th category in m pieces of training data, $m = \sum_i^K m_i$, K is a quantity of all categories of category labels in the m pieces of training data, $\alpha_{i,j} = \frac{m_i + m_j}{m}$ is a weight parameter used to balance quantities of samples of the categories in the training data, $Z^{l-1}$ is the first data feature, $\Pi_i$ is the category distribution information of the training data, $S_i$ is an autocorrelation matrix of the data whose category label corresponds to the $i$th category in the training data, $\varepsilon$ is a regularization parameter, $\hat{S}_i$ is a regularized autocorrelation matrix of the data whose category label corresponds to the $i$th category in the training data, and $U_i^l$ is network parameters of the $i$th category of the $l$th layer.

In another possible implementation, $S_i = \frac{1}{m_i} Z^{l-1} \Pi_i (Z^{l-1})^T$ ;

$$\widehat{S}_i = \epsilon I + S_i;$$

and

$$A_i^l = \widehat{S}^{-1} - \widehat{S}_i^{-1},$$

where $m_i$ is a quantity of pieces of data whose category label corresponds to an $i$th category in m pieces of training data, $m = \sum_i^K m_i$, K is a quantity of all categories of category labels in the m pieces of training data, $Z^{l-1}$ is the first data feature, $\Pi_i$ is the category distribution information of the training data, $I$ is an identity matrix, $S_i$ is an autocorrelation matrix of the data whose category label corresponds to the $i$th category in the training data, $\varepsilon$ is a regularization parameter, $\hat{S}_i$ is a regularized autocorrelation matrix of the data whose category label corresponds to the $i$th category in the training data, $S$ is autocorrelation matrixes of data whose category labels correspond to all the categories in the training data, $\hat{S}$ is regularized

autocorrelation matrixes of the data whose category labels correspond to all the categories in the training data, and $A_i^l$ is network parameters of the $i^{th}$ category of the $l^{th}$ layer.

In another possible implementation, the determining network parameters of the $l^{th}$ layer based on the first data feature $Z^{l-1}$ and the category distribution information $\Pi_i$ of the training data includes: determining gradient parameters based on the category distribution information $\Pi_i$ of the training data; and determining the network parameters of the $l^{th}$ layer based on the first data feature $Z^{l-1}$ and the gradient parameters.

In another possible implementation,

$$G = [g_1, g_2, \ldots, g_i], g_i = \frac{1}{Tr(\Pi_i)}\Pi_i e;$$

$$H_i = \frac{1}{m_i}(I - g_i e^T)\Pi_i(I - g_i e^T)^T;$$

and

$$C_i^l = Z^{l-1}g_i,$$

where $Z^{l-1}$ satisfies an energy constraint: $Tr(Z^{l-1}(Z^{l-1})^T) = m(1 + \sigma^2 d)$, $\sigma$ is a Gaussian distribution variance, m is a quantity of samples of the training data, $d$ is a dimension of the training data, $Z^{l-1}$ is the first data feature, $e \in R^{m \times 1}$ is a column vector whose elements are all 1, $\Pi_i$ is the category distribution information of the training data, $Tr()$ represents a trace operation, $I$ is an identity matrix, $m_i$ is a quantity of pieces of data whose category label corresponds to an $i^{th}$ category in the m pieces of training data, $m = \sum_i^K m_i$, K is a quantity of all categories of category labels in the m pieces of training data, $C_i^l$ is network parameters of the $i^{th}$ category of the $l^{th}$ layer, and $G$ and $H_i$ are the gradient parameters.

In another possible implementation, the inputting the to-be-processed data into the feedforward neural network model to determine a data feature of the to-be-processed data includes: determining, based on the to-be-processed data and the network parameters of the $l^{th}$ layer, category distribution information $\Pi_i^l$ that corresponds to predicted category labels and that is of the to-be-processed data; determining an objective function gradient expression based on the to-be-processed data and the category distribution information $\Pi_i^l$ that corresponds to the predicted category labels and that is of the to-be-processed data; and determining the data feature of the to-be-processed data based on the to-be-processed data and the objective function gradient expression.

In another possible implementation, the determining, based on the to-be-processed data and the network parameters of the $l^{th}$ layer, category distribution information that corresponds to predicted category labels and that is of the to-be-processed data includes: determining projections of the predicted category labels in the to-be-processed data on a first category based on the to-be-processed data and the network parameters of the $l^{th}$ layer, where the first category is any one of a plurality of categories corresponding to the predicted category labels in the to-be-processed data; and determining, based on the projections of the to-be-processed data on the first category, the category distribution information that corresponds to the predicted category labels and that is of the to-be-processed data.

In another possible implementation,

$$p_i^l = U_i^l Z;$$

and

$$\Pi_i^l = \frac{exp\left(-\eta\left\|p_i^l\right\|\right)}{\sum_i exp(-\eta\|p_i^l\|)} \in [0,1],$$

where $Z$ is the to-be-processed data, $U_i^l$ is network parameters of an $i^{th}$ category of the $l^{th}$ layer, $p_i^l$ is projections of the predicted category labels in the to-be-processed data on the $i^{th}$ category of the $l^{th}$ layer, $\Pi_i^l$ is the category distribution information that corresponds to the predicted category labels and that is of the to-be-processed data, and $\eta$ is a

hyperparameter for controlling estimation confidence.

In another possible implementation, the objective function gradient expression includes:

$$\frac{\partial L}{\partial Z} = \sum_{i=1}^{K} \sum_{j=i+1}^{K} \left( \frac{\alpha_{i,j}}{m_i} \left( -\widehat{S}_i^{-1} \widehat{S}_j \widehat{S}_i^{-1} + \widehat{S}_j^{-1} \right) Z \Pi_i^l + \frac{\alpha_{i,j}}{m_j} \left( -\widehat{S}_j^{-1} \widehat{S}_i \widehat{S}_j^{-1} + \widehat{S}_i^{-1} \right) Z \Pi_j^l \right) =$$

$$\sum_{i=1}^{K} \sum_{j \neq i}^{K} \frac{\alpha_{i,j}}{m_i} \left( -\widehat{S}_i^{-1} \widehat{S}_j \widehat{S}_i^{-1} + \widehat{S}_j^{-1} \right) Z \Pi_i^l,$$

where

$m_i$ is a quantity of pieces of data whose predicted category label is the i$^{th}$ category in m pieces of to-be-processed data, $m = \sum_i^K m_i$, K is a quantity of all categories of predicted category labels in the m pieces of to-be-processed data, $\alpha_{i,j} = \frac{m_i + m_j}{m}$ is a weight parameter used to balance quantities of samples of the predicted categories in the to-be-processed data, $Z$ is the to-be-processed data, $\Pi_i^l$ is the category distribution information that corresponds to the predicted category labels and that is of the to-be-processed data, $S_i$ is an autocorrelation matrix of the data whose predicted category label corresponds to the i$^{th}$ category in the to-be-processed data, and $\widehat{S}_i$ is a regularized autocorrelation matrix of the data whose predicted category label corresponds to the i$^{th}$ category in the to-be-processed data.

In another possible implementation,

$$p_i^l = A_i^l Z;$$

and

$$\Pi_i^l = \frac{exp\left(-\eta \left\| p_i^l \right\|\right)}{\sum_i exp(-\eta \| p_i^l \|)} \in [0,1],$$

where $Z$ is the to-be-processed data, $A_i^l$ is network parameters of an i$^{th}$ category of the l$^{th}$ layer, $p_i^l$ is projections of the predicted category labels in the to-be-processed data on the i$^{th}$ category of the l$^{th}$ layer, $\Pi_i^l$ is the category distribution information that corresponds to the predicted category labels and that is of the to-be-processed data, and $\eta$ is a hyperparameter for controlling estimation confidence.

In another possible implementation, the objective function gradient expression includes:

$$\frac{\partial L}{\partial Z} = \sum_{k=1}^{K} \frac{\alpha_i}{m_i} \left( \widehat{S}^{-1} - \widehat{S}_i^{-1} \right) Z \Pi_i^l + \frac{\alpha_i}{m} \left( -\widehat{S}^{-1} \widehat{S}_i \widehat{S}^{-1} + \widehat{S}^{-1} \right) Z,$$

where $m_i$ is a quantity of pieces of data whose predicted category label is an i$^{th}$ category in m pieces of to-be-processed data, $\alpha_i = \frac{m_i}{m}$, $\alpha_i$ is a weight parameter used to balance quantities of samples of predicted categories in the to-be-processed data, $Z$ is the to-be-processed data, $\Pi_i^l$ is the category distribution information that corresponds to the predicted category labels and that is of the to-be-processed data, $S_i$ is an autocorrelation matrix of the data whose predicted category label corresponds to the i$^{th}$ category in the to-be-processed data, $\widehat{S}_i$ is a regularized autocorrelation matrix of the data whose predicted category label corresponds to the i$^{th}$ category in the to-be-processed data, $S$ is autocorrelation matrixes of data whose predicted category labels correspond to all the categories in the to-be-processed data, and $\widehat{S}$ is regularized autocorrelation matrixes of the data whose predicted category labels correspond to all the categories in the to-be-processed data.

In another possible implementation, the category distribution information that corresponds to the predicted category labels and that is of the to-be-processed data includes one or more of the following: distance information, correlation information, differential information, or soft classification information.

In another possible implementation, the determining, based on the to-be-processed data and the network parameters of the l$^{th}$ layer, category distribution information that corresponds to predicted category labels and that is of the to-be-processed data includes:

$$\Pi_i^l = \operatorname{argmin} \operatorname{dist}(\mathbf{Z}, \mathbf{C}_i^l);$$

$$\Pi_i^l = arg\operatorname{min} < \mathbf{Z}, \mathbf{C}_i^l >;$$

or or

$$\Pi_i^l = \operatorname{argmin} \operatorname{dist}\!\left(\mathbf{Z}^l, \mathbf{C}_i^l\right) - \operatorname{dist}\!\left(\mathbf{Z}^{l-1}, \mathbf{C}_i^{l-1}\right);$$

or

$$\Pi_i^l = \frac{\exp\!\left(\eta\, dist\!\left(\mathbf{Z}, \mathbf{C}_i^l\right)\right)}{\sum_i \exp(\eta\, dist(\mathbf{Z}, \mathbf{C}_i^l))},$$

where $\mathbf{Z}$ is the to-be-processed data, $\Pi_i^l$ is the category distribution information that corresponds to the predicted category labels and that is of the to-be-processed data, $\mathbf{C}_i^l$ is network parameters of an $i^{th}$ category of the $l^{th}$ layer, $\mathbf{Z}^l$ is a data feature of the to-be-processed data at the $l^{th}$ layer, $\mathbf{Z}^{l-1}$ is a data feature of the to-be-processed data at the $(l-1)^{th}$ layer, and < > represents an inner product.

In another possible implementation, the determining an objective function gradient expression based on the to-be-processed data and the category distribution information that corresponds to the predicted category labels and that is of the to-be-processed data includes: determining gradient parameters ($\mathbf{G}$ and $\mathbf{H}_i$) based on the category distribution information $\Pi_i^l$ that corresponds to the predicted category labels and that is of the to-be-processed data; and determining the objective function gradient expression based on the to-be-processed data and the gradient parameters.

In another possible implementation, the determining gradient parameters based on the category distribution information $\Pi_i^l$ that corresponds to the predicted category labels and that is of the to-be-processed data includes:

$$g_i = \frac{1}{Tr(\Pi_i^l)} \Pi_i^l e;$$

$$\mathbf{G} = [g_1, g_2, \ldots, g_i];$$

and

$$\mathbf{H}_i = \frac{1}{m_i}(\mathbf{I} - g_i e^T)\Pi_i^l(\mathbf{I} - g_i e^T)^T,$$

where $\Pi_i^l$ is the category distribution information that corresponds to the predicted category labels and that is of the to-be-processed data, $Tr()$ represents a trace operation, $\mathbf{I}$ is an identity matrix, $m_i$ is a quantity of pieces of data of an $i^{th}$ category in m pieces of to-be-processed data, $m = \sum_i^K m_i$, K is a quantity of all categories of predicted category labels in the m pieces of to-be-processed data, and $\mathbf{G}$ and $\mathbf{H}_i$ represent the gradient parameters.

In another possible implementation, the objective function gradient expression includes:

$$\frac{\partial L}{\partial Z} = -ZG(G^T Z^T Z G)^{-1} G^T + \beta \sum_{k=1}^{K} \left( \frac{1}{\epsilon + \sigma^2} Z H_i - (\epsilon I + Z H_i Z^T)^{-1} Z H_i \right),$$

where $\mathbf{Z}$ is the to-be-processed data, $\sigma$ is a Gaussian distribution variance, $\varepsilon$ is a regularization parameter, $\mathbf{I}$ is an identity matrix, $G$ and $\mathbf{H}_i$ represent the gradient parameters, and $\beta$ represents a regularization parameter.

In another possible implementation, the determining the data feature of the to-be-processed data based on the to-be-processed data and the objective function gradient expression includes:

$$Z^l = Z^{l-1} + \lambda\frac{\partial L}{\partial Z}, Z^l \in \mathbb{S}^{d-1},$$

where $Z^l$ is the data feature of the to-be-processed data, $\frac{\partial L}{\partial Z}$ is the objective function gradient expression, $Z^{l-1}$ is the to-be-processed data, and $Z^{l-1}$ is constrained in (d-1)-dimensional unit sphere space.

In another possible implementation, the method further includes: outputting the data feature of the to-be-processed data.

In another possible implementation, the to-be-processed data of the unknown classification or clustering information is a data feature of third data, the data feature of the third data is determined through another feed forward neural network, input information of an $l^{th}$ layer in the another feedforward neural network includes category distribution information of training data and a first data feature, output information of the $l^{th}$ layer includes a second data feature, the first data feature is an output of an $(l-1)^{th}$ layer, both the first data feature and the second data feature are classification or clustering information representing the training data, and 1 is a positive integer greater than 1.

A second aspect of embodiments of this application discloses a data processing apparatus, including: a first determining unit, an obtaining unit, and a second determining unit. The first determining unit is configured to determine a feedforward neural network model, where input information of an $l^{th}$ layer in the feedforward neural network model includes category distribution information of training data and a first data feature, output information of the $l^{th}$ layer includes a second data feature, the first data feature is an output of an $(l-1)^{th}$ layer, both the first data feature and the second data feature are classification or clustering information representing the training data, and 1 is a positive integer greater than 1. The obtaining unit is configured to obtain to-be-processed data of unknown classification or clustering information. The second determining unit is configured to input the to-be-processed data into the feedforward neural network model to determine a data feature of the to-be-processed data, where the data feature of the to-be-processed data is the classification or clustering information representing the to-be-processed data, and the data feature of the to-be-processed data is used to determine a classification or clustering result of the to-be-processed data.

In a possible implementation, a dimension of the data feature of the to-be-processed data is related to a data type of the to-be-processed data.

In another possible implementation, when l=2, and the first data feature is an output of a $1^{st}$ layer, input information of the $1^{st}$ layer includes the category distribution information of the training data and the training data, where the training data includes category labels, and the category distribution information of the training data is determined based on the category labels in the training data.

In another possible implementation, the first determining unit is specifically configured to obtain the first data feature $Z^{l-1}$; and determine network parameters of the $l^{th}$ layer based on the first data feature $Z^{l-1}$ and the category distribution information $\Pi_i$ of the training data, where the second data feature is determined based on the first data feature $Z^{l-1}$ and the network parameters of the $l^{th}$ layer.

In another possible implementation, the first determining unit is specifically configured to determine an objective function gradient expression based on the network parameters of the $l^{th}$ layer and the first data feature $Z^{l-1}$; and determine the second data feature $Z^l$ based on the first data feature $Z^{l-1}$, the category distribution information $\Pi_i$ of the training data, and the objective function gradient expression.

In another possible implementation, the first determining unit is specifically configured to determine, based on the first data feature $Z^{l-1}$ and the category distribution information $\Pi_i$ of the training data, a regularized autocorrelation matrix of data whose category label corresponds to each category in the training data; and determine the network parameters of the $l^{th}$ layer based on the regularized autocorrelation matrix of the data whose category label corresponds to each category in the training data.

In another possible implementation,

$$S_i = \frac{1}{m_i} Z^{l-1} \Pi_i (Z^{l-1})^T;$$

$$\widehat{S}_i = \epsilon I + S_i;$$

and

$$U_i^1 = \sum_{j \neq i}^{K} \frac{\alpha_{i,j}}{m_i} \left( -\widehat{S}_i^{-1}\widehat{S}_j\widehat{S}_i^{-1} + \widehat{S}_j^{-1} \right),$$

where

$m_i$ is a quantity of pieces of data whose category label corresponds to an $i^{th}$ category in m pieces of training data, $m = \sum_i^K m_i$, K is a quantity of all categories of category labels in the m pieces of training data, $\alpha_{i,j} = \frac{m_i + m_j}{m}$ is a weight parameter used to balance quantities of samples of the categories in the training data, $Z^{l-1}$ is the first data feature, $\Pi_i$ is the category distribution information of the training data, $S_i$ is an autocorrelation matrix of the data whose category label corresponds to the $i^{th}$ category in the training data, $\varepsilon$ is a regularization parameter, $\hat{S}_i$ is a regularized autocorrelation matrix of the data whose category label corresponds to the $i^{th}$ category in the training data, and $U_i^l$ is network parameters of the $i^{th}$ category of the $l^{th}$ layer.

In another possible implementation, $S_i = \frac{1}{m_i} Z^{l-1} \Pi_i (Z^{l-1})^T$ ;

$$\hat{S}_i = \epsilon I + S_i;$$

and

$$A_i^l = \hat{S}^{-1} - \hat{S}_i^{-1},$$

where $m_i$ is a quantity of pieces of data whose category label corresponds to an $i^{th}$ category in m pieces of training data, $m = \sum_i^K m_i$, K is a quantity of all categories of category labels in the m pieces of training data, $Z^{l-1}$ is the first data feature, $\Pi_i$ is the category distribution information of the training data, $I$ is an identity matrix, $S_i$ is an autocorrelation matrix of the data whose category label corresponds to the $i^{th}$ category in the training data, $\varepsilon$ is a regularization parameter, $\hat{S}_i$ is a regularized autocorrelation matrix of the data whose category label corresponds to the $i^{th}$ category in the training data, $S$ is autocorrelation matrixes of data whose category labels correspond to all the categories in the training data, $\hat{S}$ is regularized autocorrelation matrixes of the data whose category labels correspond to all the categories in the training data, and $A_i^l$ is network parameters of the $i^{th}$ category of the $l^{th}$ layer.

In another possible implementation, the first determining unit is specifically configured to determine gradient parameters based on the category distribution information $\Pi_i$ of the training data; and determine the network parameters of the $l^{th}$ layer based on the first data feature $Z^{l-1}$ and the gradient parameters.

In another possible implementation,

$$G = [g_1, g_2, \ldots, g_i], g_i = \frac{1}{Tr(\Pi_i)} \Pi_i e;$$

$$H_i = \frac{1}{m_i} (I - g_i e^T) \Pi_i (I - g_i e^T)^T;$$

and

$$C_i^l = Z^{l-1} g_i,$$

where $Z^{l-1}$ satisfies an energy constraint: $Tr(Z^{l-1}(Z^{l-1})^T) = m(1 + \sigma^2 d)$, $\sigma$ is a Gaussian distribution variance, m is a quantity of samples of the training data, d is a dimension of the training data, $Z^{l-1}$ is the first data feature, $e \in R^{m \times 1}$ is a column vector whose elements are all 1, $\Pi_i$ is the category distribution information of the training data, $Tr()$ represents a trace operation, $I$ is an identity matrix, $m_i$ is a quantity of pieces of data whose category label corresponds to an $i^{th}$ category in the m pieces of training data, $m = \sum_i^K m_i$, K is a quantity of all categories of category labels in the m pieces of training data, $C_i^l$ is network parameters of the $i^{th}$ category of the $l^{th}$ layer, and $G$ and $H_i$ are the gradient parameters.

In another possible implementation, the second determining unit is specifically configured to determine, based on the to-be-processed data and the network parameters of the $l^{th}$ layer, category distribution information $\Pi_i^l$ that corresponds to predicted category labels and that is of the to-be-processed data; determine an objective function gradient expression based on the to-be-processed data and the category distribution information $\Pi_i^l$ that corresponds to the predicted category labels and that is of the to-be-processed data; and determine the data feature of the to-be-processed data based on the to-be-processed data and the objective function gradient expression.

In another possible implementation, the second determining unit is specifically configured to determine projections of the predicted category labels in the to-be-processed data on a first category based on the to-be-processed data and the network parameters of the lth layer, where the first category is any one of a plurality of categories corresponding to the predicted category labels in the to-be-processed data; and determine, based on the projections of the to-be-processed data on the first category, the category distribution information that corresponds to the predicted category labels and that is of the to-be-processed data.

In another possible implementation,

$$p_i^l = U_i^1 Z;$$

and

$$\Pi_i^l = \frac{exp\left(-\eta\left\|p_i^l\right\|\right)}{\sum_i exp(-\eta\|p_i^l\|)} \in [0,1],$$

where $Z$ is the to-be-processed data, $U_i^1$ is network parameters of an $i^{th}$ category of the $l^{th}$ layer, $p_i^l$ is projections of the predicted category labels in the to-be-processed data on the $i^{th}$ category of the $l^{th}$ layer, $\Pi_i^l$ is the category distribution information that corresponds to the predicted category labels and that is of the to-be-processed data, and $\eta$ is a hyperparameter for controlling estimation confidence.

In another possible implementation, the objective function gradient expression includes:

$$\frac{\partial L}{\partial Z} = \sum_{i=1}^K \sum_{j=i+1}^K \left(\frac{\alpha_{i,j}}{m_i}\left(-\widehat{S}_i^{-1}\widehat{S}_j\widehat{S}_i^{-1} + \widehat{S}_j^{-1}\right)Z\Pi_i^l + \frac{\alpha_{i,j}}{m_j}\left(-\widehat{S}_j^{-1}\widehat{S}_i\widehat{S}_j^{-1} + \widehat{S}_i^{-1}\right)Z\Pi_j^l\right) =$$

$$\sum_{i=1}^K \sum_{j\neq i}^K \frac{\alpha_{i,j}}{m_i}\left(-\widehat{S}_i^{-1}\widehat{S}_j\widehat{S}_i^{-1} + \widehat{S}_j^{-1}\right)Z\Pi_i^l,$$

where
$m_i$ is a quantity of pieces of data whose predicted category label is the $i^{th}$ category in m pieces of to-be-processed data, $m = \sum_i^K m_i$, K is a quantity of all categories of predicted category labels in the m pieces of to-be-processed data, $\alpha_{i,j} = \frac{m_i+m_j}{m}$ is a weight parameter used to balance quantities of samples of the predicted categories in the to-be-processed data, $Z$ is the to-be-processed data, $\Pi_i^l$ is the category distribution information that corresponds to the predicted category labels and that is of the to-be-processed data, $S_i$ is an autocorrelation matrix of the data whose predicted category label corresponds to the $i^{th}$ category in the to-be-processed data, and $\hat{S}_i$ is a regularized autocorrelation matrix of the data whose predicted category label corresponds to the $i^{th}$ category in the to-be-processed data.

In another possible implementation,

$$p_i^l = A_i^1 Z;$$

and

$$\Pi_i^l = \frac{exp\left(-\eta\left\|p_i^l\right\|\right)}{\sum_i exp(-\eta\|p_i^l\|)} \in [0,1],$$

where $Z$ is the to-be-processed data, $A_i^1$ is network parameters of an $i^{th}$ category of the $l^{th}$ layer, $p_i^l$ is projections of the predicted category labels in the to-be-processed data on the $i^{th}$ category of the $l^{th}$ layer, $\Pi_i^l$ is the category distribution information that corresponds to the predicted category labels and that is of the to-be-processed data, and $\eta$ is a

hyperparameter for controlling estimation confidence.

In another possible implementation, the objective function gradient expression includes:

$$\frac{\partial L}{\partial Z} = \sum_{k=1}^{K} \frac{\alpha_i}{m_i} \left(\widehat{S}^{-1} - \widehat{S}_i^{-1}\right) Z \Pi_i^l + \frac{\alpha_i}{m} \left(-\widehat{S}^{-1} \widehat{S}_i \widehat{S}^{-1} + \widehat{S}^{-1}\right) Z,$$

where $m_i$ is a quantity of pieces of data whose predicted category label is an $i^{th}$ category in m pieces of to-be-processed data, $\alpha_i = \frac{m_i}{m}$, $\alpha_i$ is a weight parameter used to balance quantities of samples of predicted categories in the to-be-processed data, **Z** is the to-be-processed data, $\Pi_i^l$ is the category distribution information that corresponds to the predicted category labels and that is of the to-be-processed data, **S**$_i$ is an autocorrelation matrix of the data whose predicted category label corresponds to the $i^{th}$ category in the to-be-processed data, **Ŝ**$_i$ is a regularized autocorrelation matrix of the data whose predicted category label corresponds to the $i^{th}$ category in the to-be-processed data, **S** is autocorrelation matrixes of data whose predicted category labels correspond to all the categories in the to-be-processed data, and **Ŝ** is regularized autocorrelation matrixes of the data whose predicted category labels correspond to all the categories in the to-be-processed data.

In another possible implementation, the category distribution information that corresponds to the predicted category labels and that is of the to-be-processed data includes one or more of the following: distance information, correlation information, differential information, or soft classification information.

In another possible implementation, $\Pi_i^l = \operatorname{argmin} \operatorname{dist}(\boldsymbol{Z}, \boldsymbol{C}_i^l)$; or

$$\Pi_i^l = arg\min <\boldsymbol{Z}, \boldsymbol{C}_i^l>;$$

or

$$\Pi_i^l = \operatorname{argmin} \operatorname{dist}\left(\boldsymbol{Z}^l, \boldsymbol{C}_i^l\right) - \operatorname{dist}\left(\boldsymbol{Z}^{l-1}, \boldsymbol{C}_i^{l-1}\right);$$

or

$$\Pi_i^l = \frac{\exp\left(\eta \, dist\left(\boldsymbol{Z}, \boldsymbol{C}_i^l\right)\right)}{\sum_i \exp\left(\eta \, dist\left(\boldsymbol{Z}, \boldsymbol{C}_i^l\right)\right)},$$

where **Z** is the to-be-processed data, $\Pi_i^l$ is the category distribution information that corresponds to the predicted category labels and that is of the to-be-processed data, $\boldsymbol{C}_i^l$ is network parameters of an $i^{th}$ category of the $l^{th}$ layer, **Z**$^l$ is a data feature of the to-be-processed data at the $l^{th}$ layer, **Z**$^{l-1}$ is a data feature of the to-be-processed data at the $(l-1)^{th}$ layer, and < > represents an inner product.

In another possible implementation, the second determining unit is specifically configured to determine gradient parameters (**G** and **H**$_i$) based on the category distribution information $\Pi_i^l$ that corresponds to the predicted category labels and that is of the to-be-processed data; and determine the objective function gradient expression based on the to-be-processed data and the gradient parameters.

In another possible implementation,

$$g_i = \frac{1}{Tr(\Pi_i^l)} \Pi_i^l e;$$

$$\boldsymbol{G} = [g_1, g_2, \dots, g_i];$$

and

$$H_i = \frac{1}{m_i}(I - g_i e^T)\Pi_i^l(I - g_i e^T)^T,$$

where $\Pi_i^l$ is the category distribution information that corresponds to the predicted category labels and that is of the to-be-processed data, $Tr()$ represents a trace operation, $I$ is an identity matrix, $m_i$ is a quantity of pieces of data of an $i^{th}$ category in m pieces of to-be-processed data, $m = \sum_i^K m_i$, K is a quantity of all categories of predicted category labels in the m pieces of to-be-processed data, and $G$ and $H_i$ represent the gradient parameters.

In another possible implementation, the objective function gradient expression includes:

$$\frac{\partial L}{\partial Z} = -ZG(G^T Z^T ZG)^{-1}G^T + \beta \sum_{k=1}^{K}\left(\frac{1}{\epsilon+\sigma^2}ZH_i - (\epsilon I + ZH_i Z^T)^{-1}ZH_i\right),$$

where Z is the to-be-processed data, $\sigma$ is a Gaussian distribution variance, $\varepsilon$ is a regularization parameter, $I$ is an identity matrix, $G$ and $H_i$ represent the gradient parameters, and $\beta$ represents a regularization parameter.

In another possible implementation,

$$Z^l = Z^{l-1} + \lambda\frac{\partial L}{\partial Z}, \ \ Z^l \in \mathbb{S}^{d-1},$$

where $Z^l$ is the data feature of the to-be-processed data, $\frac{\partial L}{\partial Z}$ is the objective function gradient expression, $Z^{l-1}$ is the to-be-processed data, and $Z^{l-1}$ is constrained in (d-1)-dimensional unit sphere space.

In another possible implementation, the data processing apparatus further includes an output unit. The output unit is configured to output the data feature of the to-be-processed data.

In another possible implementation, the to-be-processed data of the unknown classification or clustering information is a data feature of third data, the data feature of the third data is determined through another feed forward neural network, input information of an l$^{th}$ layer in the another feedforward neural network includes category distribution information of training data and a first data feature, output information of the l$^{th}$ layer includes a second data feature, the first data feature is an output of an (l-1)$^{th}$ layer, both the first data feature and the second data feature are classification or clustering information representing the training data, and 1 is a positive integer greater than 1.

For technical effects brought by the second aspect or the possible implementations, refer to the descriptions of the technical effects brought by the first aspect or the corresponding implementations.

A third aspect of embodiments of this application discloses a data processing apparatus, including at least one processor and a communication interface, where the at least one processor invokes a computer program or instructions stored in a memory, to implement the method according to any one of the foregoing aspects.

A fourth aspect of embodiments of this application discloses a chip system, including at least one processor and a communication interface, where the at least one processor is configured to execute a computer program or instructions, to implement the method according to any one of the foregoing aspects.

A fifth aspect of embodiments of this application discloses a computer-readable storage medium, where the computer-readable storage medium stores computer instructions, and when the computer instructions are run on a processor, the method according to any one of the foregoing aspects is implemented.

A sixth aspect of embodiments of this application discloses a computer program product, where the computer program product includes computer program code, and when the computer program code is run on a computer, the method according to any one of the foregoing aspects is implemented.

A seventh aspect of embodiments of this application discloses a data processing system, including the apparatus according to the second aspect.

**BRIEF DESCRIPTION OF DRAWINGS**

The following describes accompanying drawings used in embodiments of this application.

FIG. 1 is a diagram of an architecture of an end-to-end communication network according to an embodiment of this application;
FIG. 2 is a diagram of a structure of an artificial intelligence main framework according to an embodiment of this application;
FIG. 3 is a diagram of a system architecture according to an embodiment of this application;

FIG. 4 is a diagram of a structure of a feedforward neural network according to an embodiment of this application;

FIG. 4A is a diagram of a computation process of a 1st layer in a feedforward neural network in a training process according to an embodiment of this application;

FIG. 4B is a diagram of a computation process of a 2nd layer in a feedforward neural network in a training process according to an embodiment of this application;

FIG. 4C is a diagram of a computation process of a 3rd layer in a feedforward neural network in a training process according to an embodiment of this application;

FIG. 4D is a diagram of a computation process of a 1st layer in a feedforward neural network in a deduction process according to an embodiment of this application;

FIG. 4E is a diagram of a computation process of a 2nd layer in a feedforward neural network in a deduction process according to an embodiment of this application;

FIG. 4F is a diagram of a computation process of a 3rd layer in a feedforward neural network in a deduction process according to an embodiment of this application;

FIG. 5 is a diagram of a hardware structure of a chip according to an embodiment of this application;

FIG. 6 is a schematic flowchart of a data processing method according to an embodiment of this application;

FIG. 7A and FIG. 7B are a diagram of a computation process of an $I^{th}$ layer in a feedforward neural network model in a training process according to an embodiment of this application;

FIG. 8A and FIG. 8B are a diagram of a computation process of an $I^{th}$ layer in a feedforward neural network model in a training process according to an embodiment of this application;

FIG. 9A and FIG. 9B is a diagram of a computation process of an $I^{th}$ layer in a feedforward neural network model in a training process according to an embodiment of this application;

FIG. 10 is a schematic flowchart of a data processing method according to an embodiment of this application;

FIG. 11 is a diagram of a computation process of an $I^{th}$ layer in a feedforward neural network model in a deduction process according to an embodiment of this application;

FIG. 12 is a diagram of a computation process of an $I^{th}$ layer in a feedforward neural network model in a deduction process according to an embodiment of this application;

FIG. 13 is a diagram of a computation process of an $I^{th}$ layer in a feedforward neural network model in a deduction process according to an embodiment of this application;

FIG. 14 is a diagram of a multi-view scenario according to an embodiment of this application;

FIG. 15 is a diagram of a multi-node scenario according to an embodiment of this application;

FIG. 16A is a diagram of obtaining a result through training by using Formula (1) as an objective function according to an embodiment of this application;

FIG. 16B is a diagram of obtaining a result through training by using an MSE as an objective function according to an embodiment of this application;

FIG. 17 is a diagram of a data processing apparatus according to an embodiment of this application; and

FIG. 18 is a diagram of a data processing apparatus according to an embodiment of this application.

## DESCRIPTION OF EMBODIMENTS

The following describes embodiments of this application with reference to the accompanying drawings in embodiments of this application.

In the specification and accompanying drawings of this application, the terms "first", "second", and the like are intended to distinguish between different objects or distinguish between different processing of a same object, but are not used to describe a particular order of the objects. In addition, the terms "including" and "having" and any variations thereof in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes other inherent steps or units of the process, the method, the product, or the device. It should be noted that in embodiments of this application, the word "an example", "for example", or the like is used to represent giving an example, an illustration, or a description. Any embodiment or design scheme described as "example" or "for example" in embodiments of this application should not be explained as being more preferred or having more advantages than another embodiment or design scheme. Specifically, the words such as "example" or "for example" are used to present related concepts in a specific manner. In embodiments of this application, "A and/or B" represents two meanings: A and B, and A or B. "A, and/or B, and/or C" represents any one of A, B, and C, or represents any two of A, B, and C, or represents A, B, and C. The following describes technical solutions of this application with reference to accompanying drawings.

In recent years, the development of deep learning has led to research on a deep learning-based wireless communication technology in the academia and industry. A research result proves that a deep learning technology can improve performance of a wireless communication system, and has potential to be applied to a physical layer to perform interference adjustment, channel estimation, signal detection, signal processing, and other aspects.

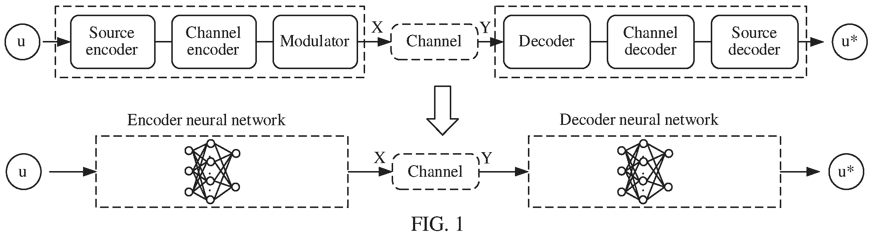

A conventional communication transceiver design may be replaced by an autoencoder, a transmit end and a receive end are modeled using a neural network, data distribution is learned by using a large quantity of training samples, and a result is predicted. FIG. 1 shows an end-to-end communication network architecture. Such an end-to-end learning manner can implement joint optimization. For example, a neural network may be trained according to a back propagation (back propagation, BP) algorithm. A learning process of the BP algorithm includes a forward propagation process and a back propagation process. In the forward propagation process, input information is processed by an input layer and a hidden layer in sequence and then is sent to an output layer. If an expected output value is not obtained from the output layer, a quadratic sum of an error between an output and an expected output is used as an objective function. In this case, the forward propagation is transferred to back propagation, partial derivatives of the objective function with respect to weights of neurons are calculated layer by layer, to form a gradient of the objective function with respect to a weight vector, which is used as a basis for modifying the weight. Learning of the neural network is completed in a weight modification process. When the error reaches the expected value, the learning of the neural network ends. In the BP algorithm, an excitation function of an artificial neuron (or "node") needs to be differentiable. However, in the BP algorithm, there is no corresponding theoretical guidance for selecting a quantity of network layers and a quantity of neurons, and when a network structure is modified, retraining needs to be performed. There is no reliable mathematical interpretability for a network output result. The implementation of the neural network is considered as a "black box", which cannot be widely recognized in theory. In addition, gradient disappearance or gradient explosion caused by execution of the BP algorithm has not been effectively resolved. In addition, when the BP algorithm is applied to a communication scenario, a channel is usually used as a hidden layer in a network, and the channel needs to be differentiable. In an actual scenario, a channel may not meet this condition.

To resolve the problem existing in the BP algorithm, embodiments of this application further provide a random feature-based neural network and a metric representation-based neural network. The random feature-based neural network may be an extreme learning machine (extreme learning machine, ELM), and the ELM is a typical learning algorithm of a feedforward neural network. The network usually has one or more hidden-layer nodes, where a parameter of the hidden-layer node does not need to be adjusted. Weights of a hidden layer to an output layer need to be determined only by solving one system of linear equations. Therefore, a calculation speed can be improved. Generalization performance of the algorithm is good, and a learning speed of the algorithm is 1000 times faster than that of training using the BP algorithm. However, a wide hidden layer is usually needed to obtain a sufficient quantity of features for representing original data. The metric representation-based neural network may be a neural network training method based on the Hilbert-Schmidt independence criterion (the Hilbert-Schmidt independence criterion, HSIC). The method is trained by using a method approximating to information bottleneck, mutual information between a hidden layer and a label needs to be maximized, and an interdependency between a representation of the hidden layer and an input needs to be minimized. Calculation of the mutual information is difficult in a random variable. Therefore, the HSIC criterion based on a non-parameter kernel method is used, which is more complex than the BP algorithm.

Therefore, to resolve the foregoing problem, embodiments of this application provide a data processing method, and provide a feedforward neural network model, to reduce communication overheads between a transmit end and a receive end caused by BP algorithm training and interaction, and improve training efficiency. In addition, in a scenario of dealing with different transmission/receiving network structures, a quantity of network layers is adjusted to improve training accuracy, to avoid a problem that retraining is needed due to different adaptions to different transmission/receiving networks.

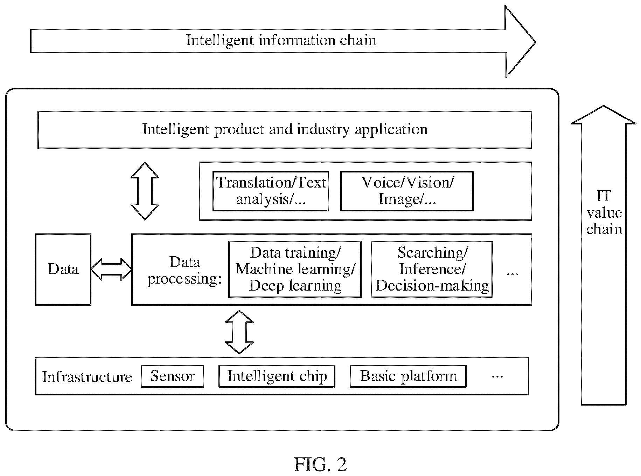

First, an overall working process of an artificial intelligence system is described. FIG. 2 is a diagram of a structure of a main artificial intelligence framework. The following describes the main artificial intelligence framework from two dimensions: "intelligent information chain" (a horizontal axis) and "IT value chain" (a vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support by using a basic platform. A sensor is used to communicate with the outside. A computing capability is provided by an intelligent chip (a hardware acceleration chip like a CPU, an NPU, a GPU, an ASIC, or an FPGA). The basic platform includes related platforms such as a distributed computing framework and a network for assurance and support, and may include cloud storage and computing, an interconnection network, and the like. For example, the sensor communicates with the outside to obtain data, and the data is provided to the intelligent chip in a distributed computing system provided by the basic platform for computing.

(2) Data

Data at an upper layer of the infrastructure indicates a data source in the artificial intelligence field. The data relates to a graph, an image, a voice, and a text, further relates to Internet of things data of a conventional device, and includes service data of an existing system and perception data such as force, displacement, a liquid level, a temperature, and humidity.

(3) Data processing

Data processing usually includes data training, machine learning, deep learning, searching, inference, decision-making, and the like.
Machine learning and deep learning may perform symbolic and formalized intelligent information modeling, extraction, preprocessing, training, and the like on data.
Inference is a process in which human intelligent inference is simulated in a computer or an intelligent system, and machine thinking and problem resolving are performed by using formal information according to an inference control policy. Typical functions are searching and matching.
Decision-making is a process of making a decision after intelligent information is inferred, and usually provides functions such as classification, ranking, and prediction.

(4) General capability

After data processing mentioned above is performed on the data, some general capabilities may be further formed based on a data processing result. For example, the general capabilities may be an algorithm or a general system, for example, translation, text analysis, computer vision processing, speech recognition, and image recognition.

(5) Intelligent product and industry application

The intelligent product and industry application are products and applications of the artificial intelligence system in various fields. The intelligent product and industry application involve packaging overall artificial intelligence solutions, to productize and apply intelligent information decision-making. Application fields of the intelligent information decision-making mainly include: an intelligent terminal, intelligent transportation, intelligent healthcare, autonomous driving, a safe city, and the like.
Embodiments of this application are mainly applied to fields such as driver assistance, autonomous driving, and a mobile phone terminal.
The following describes several application scenarios:
Application scenario 1: Advanced driver assistance system (advanced driver assistance system, ADAS)/autonomous driving solution (autonomous driving solution, ADS)
In the ADAS and the ADS, a plurality of types of 2D targets need to be detected in real time, and include a dynamic obstacle (a pedestrian (Pedestrian), a cyclist (Cyclist), a tricycle (Tricycle), a car (Car), a truck (Truck), or a bus (Bus)), a static obstacle (a traffic cone (TrafficCone), a traffic stick (TrafficStick), a fire hydrant (FireHydrant), a motorcycle (Motorcycle), or a bicycle (Bicycle)), or a traffic sign (TrafficSign) (a guide sign (GuideSign), a billboard (Billboard), a red traffic light (TrafficLight_Red)/yellow traffic light (TrafficLight_Yellow)/green traffic light (TrafficLight_Green)/black traffic light (TrafficLight_Black), or a road sign (RoadSign)). In addition, to accurately obtain an area occupied by the dynamic obstacle in 3D space, 3D estimation further needs to be performed on the dynamic obstacle, to output a 3D box. To integrate with data of laser radar, a mask of the dynamic obstacle needs to be obtained to filter out laser point clouds that hit the dynamic obstacle. To accurately locate parking space, four keypoints of the parking space need to be detected at the same time. To locate a composition, key points of static objects need to be detected. This is a semantic segmentation issue. A camera of an autonomous driving vehicle captures a road picture, and the picture needs to be segmented into different objects such as a road surface, a roadbed, a vehicle, and a pedestrian, to keep the vehicle driving in a correct area. A picture needs to be understood in real time for autonomous driving having an extremely high requirement on security. A feedforward neural network that can run in real time and can perform semantic segmentation is critical.

Application scenario 2: Image classification scenario

After obtaining a to-be-classified image, an object recognition apparatus processes an object in the to-be-classified image through a classification model obtained through training based on the data processing method in embodiments of this application, to obtain a category of the to-be-classified image, and then may classify the to-be-classified image based on the object category of the object in the to-be-classified image. A photographer takes many photos every day, such as photos of animals, photos of people, and photos of plants. According to the method in this application, the photos can be quickly classified based on content in the photos, and may be classified into photos including animals, photos including people, and photos including plants.

When there are a large quantity of images, efficiency of a manual classification manner is low, and a person is prone to fatigue when processing a same thing for a long time. In this case, a classification result has a large error.

Application scenario 3: Commodity classification

After obtaining an image of a commodity, the object recognition apparatus processes the image of the commodity by using the classification model obtained through training based on the data processing method in embodiments of this application, to obtain a category of the commodity in the image of the commodity, and then classifies the commodity based on the category of the commodity. For a variety of commodities in a large shopping mall or a supermarket, the commodities can be quickly classified by using the method in this application, to reduce time overheads and labor costs.

Application scenario 4: Face verification at an entrance gate

This is an image similarity comparison issue. When a passenger performs face authentication at a high-speed railway or airport entrance gate, a camera captures a face image. The method in embodiments of this application is used to extract a feature, and calculate a similarity between the extracted feature and an image feature of an identification card stored in a system. If the similarity is high, the authentication succeeds. Face verification can be quickly performed by using the method in this application.

Application scenario 5: Simultaneous interpretation by a translation machine

This is a speech recognition and machine translation issue. In terms of the speech recognition and machine translation issue, a feedforward neural network is also a common recognition model. In a scenario in which simultaneous interpretation is needed, real-time speech recognition and interpretation need to be implemented. An efficient feedforward neural network can provide better experience for a translation machine.

A feedforward neural network model trained in embodiments of this application may implement the foregoing functions.

The following describes a system architecture provided in embodiments of this application.

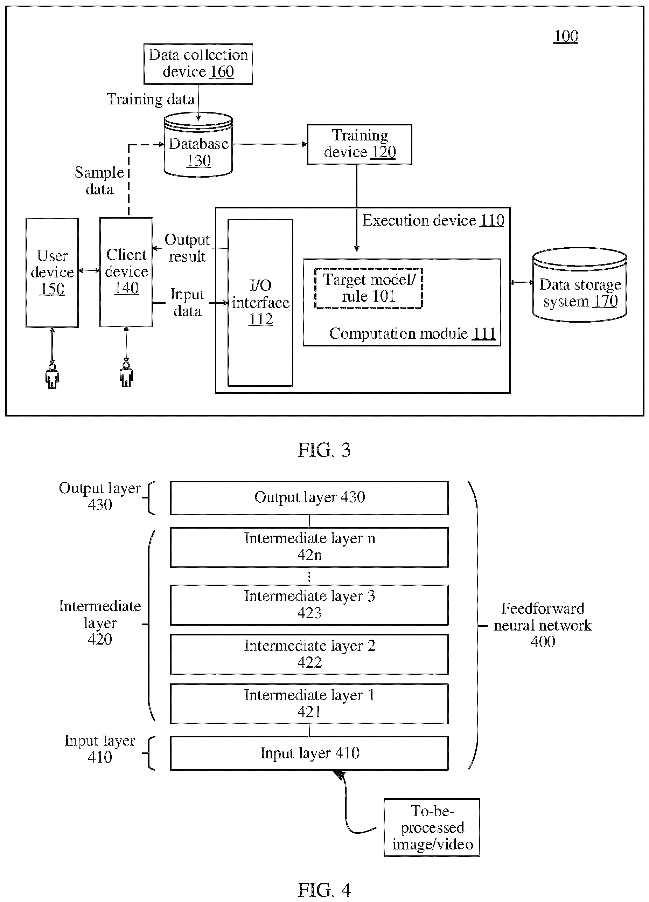

FIG. 3 is a diagram of a system architecture 100 according to an embodiment of this application. As shown in the system architecture 100, a data collection device 160 is configured to collect or generate training data. The training data in embodiments of this application includes: a plurality of images having labels, a plurality of voice clips having labels, or the like. The training data is stored in a database 130. A training device 120 obtains a feedforward neural network model through training based on the training data maintained in the database 130. Input information of an $l^{th}$ layer in the feedforward neural network model includes category distribution information of the training data and a first data feature, output information of the $l^{th}$ layer includes a second data feature, the first data feature is an output of an $(l-1)^{th}$ layer, both the first data feature and the second data feature are classification or clustering information representing the training data, and 1 is a positive integer greater than 1.

Specifically, the trained feedforward neural network model can be used to implement the data processing method provided in embodiments of this application.

It should be noted that, in actual application, the training data maintained in the database 130 is not necessarily all collected by the data collection device 160, and may be partially received from another device. In addition, it should be noted that the training device 120 does not necessarily train the feedforward neural network model completely based on the training data maintained in the database 130, and may perform model training by using training data obtained from a cloud or another place. The foregoing descriptions should not be construed as a limitation on embodiments of this application.

A target model/rule 101 obtained through training by the training device 120 may be applied to different systems or devices, for example, applied to an execution device 110 shown in FIG. 3. The execution device 110 may be a terminal, for example, a mobile phone terminal, a tablet computer, a notebook computer, augmented reality (augmented reality, AR)/virtual reality (virtual reality, VR), or a vehicle-mounted terminal, or may be a server, a cloud, or the like. In FIG. 3, the execution device 110 is configured with an input/output (input/output, I/O) interface 112 for data exchange with an external device. A user may input data to the I/O interface 112 through a client device 140. The input data in embodiments of this application may include: a to-be-recognized image, a to-be-recognized video, or a to-be-recognized voice clip.

In a process in which the execution device 110 preprocesses the input data, or in a process in which a computation module 111 of the execution device 110 performs related processing like computation (for example, performs function implementation of the feedforward neural network in this application), the execution device 110 may invoke data, code, and the like in a data storage system 170 for corresponding processing, and may further store, in the data storage system 170, data, instructions, and the like that are obtained through the corresponding processing.

Finally, the I/O interface 112 returns a processing result such as an image, video, or voice recognition result or classification result to the client device 140, so that the client device 140 can provide the result to a user device 150. The user device 150 may be a lightweight terminal that needs to use the target model/rule 101, for example, a mobile phone terminal, a notebook computer, an AR/VR terminal, or a vehicle-mounted terminal, to respond to a corresponding requirement of a terminal user, for example, perform image recognition on an image input by the terminal user and output a recognition result to the terminal user, or classify a text input by the terminal user and output a classification result to the terminal user.

It should be noted that the training device 120 may generate corresponding target models/rules 101 for different targets or different tasks based on different training data. The corresponding target models/rules 101 may be used to achieve the foregoing targets or complete the foregoing tasks, to provide a needed result for the user.

In a case shown in FIG. 3, the user may manually provide input data and the user may manually provide the input data in a user interface provided by the I/O interface 112. In another case, the client device 140 may automatically send the input data to the I/O interface 112. If the client device 140 needs to obtain authorization from the user to automatically send the input data, the user may set corresponding permission in the client device 140. The user may view, on the client device 140, a result output by the execution device 110. The result may be specifically presented in a specific manner of displaying, a sound, an action, or the like. The client device 140 may alternatively be used as a data collection end, to collect, as new sample data, input data input to the I/O interface 112 and an output result output from the I/O interface 112 that are shown in the figure, and store the new sample data in the database 130. Certainly, the client device 140 may alternatively not perform collection. Instead, the I/O interface 112 directly stores, in the database 130 as new sample data, the input data input to the I/O interface 112 and the output result output from the I/O interface 112 that are shown in the figure.

After receiving the output result, the client device 140 may transmit the result to the user device 150. The user device 150 may be a terminal, for example, a mobile phone terminal, a tablet computer, a notebook computer, AR/VR, or a vehicle-mounted terminal. In an example, the user device 150 may run the target model/rule 101 to implement a specific function.

It should be noted that FIG. 3 is merely a diagram of a system architecture according to an embodiment of this application. A position relationship between the devices, the components, the modules, and the like shown in the figure does not constitute any limitation. For example, in FIG. 3, the data storage system 170 is an external memory relative to the execution device 110, but in another case, the data storage system 170 may alternatively be disposed in the execution device 110.

As shown in FIG. 3, the target model/rule 101 is obtained through training by the training device 120. The target model/rule 101 may be a classification model in the application scenario 2 and the application scenario 3, an image recognition model in the application scenario 4, or a speech recognition model in the application scenario 5. Specifically, the target model/rule 101 provided in this embodiment of this application is, for example, the image recognition model or the speech recognition model. In actual application, the image recognition model and the speech recognition model each may be a feedforward neural network model.

The following describes a diagram of a structure of a feed forward neural network according to an embodiment of this application.

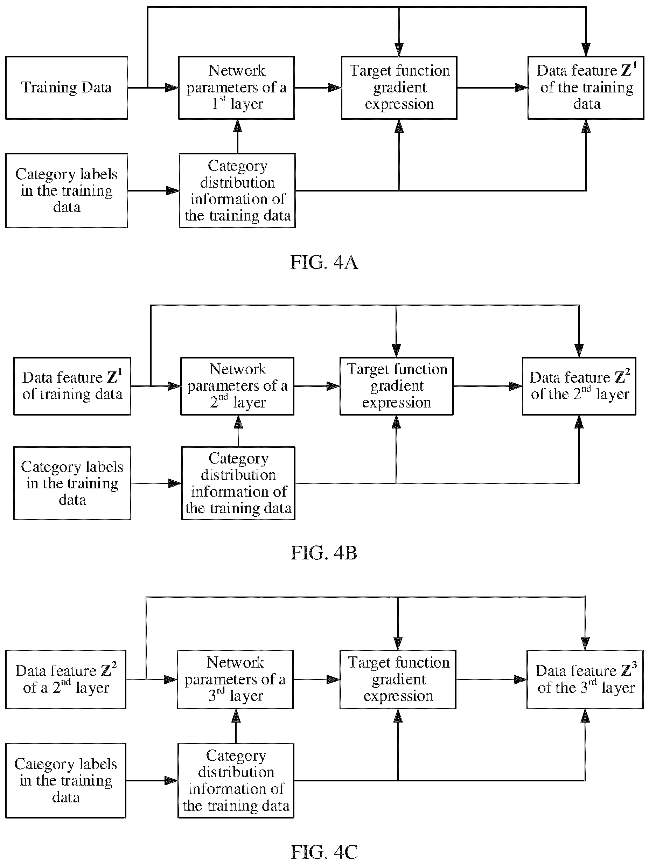

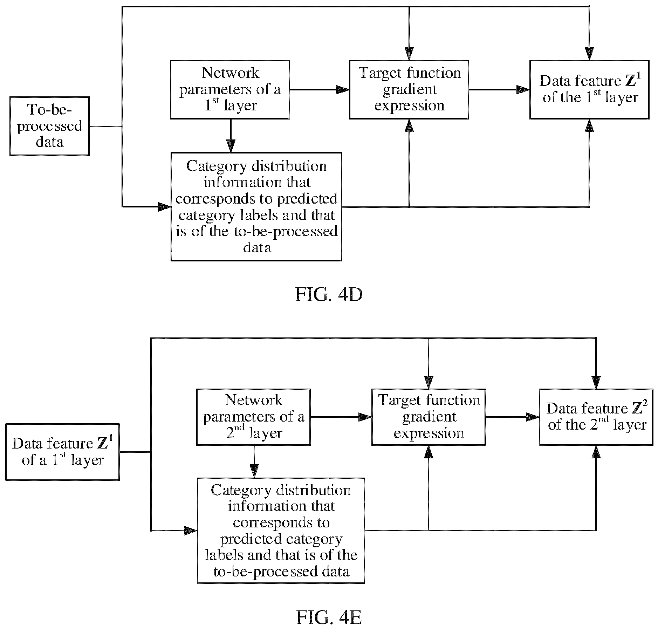

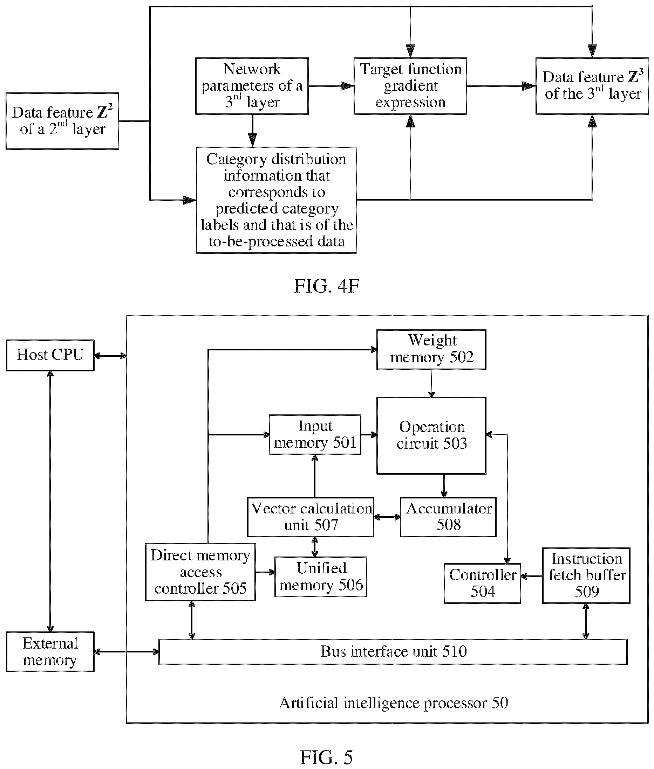

FIG. 4 is a diagram of a structure of a feedforward neural network 400 according to an embodiment of this application. The feedforward neural network 400 may be referred to as an interpretable feedforward neural network. The feedforward neural network 400 may include an input layer 410, an intermediate layer 420, and an output layer 430. The input layer 410 may obtain to-be-processed data, and send the obtained to-be-processed data to the intermediate layer 420 for processing, to obtain a data feature of the to-be-processed data. The data feature of the to-be-processed data is used to determine a processing result of the to-be-processed data. For example, the data feature of the to-be-processed data is used to determine a classification or clustering result of the to-be-processed data. A specific quantity of layers included in the intermediate layer 420 is not limited herein. When the intermediate layer includes a larger quantity of layers, the classification or clustering result of the to-be-processed data is more accurate. The output layer 430 may be configured to output the data feature of the to-be-processed data obtained from the intermediate layer 420.

As shown in FIG. 4, the intermediate layer 420 may include example layers 421 to 423. The layers 421 to 423 may be referred to as a 1st layer, a 2nd layer, and a 3rd layer. The following specifically describes working principles of the 1st layer, the 2nd layer, and the 3rd layer from the following two aspects: a training process and a deduction process. The details are as follows.

The specific training process is as follows:

A specific computation process of the 1st layer is shown in FIG. 4A. Input information of the 1st layer includes category distribution information of training data and the training data. The training data includes category labels, and the category distribution information of the training data is determined based on the category labels in the training data. Then, network parameters $U_i^1$ of the 1st layer are determined based on the category distribution information $\Pi_i$ of the training data and the training data. Then, an objective function gradient expression is determined based on the network parameters $U_i^1$ of the 1st layer and the training data, and output information of the 1st layer is determined based on the training data, the category distribution information $\Pi_i$ of the training data, and the objective function gradient expression. The output information of the 1st layer includes a data feature $Z^1$ of the training data.

A specific computation process of the 2nd layer is shown in FIG. 4B. Input information of the 2nd layer includes the category distribution information of the training data and the output information of the 1st layer, that is, the data feature $Z^1$ of the training data. Then, network parameters $U_i^2$ of the 2nd layer are determined based on the category distribution information $\Pi_i$ of the training data and the data feature $Z^1$ of the training data. Then, an objective function gradient expression is determined based on the network parameters $U_i^2$ of the 2nd layer and the data feature $Z^1$ of the training data, and output information of the 2nd layer is determined based on the data feature $Z^1$ of the training data, the category distribution information $\Pi_i$ of the training data, and the objective function gradient expression. The output information of the 2nd layer includes a data feature $Z^2$ of the 2nd layer.

A specific computation process of the 3rd layer is shown in FIG. 4C. Input information of the 3rd layer includes the category distribution information of the training data and the output information of the 2nd layer, that is, the data feature $Z^2$ of the 2nd layer. Then, network parameters $U_i^3$ of the 3rd layer are determined based on the category distribution information $\Pi_i$ of the training data and the data feature $Z^2$ of the 2nd layer. Then, an objective function gradient expression is determined based on the network parameters $U_i^3$ of the 3rd layer and the data feature $Z^2$ of the 2nd layer, and output information of the 3rd layer is determined based on the data feature $Z^2$ of the 2nd layer, the category distribution information $\Pi_i$ of the training data, and the objective function gradient expression. The output information of the 3rd layer includes a data feature $Z^3$ of the 3rd layer.

Then, the network parameters of each layer, for example, $U_i^1$, $U_i^2$, and $U_i^3$, are stored as a d × d fully connected layer parameter, to obtain a trained feedforward neural network model.

The specific deduction process is as follows:

A specific process of obtaining to-be-processed data of unknown classification or clustering information; and inputting the to-be-processed data into the trained feedforward neural network model to obtain a data feature of the to-be-processed data is as follows.

A specific computation process of the 1st layer is shown in FIG. 4D. Input information of the 1st layer includes to-be-processed data. Category distribution information $\Pi_i^1$ that corresponds to predicted category labels and that is of the to-be-processed data is determined based on the to-be-processed data and the network parameters $U_i^1$ of the 1st layer. Then, an objective function gradient expression is determined based on the to-be-processed data and the category distribution information $\Pi_i^1$ that corresponds to the predicted category labels and that is of the to-be-processed data, and output information of the 1st layer is determined based on the to-be-processed data and the objective function gradient expression. The output information of the 1st layer includes a data feature $Z^1$ of the 1st layer.

A specific computation process of the 2nd layer is shown in FIG. 4E. Input information of the 2nd layer includes the output information of the 1st layer, that is, the data feature $Z^1$ of the 1st layer. Category distribution information $\Pi_i^2$ that corresponds to predicted category labels and that is of the to-be-processed data is determined based on the data feature $Z^1$ of the 1st layer and the network parameters $U_i^2$ of the 2nd layer. Then, an objective function gradient expression is determined based on the data feature $Z^1$ of the 1st layer and the category distribution information $\Pi_i^2$ that corresponds to the predicted category labels and that is of the to-be-processed data, and output information of the 2nd layer is determined based on the data feature $Z^1$ of the 1st layer and the objective function gradient expression. The output information of the 2nd layer includes a data feature $Z^2$ of the 2nd layer.

A specific computation process of the 3rd layer is shown in FIG. 4F. Input information of the 3rd layer includes the

output information of the 2nd layer, that is, the data feature $Z^2$ of the 2nd layer. Category distribution information $\Pi_i^3$ that corresponds to predicted category labels and that is of the to-be-processed data is determined based on the data feature $Z^2$ of the 2nd layer and the network parameters $U_i^3$ of the 3rd layer. Then, an objective function gradient expression is determined based on the data feature $Z^2$ of the 2nd layer and the category distribution information $\Pi_i^3$ that corresponds to the predicted category labels and that is of the to-be-processed data, and output information of the 3rd layer is determined based on the data feature $Z^2$ of the 2nd layer and the objective function gradient expression. The output information of the 3rd layer includes a data feature $Z^3$ of the 3rd layer. The data feature of the 3rd layer may be referred to as a data feature of the to-be-processed data.

The following describes a hardware structure of a chip provided in embodiments of this application.

FIG. 5 shows a hardware structure of a chip according to an embodiment of this application. The chip includes an artificial intelligence processor 50. The chip may be disposed in the execution device 110 shown in FIG. 3, to complete computation of the computation module 111. Alternatively, the chip may be disposed in the training device 120 shown in FIG. 3, to complete training of the training device 120 and output the target model/rule 101. Algorithms of all the layers in the feedforward neural network shown in FIG. 4 may be implemented in the chip shown in FIG. 5.

The artificial intelligence processor 50 may be any processor suitable for large-scale exclusive OR operation processing, for example, a neural network processing unit (network processing unit, NPU), a tensor processing unit (tensor processing unit, TPU), or a graphics processing unit (graphics processing unit, GPU). The NPU is used as an example. The NPU may be mounted, as a coprocessor, onto a host CPU (Host CPU), and the host CPU allocates a task to the NPU. A core part of the NPU is an operation circuit 503, and a controller 504 controls the operation circuit 503 to extract data in a memory (a weight memory or an input memory) and perform an operation.

In some implementations, the operation circuit 503 includes a plurality of processing units (processing engines, PEs). In some implementations, the operation circuit 503 is a two-dimensional systolic array. The operation circuit 503 may alternatively be a one-dimensional systolic array or another electronic circuit capable of performing mathematical operations such as multiplication and addition. In some implementations, the operation circuit 503 is a general purpose matrix processor.

For example, it is assumed that there is an input matrix A, a weight matrix B, and an output matrix C. The operation circuit 503 obtains data corresponding to the matrix B from the weight memory 502, and buffers the data on each PE in the operation circuit 503. The operation circuit 503 obtains input data of the matrix A from the input memory 501, performs a matrix operation on the input data of the matrix A and the weight data of the matrix B, and stores an obtained partial result or final result of the matrices in an accumulator (accumulator) 508.

A unified memory 506 is configured to store input data and output data. The weight data is transferred to the weight memory 502 through a direct memory access controller (direct memory access controller, DMAC) 505. The input data is also transferred to the unified memory 506 through the DMAC.

A bus interface unit (bus interface unit, BIU) 510 is configured to implement interaction between the DMCA and an instruction fetch buffer (instruction fetch buffer) 509. The bus interface unit 510 is further used by the instruction fetch buffer 509 to obtain instructions from an external memory. The bus interface unit 510 is further used by the direct memory access controller 505 to obtain original data of the input matrix A or original data of the weight matrix B from the external memory.

The DMAC is mainly configured to transfer input data in the external memory DDR to the unified memory 506, or transfer weight data to the weight memory 502, or transfer input data to the input memory 501.

A vector calculation unit 507 may include a plurality of operation processing units. If needed, further processing is performed on an output of the operation circuit 503, for example, vector multiplication, vector addition, an exponential operation, a logarithmic operation, or size comparison. The vector calculation unit 507 is mainly configured to perform intermediate-layer calculation in the feedforward neural network.

In some implementations, the vector calculation unit 507 stores a processed output vector in the unified buffer 506. For example, the vector calculation unit 507 may apply a nonlinear function to the output of the operation circuit 503, for example, a vector of an accumulated value, to generate an activation value. In some implementations, the vector calculation unit 507 generates a normalized value, a combined value, or both a normalized value and a combined value. In some implementations, the processed output vector can be used as an activation input to the operation circuit 503, for example, used at a subsequent layer in the feedforward neural network.

The instruction fetch buffer (instruction fetch buffer) 509 connected to the controller 504 is configured to store instructions used by the controller 504.

The controller 504 is configured to invoke the instructions buffered in the instruction fetch buffer 509, to control a working process of the operation accelerator.

Generally, the unified memory 506, the input memory 501, the weight memory 502, and the instruction fetch buffer 509 are all on-chip (On-Chip) memories. The external memory is a memory outside the NPU, and the external memory may be a double data rate synchronous dynamic random access memory (double data rate synchronous dynamic random access memory, DDR SDRAM), a high bandwidth memory (high bandwidth memory, HBM) or another readable and writable memory.

The execution device 110 in FIG. 3 described above can perform the data processing method or steps of the data processing method in embodiments of this application. The feedforward neural network model in FIG. 4 and the chip shown in FIG. 5 may also perform the data processing method or the steps of the data processing method in embodiments of this application.

Embodiments of this application provide a system architecture. The system architecture includes one or more local devices, an execution device, and a data storage system. The local device is connected to the execution device through a communication network.

The execution device may be implemented by one or more servers. Optionally, the execution device may cooperate with another computation device, for example, a device such as a data memory, a router, or a load balancer. The execution device may be deployed on one physical site, or distributed on a plurality of physical sites. The execution device may implement the neural network quantitative method in embodiments of this application by using data in the data storage system or by invoking program code in the data storage system.

A user may operate a respective user device (for example, one or more local devices) to interact with the execution device. Each local device may represent any computation device, for example, a personal computer, a computer workstation, a smartphone, a tablet computer, an intelligent camera, a smart automobile, another type of cellular phone, a media consumption device, a wearable device, a set-top box, or a game console.

The local device of each user may interact with the execution device through a communication network of any communication mechanism/communication standard. The communication network may be a wide area network, a local area network, a point-to-point connection, or any combination thereof.

In an implementation, the local device obtains a related parameter of a target neural network from the execution device, deploys the target neural network on the local device and the local device, and performs image classification, image processing, or the like through the target neural network. The target neural network is obtained through training according to the data processing method in embodiments f this application.

In another implementation, the target neural network may be directly deployed on the execution device. The execution device obtains to-be-processed data from the local device and the local device, and performs classification or another type of processing on the to-be-processed data based on the target neural network.

The execution device may also be referred to as a cloud device. In this case, the execution device is usually deployed on a cloud.

The following describes some terms in this application for ease of understanding.

(1) JS (Jensen-Shannon) divergence measurement based on a data autocorrelation matrix

It is assumed that there are m pieces of sampled data, and a dimension of each piece of sampled data is d. In this case, the sampled data $Z = [X_1, X_2, \ldots, X_m] \in R^{d \times m}$, and an autocorrelation matrix $S$ of the sampled data $Z$ may be used as an important parameter for representing distribution of the sampled data. A calculation formula of the autocorrelation matrix $S$ of the sampled data $Z$ is specifically as follows:

$$S = \frac{1}{m} \sum_{i=1}^{m} X_i X_i^T = \frac{1}{m} Z Z^T,$$

where $S$ is the autocorrelation matrix of the sampled data, m is a quantity of pieces of sampled data, and $Z$ is the sampled data.

For $Z$, the autocorrelation matrix $S$ is an unbiased estimation and is a positive definite matrix. Similarly, a type of autocorrelation matrix may be defined as:

$$S_i = \frac{1}{m_i} Z \Pi_i Z^T,$$

where $S_i$ is an autocorrelation matrix of data whose category label corresponds to an $i^{th}$ category in the sampled data, $m_i$ represents a quantity of pieces of data whose category label corresponds to the $i^{th}$ category in the sampled data and therefore $m = \sum_{i}^{K} m_i$, K is a quantity of all categories of category labels in the m pieces of sampled data, $\Pi_i$ is category distribution information of the data whose category label corresponds to the $i^{th}$ category in the sampled data, and $Z$ is the sampled data.

If autocorrelation matrixes of two random variables comply with a high-dimensional normal distribution, a KL (Kullback-Leibler) divergence between the two matrixes may be defined as:

$$D_{KL}(\boldsymbol{S}_i \| \boldsymbol{S}_j) = \tfrac{1}{2}(Tr(\boldsymbol{S}_i \boldsymbol{S}_j^{-1}) + logdet(\boldsymbol{S}_j) - logdet(\boldsymbol{S}_i) - d),$$

where $D_{KL}(\boldsymbol{S}_{i\|}\boldsymbol{S}_j)$ is a KL divergence between the autocorrelation matrix of data whose category label corresponds to the $i^{th}$ category in the sampled data and an autocorrelation matrix of data whose category label corresponds to a $j^{th}$ category in the sampled data, $\boldsymbol{S}_i$ is the autocorrelation matrix of the data whose category label corresponds to the $i^{th}$ category in the sampled data, $\boldsymbol{S}_j$ is the autocorrelation matrix of the data whose category label corresponds to the $j^{th}$ category in the sampled data, $d$ is a dimension of the sampled data, $Tr()$ represents a trace operation, and $logdet()$ represents a logarithm of a determinant of a matrix.

Because the KL divergence is asymmetric, to meet symmetry of a distance measurement, the JS (Jensen-Shannon) divergence may be further used. In this case, the JS divergence between two matrixes may be defined as follows:

$$D_{JS}(\boldsymbol{S}_i \| \boldsymbol{S}_j) = \tfrac{1}{2}\left(Tr(\boldsymbol{S}_i \boldsymbol{S}_j^{-1}) + Tr(\boldsymbol{S}_j \boldsymbol{S}_i^{-1})\right) - d,$$

where $D_{JS}(\boldsymbol{S}_{i}\|\boldsymbol{S}_j)$ is a JS divergence between the autocorrelation matrix of data whose category label corresponds to the $i^{th}$ category in the sampled data and the autocorrelation matrix of data whose category label corresponds to the $j^{th}$ category in the sampled data, $\boldsymbol{S}_i$ is the autocorrelation matrix of the data whose category label corresponds to the $i^{th}$ category in the sampled data, $\boldsymbol{S}_j$ is the autocorrelation matrix of the data whose category label corresponds to the $j^{th}$ category in the sampled data, $d$ is a dimension of the sampled data, and $Tr()$ represents a trace operation.

Therefore, an objective function may be determined to perform an operation to expand a JS divergence between autocorrelation matrixes of sampled data of different categories, so as to distinguish between the sampled data of the different categories, so that a classification/clustering effect is achieved. Specifically, an expression of the objective function is as follows:

$$\max \boldsymbol{L}(\boldsymbol{Z}) = \max \sum_{i=1}^{K} \sum_{j=i+1}^{K} \alpha_{i,j} D_{JS}(\boldsymbol{S}_i \| \boldsymbol{S}_j),$$

where $\alpha_{i,j} = \dfrac{m_i + m_j}{m}$, $\alpha_{i,j}$ is a weight parameter used to balance quantities of pieces of sampled data of categories, $m_i$ represents a quantity of pieces of data whose category label corresponds to an $i^{th}$ category in the sampled data, $m_j$ represents a quantity of pieces of data whose category label corresponds to a $j^{th}$ category in the sampled data, and $D_{JS}(\boldsymbol{S}_{i\|}\boldsymbol{S}_j)$ is a JS divergence between an autocorrelation matrix of the data whose category label corresponds to the $i^{th}$ category in the sampled data and an autocorrelation matrix of the data whose category label corresponds to the $j^{th}$ category in the sampled data.

The objective function may be used for network update. To implement a feedforward neural network, a data feature $\boldsymbol{Z}$ may be updated in a gradient ascending manner. Details are as follows.

$$\boldsymbol{Z}^l = \boldsymbol{Z}^{l-1} + \lambda \frac{\partial L}{\partial Z}, \ \boldsymbol{Z}^l \in \mathbb{S}^{d-1},$$

where $\boldsymbol{Z}^l$ represents a data feature of an $l^{th}$ layer in the feedforward neural network, $\boldsymbol{Z}^{l-1}$ represents a data feature of an $(l-1)^{th}$ layer in the feedforward neural network, $\dfrac{\partial L}{\partial Z}$ represents a gradient expression of the objective function, and $\lambda$ represents a step or a learning rate.

An objective function gradient expression may be determined based on the objective function. Details are as follows.

$$\frac{\partial L}{\partial Z} = \sum_{i=1}^{K} \sum_{j=i+1}^{K} \left(\frac{\alpha_{i,j}}{m_i}\left(-\widehat{S}_i^{-1}\widehat{S}_j\widehat{S}_i^{-1} + \widehat{S}_j^{-1}\right)Z\Pi_i + \frac{\alpha_{i,j}}{m_j}\left(-\widehat{S}_j^{-1}\widehat{S}_i\widehat{S}_j^{-1} + \widehat{S}_i^{-1}\right)Z\Pi_j\right) =$$

$$\sum_{i=1}^{K} \sum_{j \neq i}^{K} \frac{\alpha_{i,j}}{m_i}\left(-\widehat{S}_i^{-1}\widehat{S}_j\widehat{S}_i^{-1} + \widehat{S}_j^{-1}\right)Z\Pi_i \ (1),$$

$\alpha_{i,j} = \dfrac{m_i + m_j}{m}$, $\alpha_{i,j}$ is a weight parameter used to balance quantities of samples of the categories in the sampled data, $\hat{\boldsymbol{S}}_i$ is a regularized autocorrelation matrix of the data whose category label corresponds to the $i^{th}$ category in the sample data, $\hat{\boldsymbol{S}}_j$

$= \varepsilon I + S_i$, $S_i$ is the autocorrelation matrix of the data whose category label corresponds to the $i^{th}$ category in the sample data, $\varepsilon$ is a regularization parameter, $I$ is an identity matrix, $m_i$ represents a quantity of pieces of the data whose category label corresponds to the $i^{th}$ category in the sampled data and therefore $m = \sum_i^K m_i$, K is a quantity of all categories of category labels in the m pieces of sampled data, $\Pi_i$ is category distribution information of the data whose category label corresponds to the $i^{th}$ category in the sampled data, $\hat{S}_j$ is a regularized autocorrelation matrix of the data whose category label corresponds to the $j^{th}$ category in the sampled data, $\hat{S}_j = \varepsilon I + S_j$, $S_j$ is the autocorrelation matrix of the data whose category label corresponds to the $j^{th}$ category in the sampled data, $m_j$ represents a quantity of pieces of the data whose category label corresponds to the $j^{th}$ category in the sampled data, $\Pi_j$ is category distribution information of the data whose category label corresponds to the $j^{th}$ category in the sampled data, and $Z$ is the sampled data.

(2) KL divergence measurement based on a data autocorrelation matrix

When original data complies with a probability distribution, a corresponding feature Z of the original data also complies with a probability distribution, which is expressed as:

$$P(Z) = \sum_{k=1}^{K} P(Z|Z \in C_k)P(C_k),$$

where P(Z) is a hybrid distribution generated by a group of conditional probabilities $\{P(Z|Z \in C_k)\}$, and $C_k$ is category information. When the category information is not given, a random vector Z complies with the distribution P(Z). When the category information $C_k$ is given, the random vector Z complies with the distribution $P(Z|Z \in C_k)$. Therefore, it is expected that an increase of the category information can bring a large change in a feature distribution. A difference between the distribution $P(Z|Z \in C_k)$ and the distribution P(Z) is used as a measure of the feature. Specifically, an expression of the objective function is as follows:

$$\max L(Z) = \max \sum_{k=1}^{K} \alpha_k D_{KL}(S_k || S),$$

where $\alpha_k = \frac{m_k}{m}$, $\alpha_k$ is a weight parameter used to balance quantities of pieces of sampled data of categories, $m_k$ represents a quantity of pieces of data whose category label corresponds to a $k^{th}$ category in the sampled data, $S_k$ is an autocorrelation matrix of a feature $Z_k$ complying with the conditional probability distribution $P(Z|Z \in C_k)$, $S$ is an autocorrelation matrix of a feature Z complying with the probability distribution P(Z), and $DK_L(S_k||S)$ is a KL divergence between $S_k$ and $S$.

An objective function gradient expression may be determined based on the objective function. Details are as follows.

$$\frac{\partial L}{\partial Z} = \sum_{k=1}^{K} \frac{\alpha_k}{m_k}\left(\hat{S}^{-1} - \hat{S}_k^{-1}\right)Z\Pi_k + \frac{\alpha_k}{m}\left(-\hat{S}^{-1}\hat{S}_k\hat{S}^{-1} + \hat{S}^{-1}\right)Z \quad (2),$$

where $\alpha_k = \frac{m_k}{m}$, $\alpha_k$ is a weight parameter used to balance quantities of pieces of sampled data of categories, $m_k$ represents a quantity of pieces of data whose category label corresponds to a $k^{th}$ category in the sampled data, and therefore $m = \sum_k^K m_k$, K is a quantity of all categories of category labels in m pieces of sampled data, $\hat{S}_k$ is a regularized autocorrelation matrix of the data whose category label corresponds to the $k^{th}$ category in the sampled data, $\hat{S}_k = \varepsilon I + S_k$, $\varepsilon$ is a regularization parameter, $S_k$ is an autocorrelation matrix of the data whose category label corresponds to the $k^{th}$ category in the sampled data, $I$ is an identity matrix, $\Pi_k$ is category distribution information of the data whose category label corresponds to the $k^{th}$ category in the sampled data, $\hat{S}$ is regularized autocorrelation matrixes of data whose category labels correspond to all the categories in the sampled data, $S$ is autocorrelation matrixes of the data whose category labels correspond to all the categories in the sampled data, and $Z$ is the sampled data.

(3) Linear discriminative representation (linear discriminative representation, LDR) criterion based on contrastive learning

Feature extraction may be considered as a process of searching for a mapping from original data space to feature space. The contrastive learning (Contrastive Learning) is a feature extraction method, and a core idea of the contrastive learning is that a distance between images of similar original data mapped to the feature space should be as close as possible, and a distance between images of original data varying greatly mapped to the feature space should be as far as possible. Therefore, an objective function may be designed based on the idea of contrastive learning, and the following two principles are specifically followed: (1) Contrast: A distance between central nodes of data classification/clustering should be as large as possible. (2) Diversity: Data should be as diverse as possible in the same classification/clustering.

Details are as follows: For n pieces of data for classification/clustering, according to the contrast principle, if a distance between every two nodes is directly calculated, a calculation amount is $O(n^2)$. This is a multi-objective optimization problem, which is difficult to be processed. Therefore, the contrast principle is equivalently described as: maximizing a volume of an n-dimensional simplex spanned from each node under a condition that data energy is fixed. The diversity principle may be described by using entropy, and the diversity principle is described as maximizing entropy of a feature under a condition that classification/clustering information is known. It can be proved that, under a condition that feature energy is fixed, the feature has maximum entropy only when a feature distribution is white Gaussian noise. Therefore, it is expected that the feature distribution is as close as possible to a Gaussian distribution. Similar to the foregoing descriptions, a KL divergence may be used to describe a similarity between the feature distribution and the Gaussian distribution, and an objective function is defined as:

$$\min L(Z) = -logdet\, Vol(Z) + \beta \sum_{k=1}^{K} D_{KL}(\widehat{S}_k || \sigma^2 I),$$

where a volume of a K-dimensional simplex spanned from a central node is $Vol(Z) = \frac{1}{(K!)^2} det(G^T Z^T Z G)$, $G = [g_1, g_2, ..., g_k]$, $g_k = \frac{1}{Tr(\Pi_k)} \Pi_k e$, $e \in R^{m \times 1}$ is a column vector whose elements are all 1, $\Pi_k$ is category distribution information of data whose category label corresponds to a k$^{th}$ category in sampled data, $Tr()$ represents a trace operation, Z needs to satisfy an energy constraint $Tr(ZZ^T) = m(1 + \sigma^2 d)$, $\sigma$ is a Gaussian distribution variance, m represents a quantity of pieces of the sampled data, and d is a dimension of the sampled data.

The objective function satisfies convexity and unitary invariance. Therefore, a gradient expression of the objective function is specifically as follows:

$$\frac{\partial L}{\partial Z} = -ZG(G^T Z^T Z G)^{-1} G^T + \beta \sum_{k=1}^{K} \left( \frac{1}{\epsilon + \sigma^2} ZH_k - (\epsilon I + ZH_k Z^T)^{-1} ZH_k \right) \quad (3),$$

where

$$H_k = \frac{1}{m_k} (I - g_k e^T) \Pi_k (I - g_k e^T)^T \quad, \quad G = [g_1, g_2, ..., g_k], g_k = \frac{1}{Tr(\Pi_k)} \Pi_k e \quad,$$

$e \in R^{m \times 1}$ is the column vector whose elements are all 1, $\Pi_k$ is the category distribution information of the data whose category label corresponds to the k$^{th}$ category in the sampled data, $Tr()$ represents the trace operation, Z needs to satisfy the energy constraint $Tr(ZZ^T) = m(1 + \sigma^2 d)$, $\sigma$ is the Gaussian distribution variance, m represents the quantity of pieces of the sampled data, $m_k$ is a quantity of pieces of data whose category label corresponds to the k$^{th}$ category in the m pieces of sampled data, $m = \sum_{k}^{K} m_k$, K is a quantity of all categories of category labels in the m pieces of sampled data, $I$ is an identity matrix, $\beta$ represents a regularization parameter, and $Z$ is the sampled data.

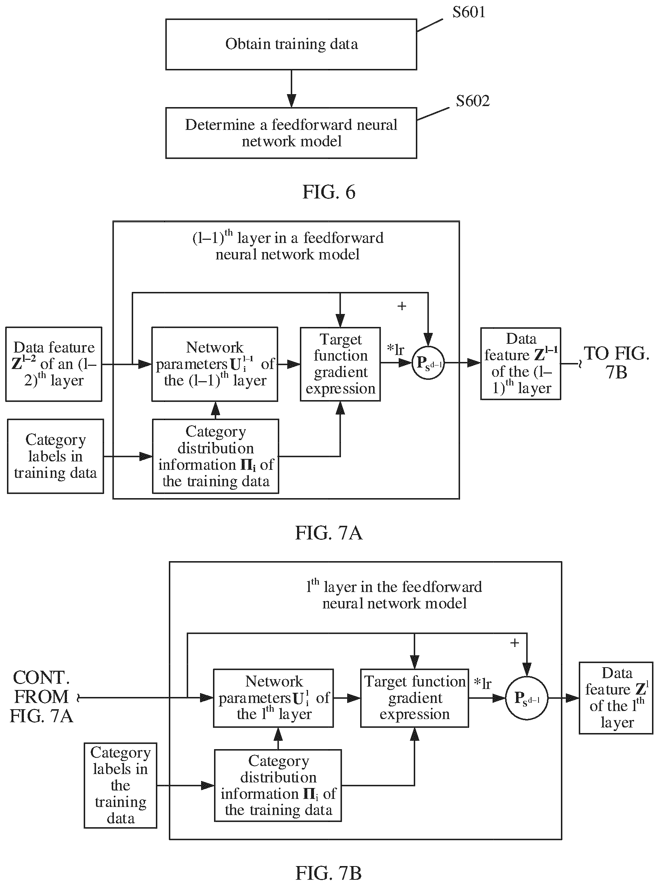

The following describes in detail a method in embodiments of this application. FIG. 6 is a schematic flowchart of a data processing method according to an embodiment of this application. The method may be performed by a data processing apparatus. The data processing apparatus may be specifically the training device 120 in the system architecture 100 shown in FIG. 3. The method includes but is not limited to the following steps.

Step S601: Obtain training data.

Specifically, the training data includes category labels. In an example, it is assumed that there are m=100 pictures in the training data, pictures 1 to 10 are category 1, that is, a number "0" category, pictures 11 to 20 are category 2, that is, a number "1" category, pictures 21 to 30 are category 3, that is, a number "3" category, ..., and pictures 91 to 100 are category 10, that is, a number "9" category.

In a possible implementation, category distribution information of the training data may be determined based on the category labels in the training data.

Specifically, a general classification or clustering task may have m pieces of d-dimensional data, which are represented as a feature matrix $Z \in R^{d \times m}$ and have K classifications/clusters, that is, $C_1, ... , C_K$. When soft classification/clustering is considered, a specific definition may be as follows:

$$\Pi_k = diag(\Pi_k^1, \dots, \Pi_k^m) \in R^{m \times m}, \ \Pi_k^i = Pr(\mathbf{Z} \in C_k | \mathbf{Z} = z_i)$$

It can be learned that $\Pi_k$ is a diagonal matrix having values only on a diagonal line, and $\Sigma_k \Pi_k = I^{m \times m}$. $\Pi_k$ indicates distribution information of each category in data, and distribution information in a training set should be the same as distribution information in a test set. Therefore, category distribution information of original data may be obtained by estimating a parameter $\Pi_k$, and then feature extraction is performed on the data by using the category information of the original data.

In an example, an MNIST dataset is used as an example. It is assumed that m=100 pieces of picture data are sampled from the dataset, each picture includes d=28*28-dimensional pixels whose values are within [0, 1], and the 100 pictures are training data. In this case, Z represents a feature matrix including such a group of training data. There are K=10 categories. It is assumed that pictures 1 to 10 are a number "0" category, and pictures 11 to 20 are a number "1" category. Therefore, it may be determined that for the number "0" category, $\Pi_0^1$ to $\Pi_0^{10}$ are 1, and the rest are 0. In this case, there is distribution information $\Pi_0 = diag(1,1,1,1,1,1,1,1,1,1,0, \dots ,0)$ of the number "0" category in the training data. The other categories are similar.

Step S602: Determine a feedforward neural network model.

Specifically, input information of an $l^{th}$ layer in the feedforward neural network model includes category distribution information of the training data and a first data feature, output information of the $l^{th}$ layer includes a second data feature, the first data feature is an output of an $(l-1)^{th}$ layer, both the first data feature and the second data feature are classification or clustering information representing the training data, and l is a positive integer greater than 1.

In a possible implementation, when l=2, and the first data feature is an output of a $1^{st}$ layer, input information of the $1^{st}$ layer includes the category distribution information of the training data and the training data. In other words, when l=2, the input information of the $1^{st}$ layer includes the category distribution information of the training data and the training data, the output of the $1^{st}$ layer is the first data feature, input information of a $2^{nd}$ layer includes the category distribution information of the training data and the first data feature, and output information of the $2^{nd}$ layer includes the second data feature. An input dimension of an input dataset X may be reduced to a d dimension through feature engineering, to obtain training data as an input. In this embodiment of this application, the input dimension of the input dataset X is the same as a dimension of the training data.

In a possible implementation, the determining a feedforward neural network model includes: obtaining the first data feature $\mathbf{Z}^{l-1}$; and determining network parameters of the $l^{th}$ layer based on the first data feature $\mathbf{Z}^{l-1}$ and the category distribution information $\Pi_i$ of the training data, where the second data feature is determined based on the first data feature $\mathbf{Z}^{l-1}$ and the network parameters of the $l^{th}$ layer.

Specifically, the determining network parameters of the $l^{th}$ layer based on the first data feature $\mathbf{Z}^{l-1}$ and the category distribution information $\Pi_i$ of the training data specifically includes the following manners: determining, based on the first data feature $\mathbf{Z}^{l-1}$ and the category distribution information $\Pi_i$ of the training data, a regularized autocorrelation matrix of data whose category label corresponds to each category in the training data; and determining the network parameters of the $l^{th}$ layer based on the regularized autocorrelation matrix of the data whose category label corresponds to each category in the training data.

A specific formula is as follows:

$$S_i = \frac{1}{m_i} \mathbf{Z}^{l-1} \Pi_i (\mathbf{Z}^{l-1})^T;$$

$$\widehat{S}_i = \epsilon I + S_i;$$

and

$$U_i^l = \sum_{j \neq i}^K \frac{\alpha_{i,j}}{m_i} \left( -\widehat{S}_i^{-1} \widehat{S}_j \widehat{S}_i^{-1} + \widehat{S}_j^{-1} \right),$$

where $m_i$ is a quantity of pieces of data whose category label corresponds to an $i^{th}$ category in m pieces of training data, $m = \sum_i^K m_i$, K is a quantity of all categories of category labels in the m pieces of training data, $\alpha_{i,j} = \frac{m_i + m_j}{m}$ is a weight parameter used to balance quantities of samples of the categories in the training data, $\mathbf{Z}^{l-1}$ is the first data feature, $\Pi_i$ is the category distribution information of the training data, $S_i$ is an autocorrelation matrix of the data whose category label corresponds to the $i^{th}$ category in the training data, $\varepsilon$ is a regularization parameter, $\hat{S}_i$ is a regularized autocorrelation matrix of the data whose category label corresponds to the $i^{th}$ category in the training data, and $U_i^l$ is network parameters of the $i^{th}$ category of the $l^{th}$ layer.

It is determined based on the foregoing formula that if a value of $U_i^l$ is smaller, it indicates that distribution of the $i^{th}$ category in the training data is closer to that of another category. Therefore, $U_i^l$ can be used as a discriminative parameter, and $U_i$ of each layer may be stored as a d*d fully connected layer parameter through a network. Finally, a gradient expression of an objective function, for example, Formula (1), is calculated, and an operation of projection to $P_{Sd-1}$ in a unit sphere is implemented through an $L_2$ regularization constraint, so that the feature $Z^{l-1}$ is constrained in unit sphere space, and a feature $Z^l$ of a next layer is obtained.

Alternatively, a specific formula is as follows:

$$S_i = \frac{1}{m_i} Z^{l-1} \Pi_i (Z^{l-1})^T;$$

$$\widehat{S}_i = \epsilon I + S_i;$$

$$A_i^l = \widehat{S}^{-1} - \widehat{S}_i^{-1};$$

and

$$B_i^l = -\widehat{S}^{-1} \widehat{S}_i \widehat{S}^{-1} + \widehat{S}^{-1},$$

where $m_i$ is a quantity of pieces of data whose category label corresponds to an $i^{th}$ category in m pieces of training data, $m = \sum_i^K m_i$, K is a quantity of all categories of category labels in the m pieces of training data, $Z^{l-1}$ is the first data feature, $\Pi_i$ is the category distribution information of the training data, $I$ is an identity matrix, $S_i$ is an autocorrelation matrix of the data whose category label corresponds to the $i^{th}$ category in the training data, $\varepsilon$ is a regularization parameter, $\widehat{S}_i$ is a regularized autocorrelation matrix of the data whose category label corresponds to the $i^{th}$ category in the training data, $S$ is autocorrelation matrixes of data whose category labels correspond to all the categories in the training data, $\widehat{S}$ is regularized autocorrelation matrixes of the data whose category labels correspond to all the categories in the training data, and $A_i^l$ is network parameters of the $i^{th}$ category of the $l^{th}$ layer.

It is determined based on the foregoing formula that if a value of $A_i^l$ is smaller, it indicates that distribution of the $i^{th}$ category in the training data is closer to that of another category. Therefore, $A_i^l$ can be used as a discriminative parameter, and $A_i$ of each layer may be stored as a d*d fully connected layer parameter through a network. Finally, a gradient expression of an objective function, for example, Formula (2), is calculated, and an operation of projection to $P_{Sd-1}$ in a unit sphere is implemented through an $L_2$ regularization constraint, so that the feature $Z^{l-1}$ is constrained in unit sphere space, and a feature $Z^l$ of a next layer is obtained.

Specifically, the determining network parameters of the $l^{th}$ layer based on the first data feature $Z^{l-1}$ and the category distribution information $\Pi_i$ of the training data may specifically alternatively include the following manners: determining gradient parameters based on the category distribution information $\Pi_i$ of the training data; and determining the network parameters of the $l^{th}$ layer based on the first data feature $Z^{l-1}$ and the gradient parameters.

A specific formula is as follows:

$$G = [g_1, g_2, \ldots, g_i], g_i = \frac{1}{Tr(\Pi_i)} \Pi_i e;$$

$$H_i = \frac{1}{m_i} (I - g_i e^T) \Pi_i (I - g_i e^T)^T;$$

and

$$C_i^{\mathrm{l}} = Z^{l-1} g_i,$$

where $Z^{l-1}$ satisfies an energy constraint: $Tr(Z^{l-1}(Z^{l-1})^T) = m(1+\sigma^2 d)$, $\sigma$ is a Gaussian distribution variance, m is a quantity of samples of the training data, d is a dimension of the training data, $Z^{l-1}$ is the first data feature, $e \in \mathrm{R}^{m \times 1}$ is a column vector whose elements are all 1, $\Pi_i$ is the category distribution information of the training data, $Tr()$ represents a trace operation, $I$ is an identity matrix, $m_i$ is a quantity of pieces of data whose category label corresponds to an $i^{th}$ category in the m pieces of training data, $m = \sum_i^K m_i$, K is a quantity of all categories of category labels in the m pieces of training data, $C_i^{\mathrm{l}}$ represents network parameters of the $i^{th}$ category of the $I^{th}$ layer, and $\textbf{\textit{G}}$ and $\textbf{\textit{H}}_i$ are the gradient parameters. $C_i^{\mathrm{l}}$ is a clustering center, where a simplex vertex may be used as the clustering center and used to mark a reference between categories. If a value of $C_i^{\mathrm{l}}$ is smaller, it indicates that distribution of the $i^{th}$ category in the training data is closer to that of a $j^{th}$ category in the training data. Therefore, $C_i^{\mathrm{l}}$ can be used as a discriminative parameter, and intermediate variables $\textbf{\textit{C}}_i$ of each layer may be stored as a d $\times$ d fully connected layer parameter through a network. Finally, a gradient expression of an objective function, for example, Formula (3), is calculated, and an operation of projection to $P_{Sd-1}$ in a unit sphere is implemented through an $L_2$ regularization constraint, so that the feature $\textbf{\textit{Z}}^{l-1}$ is constrained in unit sphere space, and a feature $\textbf{\textit{Z}}^l$ of a next layer is obtained. Details are as follows.

Specifically, after the network parameters of the $I^{th}$ layer are determined, that the second data feature may be determined based on the first data feature $\textbf{\textit{Z}}^{l-1}$ and the network parameters of the $I^{th}$ layer specifically includes the following manners: determining an objective function gradient expression based on the network parameters of the $I^{th}$ layer and the first data feature $\textbf{\textit{Z}}^{l-1}$; and then determining the second data feature $\textbf{\textit{Z}}^l$ based on the first data feature $\textbf{\textit{Z}}^{l-1}$, the category distribution information $\Pi_i$ of the training data, and the objective function gradient expression. The objective function gradient expression may be described as Formula (1), Formula (2), or Formula (3). Details are not described herein again.

$$Z^l = Z^{l-1} + \lambda \frac{\partial L}{\partial Z}, \ Z^l \in \mathbb{S}^{d-1},$$

where $\textbf{\textit{Z}}^l$ is the second data feature, $\lambda$ represents a step or a learning rate, $\frac{\partial L}{\partial Z}$ is the objective function gradient expression, and $\textbf{\textit{Z}}^{l-1}$ is the first data feature.

To better describe a training process of the feedforward neural network model, descriptions are provided by using examples in which Formula (1), Formula (2), and Formula (3) are respectively used as the objective function gradient expression. Details are as follows.

In an example, an example in which the objective function gradient expression is Formula (1) is used. A computation process of an $I^{th}$ layer in the feedforward neural network model is shown in FIG. 7A and FIG. 7B. It can be learned from Formula (1) that a feature $\textbf{\textit{Z}}^{l-1}$ of an $(l-1)^{th}$ layer, category distribution information $\Pi_i$ of training data, and network parameters of the $I^{th}$ layer, that is, intermediate variables $U_i^{\mathrm{l}}$, are needed for calculating a feature $\textbf{\textit{Z}}^l$ of the $I^{th}$ layer, where $U_i^{\mathrm{l}}$ represents network parameters of an $i^{th}$ category of the $I^{th}$ layer. Known category labels in the training data are sampled, and the category distribution information $\Pi_i$ of the training data may be determined, so that a regularized autocorrelation matrix $\hat{\textbf{S}}_i$ of data whose category label corresponds to the $i^{th}$ category in the training data is determined, and the intermediate variables $U_i^{\mathrm{l}}$ are obtained. If a value of $U_i^{\mathrm{l}}$ is smaller, it indicates that distribution of the $i^{th}$ category in the training data is closer to that of a $j^{th}$ category in the training data. Therefore, $U_i^{\mathrm{l}}$ may be used as a discriminative parameter, and intermediate variables $\textbf{\textit{U}}_i$ of each layer may be stored as a d $\times$ d fully connected layer parameter through a network. Finally, the objective function gradient expression, for example, Formula (1), is calculated, and an operation of projection to $P_{Sd-1}$ in a unit sphere is implemented through an $L_2$ regularization constraint, so that the feature $\textbf{\textit{Z}}^{l-1}$ of the $(l-1)^{th}$ layer is constrained in unit sphere space, and the feature $\textbf{\textit{Z}}^l$ of the $I^{th}$ layer is obtained. A specific formula is as follows:

$$Z^l = Z^{l-1} + \lambda \frac{\partial L}{\partial Z}, \ Z^l \in \mathbb{S}^{d-1},$$

where $\boldsymbol{Z}^{l-1}$ is the feature of the (l-1)<sup>th</sup> layer, $\lambda$ represents a step or a learning rate, $\frac{\partial L}{\partial Z}$ is Formula (1), and $\boldsymbol{Z}^l$ is the feature of the l<sup>th</sup> layer.

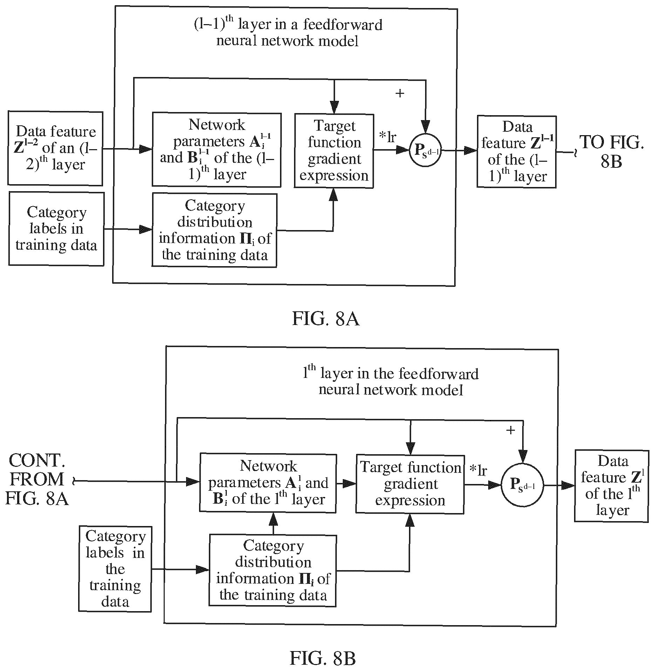

In an example, an example in which the objective function gradient expression is Formula (2) is used. A computation process of an l<sup>th</sup> layer in the feedforward neural network model is shown in FIG. 8A and FIG. 8B. It can be learned from Formula (2) that a feature $\boldsymbol{Z}^{l-1}$ of an (l-1)<sup>th</sup> layer, category distribution information $\varPi_i$ of training data, and network parameters of the l<sup>th</sup> layer, that is, intermediate variables $A_i^{\mathrm{l}}$ and $B_i^{\mathrm{l}}$, are needed for calculating a feature $\boldsymbol{Z}^l$ of the l<sup>th</sup> layer, where $A_i^{\mathrm{l}}$ represents network parameters of an i<sup>th</sup> category of the l<sup>th</sup> layer, and $B_i^{\mathrm{l}}$ represents the network parameters of the i<sup>th</sup> category of the l<sup>th</sup> layer. Known category labels in the training data are sampled, and the category distribution information $\varPi_i$ of the training data may be determined, so that a regularized autocorrelation matrix $\hat{\mathbf{S}}_i$ of data whose category label corresponds to the i<sup>th</sup> category in the training data is determined, and the intermediate variables $A_i^{\mathrm{l}}$ and $B_i^{\mathrm{l}}$ are obtained. If a value of $A_i^{\mathrm{l}}$ is smaller, it indicates that distribution of the i<sup>th</sup> category in the training data is closer to that of a j<sup>th</sup> category in the training data. Therefore, $A_i^{\mathrm{l}}$ can be used as a discriminative parameter, and intermediate variables $\boldsymbol{A_i}$ of each layer may be stored as a d × d fully connected layer parameter through a network. Finally, the objective function gradient expression, for example, Formula (2), is calculated, and an operation of projection to $\mathbf{P}_{\text{Sd-1}}$ in a unit sphere is implemented through an $L_2$ regularization constraint, so that the feature $\boldsymbol{Z}^{l-1}$ of the (l-1)<sup>th</sup> layer is constrained in unit sphere space, and the feature of the l<sup>th</sup> layer is obtained. A specific formula is as follows:

$$\boldsymbol{Z}^l = \boldsymbol{Z}^{l-1} + \lambda \frac{\partial L}{\partial Z},\ \ \boldsymbol{Z}^l \in \mathbb{S}^{d-1},$$

where $\boldsymbol{Z}^{l-1}$ is the feature of the (l-1)<sup>th</sup> layer, $\lambda$ represents a step or a learning rate, $\frac{\partial L}{\partial Z}$ is Formula (2), and $\boldsymbol{Z}^l$ is the feature of the l<sup>th</sup> layer.

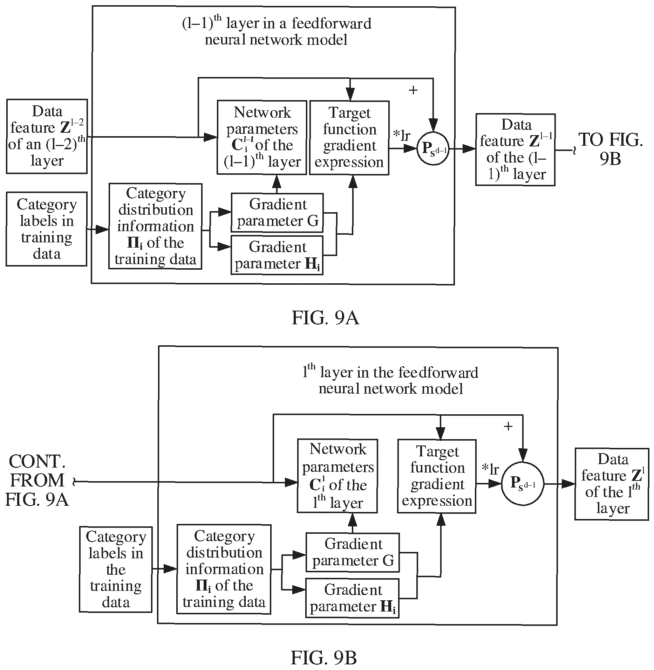

In an example, an example in which the objective function gradient expression is Formula (3) is used. A computation process of an l<sup>th</sup> layer in the feedforward neural network model is shown in FIG. 9A and FIG. 9B. It can be learned from Formula (3) that a feature $\boldsymbol{Z}^{l-1}$ of an (l-1)<sup>th</sup> layer, category distribution information $\varPi_i$ of training data, and network parameters of the l<sup>th</sup> layer, that is, intermediate variables $C_i^{\mathrm{l}}$, are needed for calculating a feature $\boldsymbol{Z}^l$ of the l<sup>th</sup> layer, where $C_i^{\mathrm{l}}$ represents network parameters of an i<sup>th</sup> category of the l<sup>th</sup> layer. Known category labels in the training data are sampled, and the category distribution information $\varPi_i$ of the training data may be determined, so that gradient parameters $\boldsymbol{G}$ and $\boldsymbol{H_i}$ are determined, and the intermediate variables $C_i^{\mathrm{l}}$ are obtained, where $C_i^{\mathrm{l}}$ represents the network parameters of the i<sup>th</sup> category of the l<sup>th</sup> layer. $C_i^{\mathrm{l}}$ is a clustering center, where a simplex vertex may be used as the clustering center and used to mark a reference between categories. If a value of $C_i^{\mathrm{l}}$ is smaller, it indicates that distribution of the i<sup>th</sup> category in the training data is closer to that of a j<sup>th</sup> category in the training data. Therefore, $C_i^{\mathrm{l}}$ may be used as a discriminative parameter, and intermediate variables $\boldsymbol{C_i}$ of each layer may be stored as a d × d fully connected layer parameter through a network. Finally, the objective function gradient expression, for example, Formula (1), is calculated, and an operation of projection to $\mathbf{P}_{\text{Sd-1}}$ in a unit sphere is implemented through an $L_2$ regularization constraint, so that the feature $\boldsymbol{Z}^{l-1}$ of the (l-1)<sup>th</sup> layer is constrained in unit sphere space, and the feature of the l<sup>th</sup> layer is obtained. A specific formula is as follows:

$$\boldsymbol{Z}^l = \boldsymbol{Z}^{l-1} + \lambda \frac{\partial L}{\partial Z},\ \ \boldsymbol{Z}^l \in \mathbb{S}^{d-1},$$

where $\boldsymbol{Z}^{l-1}$ is the feature of the (l-1)<sup>th</sup> layer, $\lambda$ represents a step or a learning rate, $\frac{\partial L}{\partial Z}$ is Formula (3), $\boldsymbol{Z}^l$ is the feature of the l<sup>th</sup> layer, and $\boldsymbol{Z}^{l-1}$ is constrained in (d-1)-dimensional unit sphere space.

In the foregoing method, the feedforward neural network model is provided, so as to reduce communication overheads between a transmit end and a receive end caused by BP algorithm training and interaction, and improve training efficiency. In addition, in a scenario of dealing with different transmission/receiving network structures, a quantity of network layers is adjusted to improve training accuracy, to avoid a problem that retraining is needed due to different adaptions to different transmission/receiving networks.

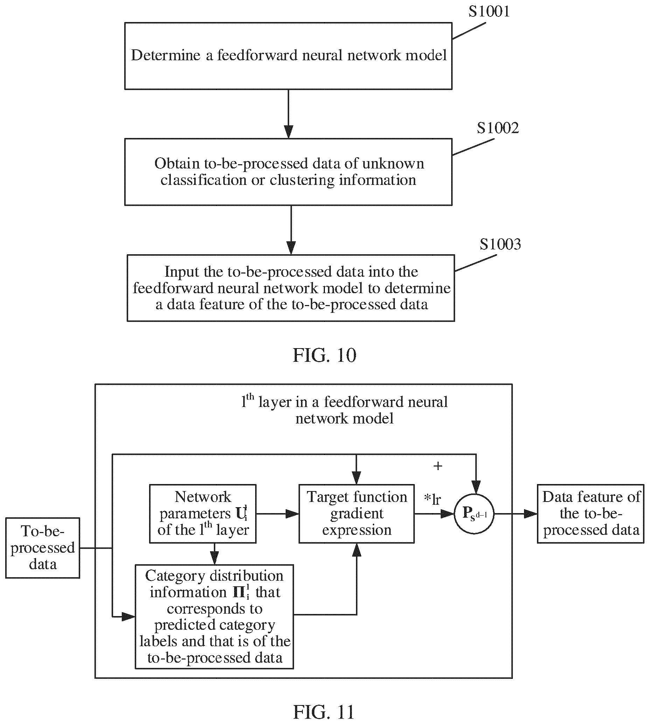

The following describes in detail a method in embodiments of this application. FIG. 10 is a schematic flowchart of a data processing method according to an embodiment of this application. The method may be performed by a data processing apparatus. The data processing apparatus may be specifically the execution device 110, the client device 140, or the user device 150 in the system architecture 100 shown in FIG. 3. The method includes but is not limited to the following steps.

Step S1001: Determine a feedforward neural network model.

Specifically, a process of determining the feedforward neural network model may be shown in FIG. 6. Details are not described herein again.

Step S1002: Obtain to-be-processed data of unknown classification or clustering information.

Optionally, the to-be-processed data of the unknown classification or clustering information does not include category labels.

Step S1003: Input the to-be-processed data into the feedforward neural network model to determine a data feature of the to-be-processed data.

Specifically, the data feature of the to-be-processed data is the classification or clustering information representing the to-be-processed data. The data feature of the to-be-processed data is used to determine a classification or clustering result of the to-be-processed data. A dimension of the data feature of the to-be-processed data is related to a data type of the to-be-processed data. For example, for selection of the dimension of the data feature, it can be learned from a VC (Vapnik-Chervonenkis) dimension theory that a higher VC dimension indicates higher model complexity and easier differentiation. However, overfitting is likely to occur if the dimension is excessively high. Therefore, a proper dimension needs to be determined. A general estimation manner of determining a dimension lower limit is to calculate an eigenvalue of an autocorrelation matrix of original data, remove some dimensions whose eigenvalues are close to 0, and use the remaining dimensions as dimensions for extracting features. In addition, the dimension may be refined for different data types. For example, if a data type of to-be-processed data is a picture, a dimension of a data feature of the to-be-processed data may be 1000. If the data type of the to-be-processed data is a text, a dimension of the data feature of the to-be-processed data may be 768.

The process of inputting the to-be-processed data into the feedforward neural network model to determine the data feature of the to-be-processed data may be understood as a deduction process, which is specifically as follows.

In a possible implementation, the inputting the to-be-processed data into the feedforward neural network model to determine a data feature of the to-be-processed data specifically includes the following manners: determining, based on the to-be-processed data and the network parameters of the $l^{th}$ layer, category distribution information $\Pi_i^l$ that corresponds to predicted category labels and that is of the to-be-processed data; determining an objective function gradient expression based on the to-be-processed data and the category distribution information $\Pi_i^l$ that corresponds to the predicted category labels and that is of the to-be-processed data; and determining the data feature of the to-be-processed data based on the to-be-processed data and the objective function gradient expression.

The determining, based on the to-be-processed data and the network parameters of the $l^{th}$ layer, category distribution information $\Pi_i^l$ that corresponds to predicted category labels and that is of the to-be-processed data may specifically include the following manners: determining projections of the predicted category labels in the to-be-processed data on a first category based on the to-be-processed data and the network parameters of the $l^{th}$ layer, where the first category is any one of a plurality of categories corresponding to the predicted category labels in the to-be-processed data; and determining, based on the projections of the to-be-processed data on the first category, the category distribution information that corresponds to the predicted category labels and that is of the to-be-processed data.

A specific formula for determining the category distribution information $\Pi_i^l$ that corresponds to the predicted category labels and that is of the to-be-processed data is as follows:

$$p_i^l = U_i^l Z;$$

and

$$\Pi_i^l = \frac{exp\left(-\eta\left\|p_i^l\right\|\right)}{\sum_i exp(-\eta\|p_i^l\|)} \in [0,1],$$

where Z is the to-be-processed data, $U_i^l$ is network parameters of an ith category of the lth layer, $p_i^l$ is projections of the predicted category labels in the to-be-processed data on the ith category of the lth layer, $\Pi_i^l$ is the category distribution information that corresponds to the predicted category labels and that is of the to-be-processed data, and $\eta$ is a hyperparameter for controlling estimation confidence. $p_i^l = U_i^l Z$ may be understood as the projections of the to-be-processed data on the ith category of the lth layer. When a value of $p_i^l$ is smaller, it indicates a closer correlation with the ith category of the lth layer. Therefore, the category distribution information $\Pi_i^l$ that corresponds to the predicted category labels and that is of the to-be-processed data may be determined by using a softmax function. The specific formula is shown above.

After the category distribution information $\Pi_i^l$ that corresponds to the predicted category labels and that is of the to-be-processed data is determined based on the foregoing formula, the objective function gradient expression is determined based on the to-be-processed data and the category distribution information $\Pi_i^l$ that corresponds to the predicted category labels and that is of the to-be-processed data, where the objective function gradient expression may be specifically shown in Formula (1). Then, the data feature of the to-be-processed data is determined based on the to-be-processed data and the objective function gradient expression.

Alternatively, a specific formula for determining the category distribution information $\Pi_i^l$ that corresponds to the predicted category labels and that is of the to-be-processed data is as follows:

$$p_i^l = A_i^l Z;$$

and

$$\Pi_i^l = \frac{exp\left(-\eta\|p_i^l\|\right)}{\sum_i exp(-\eta\|p_i^l\|)} \in [0,1],$$

where $Z$ is the to-be-processed data, $A_i^l$ is network parameters of an ith category of the lth layer, $p_i^l$ is projections of the predicted category labels in the to-be-processed data on the ith category of the lth layer, $\Pi_i^l$ is the category distribution information that corresponds to the predicted category labels and that is of the to-be-processed data, and $\eta$ is a hyperparameter for controlling estimation confidence. $p_i^l = A_i^l Z$ may be understood as the projections of the to-be-processed data on the ith category of the lth layer. When a value of $p_i^l$ is smaller, it indicates a closer correlation with the ith category of the lth layer. Therefore, the category distribution information $\Pi_i^l$ that corresponds to the predicted category labels and that is of the to-be-processed data may be determined by using a softmax function. The specific formula is shown above.

After the category distribution information $\Pi_i^l$ that corresponds to the predicted category labels and that is of the to-be-processed data is determined based on the foregoing formula, the objective function gradient expression is determined based on the to-be-processed data and the category distribution information $\Pi_i^l$ that corresponds to the predicted category labels and that is of the to-be-processed data, where the objective function gradient expression may be specifically shown in Formula (2). Then, the data feature of the to-be-processed data is determined based on the to-be-processed data and the objective function gradient expression.

Alternatively, the category distribution information that corresponds to the predicted category labels and that is of the to-be-processed data includes one or more of the following: distance information, correlation information, differential information, or soft classification information. A specific formula for determining the category distribution information $\Pi_i^l$ that corresponds to the predicted category labels and that is of the to-be-processed data based on to-be-processed data and the network parameters of the lth layer is as follows:

$$\Pi_i^l = \operatorname{argmin} \operatorname{dist}(Z, C_i^l);$$

or

$$\Pi_i^l = argmin < Z, C_i^l >;$$

or

$$\Pi_i^l = \operatorname{argmin} \operatorname{dist}\left(Z^l, C_i^l\right) - \operatorname{dist}\left(Z^{l-1}, C_i^{l-1}\right);$$

or

$$\Pi_i^l = \frac{\exp\left(\eta dist\left(Z, C_i^l\right)\right)}{\sum_i \exp\left(\eta dist\left(Z, C_i^l\right)\right)},$$

where $Z$ is the to-be-processed data, $\Pi_i^l$ is the category distribution information that corresponds to the predicted category labels and that is of the to-be-processed data, $C_i^l$ is network parameters of an $i^{th}$ category of the $l^{th}$ layer, $Z^l$ is a data feature of the to-be-processed data at the $l^{th}$ layer, $Z^{l-1}$ is a data feature of the to-be-processed data at the $(l-1)^{th}$ layer, and < > represents an inner product.

After the category distribution information $\Pi_i^l$ that corresponds to the predicted category labels and that is of the to-be-processed data is determined, the determining an objective function gradient expression based on the to-be-processed data and the category distribution information $\Pi_i^l$ that corresponds to the predicted category labels and that is of the to-be-processed data specifically includes: determining gradient parameters ($G$ and $H_i$) based on the category distribution information $\Pi_i^l$ that corresponds to the predicted category labels and that is of the to-be-processed data; and determining the objective function gradient expression based on the to-be-processed data and the gradient parameters. A specific formula is as follows:

$$g_i = \frac{1}{Tr(\Pi_i^l)} \Pi_i^l e;$$

$$G = [g_1, g_2, \ldots, g_i];$$

and

$$H_i = \frac{1}{m_i}(I - g_i e^T)\Pi_i^l(I - g_i e^T)^T,$$

where $\Pi_i^l$ is the category distribution information that corresponds to the predicted category labels and that is of the to-be-processed data, $Tr()$ represents a trace operation, $I$ is an identity matrix, $m_i$ is a quantity of pieces of data of an $i^{th}$ category in m pieces of to-be-processed data, $m = \sum_i^K m_i$, K is a quantity of all categories of predicted category labels in the m pieces of to-be-processed data, and $G$ and $H_i$ represent the gradient parameters. The objective function gradient expression is shown in Formula (3). Then, the data feature of the to-be-processed data is determined based on the to-be-processed data and the objective function gradient expression.

In a possible implementation, the method further includes: outputting the data feature of the to-be-processed data.

In another possible implementation, the to-be-processed data of the unknown classification or clustering information is a data feature of third data, the data feature of the third data is determined through another feed forward neural network, input information of an $l^{th}$ layer in the another feedforward neural network includes category distribution information of training data and a first data feature, output information of the $l^{th}$ layer includes a second data feature, the first data feature is an output of an (l-1)$^{th}$ layer, both the first data feature and the second data feature are classification or clustering information representing the training data, and l is a positive integer greater than 1. In other words, the data feature of the third data is determined through another feedforward neural network. The data feature of the third data is the to-be-processed data of the unknown classification or clustering information. Then, the to-be-processed data is inputted into a determined feedforward neural network model to obtain the data feature of the to-be-processed data.

To better describe a deduction process of the feedforward neural network model, descriptions are provided by using examples in which Formula (1), Formula (2), and Formula (3) are respectively used as the objective function gradient expression. Details are as follows.

In an example, an example in which the objective function gradient expression is Formula (1) is used. A computation process of an l$^{th}$ layer in the deduction process in the feedforward neural network model is shown in FIG. 11.

For to-be-processed data **Z** of unknown classification or clustering information, category distribution information $\Pi_i^l$ that corresponds to predicted category labels and that is of the to-be-processed data may be determined based on network parameters, for example, network parameters $U_i^l$ of the l$^{th}$ layer, stored in a trained feedforward neural network and the to-be-processed data **Z**. Then, an objective function gradient expression is determined based on the category distribution information $\Pi_i^l$ that corresponds to the predicted category labels and that is of the to-be-processed data, the to-be-processed data **Z**, and the network parameters $U_i^l$ of the l$^{th}$ layer. Details are shown in Formula (1). Finally, a data feature of the to-be-processed data is determined based on the objective function gradient expression and the to-be-processed data. For a related formula, refer to the foregoing descriptions.

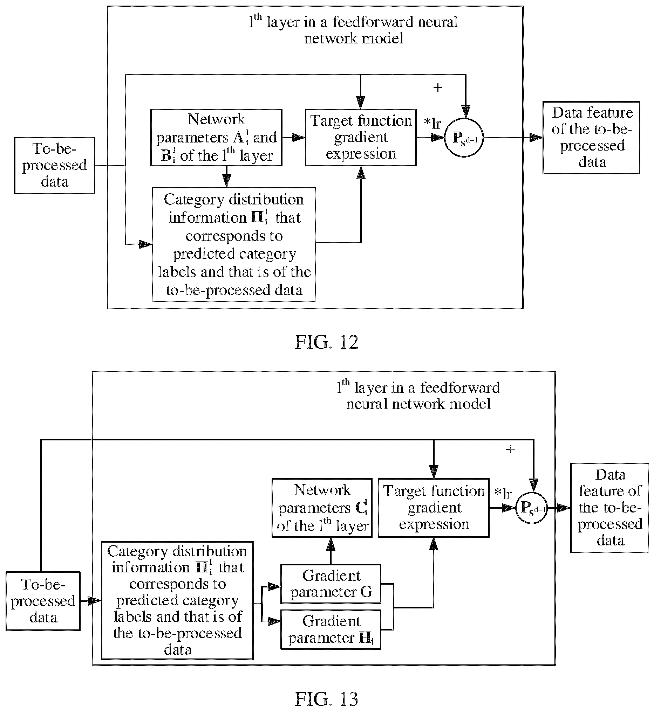

In an example, an example in which the objective function gradient expression is Formula (2) is used. A computation process of the l$^{th}$ layer in the deduction process in the feedforward neural network model is shown in FIG. 12.

For to-be-processed data **Z** of unknown classification or clustering information, category distribution information $\Pi_i^l$ that corresponds to predicted category labels and that is of the to-be-processed data may be determined based on network parameters, for example, network parameters $A_i^l$ and $B_i^l$ of the l$^{th}$ layer, stored in a trained feedforward neural network and the to-be-processed data **Z**. Then, an objective function gradient expression is determined based on the category distribution information $\Pi_i^l$ that corresponds to the predicted category labels and that is of the to-be-processed data, the to-be-processed data **Z**, and the network parameters $A_i^l$ and $B_i^l$ of the l$^{th}$ layer. Details are shown in Formula (2). Finally, a data feature of the to-be-processed data is determined based on the objective function gradient expression and the to-be-processed data. For a related formula, refer to the foregoing descriptions.

In an example, an example in which the objective function gradient expression is Formula (3) is used. A computation process of the l$^{th}$ layer in the deduction process in the feedforward neural network model is shown in FIG. 13.

For to-be-processed data **Z** of unknown classification or clustering information, category distribution information $\Pi_i^l$ that corresponds to predicted category labels and that is of the to-be-processed data may be determined based on network parameters, for example, network parameters $C_i^l$ of the l$^{th}$ layer, stored in a trained feedforward neural network and the to-be-processed data **Z**. Then, gradient parameters **G** and $H_i$ are determined based on the category distribution information $\Pi_i^l$ that corresponds to the predicted category labels and that is of the to-be-processed data, and then an objective function gradient expression is determined based on the to-be-processed data **Z**, the network parameters $C_i^l$ of the l$^{th}$ layer, and the gradient parameters **G** and $H_i$. Details are shown in Formula (3). Finally, a data feature of the to-be-processed data is determined based on the objective function gradient expression and the to-be-processed data. For a related formula, refer to the foregoing descriptions.

In embodiments of this application, the data processing methods shown in FIG. 6 and FIG. 10 are applicable to a multi-view (Multi-View) scenario and a multi-node (Multi-Node) scenario. Details are as follows.

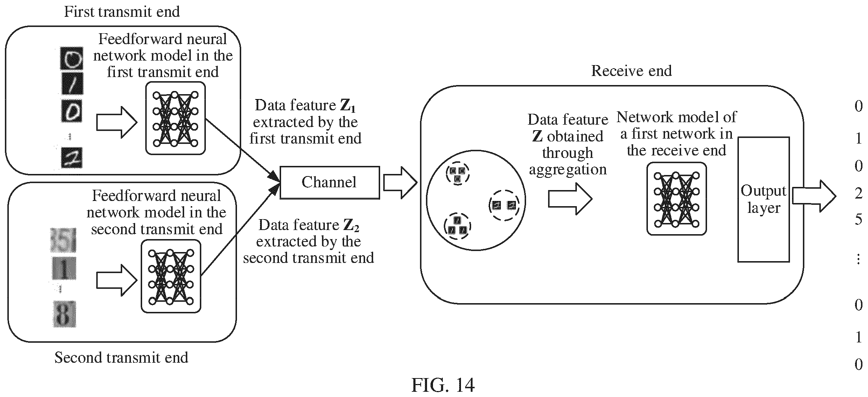

(1) The multi-view scenario is shown in FIG. 14. The feedforward neural network shown in FIG. 6 and FIG. 10 is mainly used for transmission of a data feature, and a task-related operation is completed at a receive end. Therefore, a plurality of transmit ends may send different data features, so that the receive end processes the different data features, and obtains a data processing result based on different classification tasks. As shown in FIG. 14, in the multi-view scenario, there may be a plurality of transmit ends. Two transmit ends are used as an example for description.

The two transmit ends are a first transmit end and a second transmit end. Both the first transmit end and the second transmit end execute a same task, for example, a classification task. However, category distribution information of training data received by the first transmit end and the second transmit end may be different. The first transmit end extracts, through a feedforward neural network model obtained by using the training data and the category distribution information of the training data, a data feature $Z_1$ related to the classification task, and the second transmit end extracts, through a feedforward neural network model obtained by using the training data and the category distribution information of the training data, a data feature $Z_2$ related to the classification task. The data feature $Z_1$ extracted by the first transmit end and the data feature $Z_2$ extracted by the first transmit end are sent to the receive end through channel transmission. The receive end aggregates the received data feature $Z_1$ and data feature $Z_2$ to obtain a feature $Z = [Z_1, Z_2]$, where a feature dimension is $D = \Sigma_i\, d_i$. For example, if a feature dimension of the data feature $Z_1$ is 128, and a feature dimension of the data feature $Z_2$ is 128, the feature dimension of the feature $Z$ obtained by the receive end through aggregation is 128+128=256. Then, the receive end inputs the obtained feature $Z$ to a training readout layer in a first network, to obtain a final output result. The first network may be the feedforward neural network, a KNN, a convolutional neural network (convolutional neuron network, CNN), or the like provided in embodiments of this application.

When the data feature $Z_1$ extracted by the first transmit end and the data feature $Z_2$ extracted by the first transmit end are sent to the receive end through channel transmission, the following condition is met:

$$D_S(Z_1, \widehat{Z_1}) = e^{-\frac{\mathrm{Var}(Z_1)}{\mathrm{Var}(\widehat{Z_1} - Z_1)}} = e^{-\frac{\mathrm{Var}(Z_1)}{\mathrm{Var}(n)}},$$

where $Z_1$ represents a data feature before channel transmission, $\widehat{Z_1}$ represents a feature matrix after channel transmission, n represents Gaussian noise $n \sim \mathcal{N}(0, \sigma^2)$ whose standard deviation is $\sigma$, and $\mathrm{Var}(\cdot)$ represents a variance.

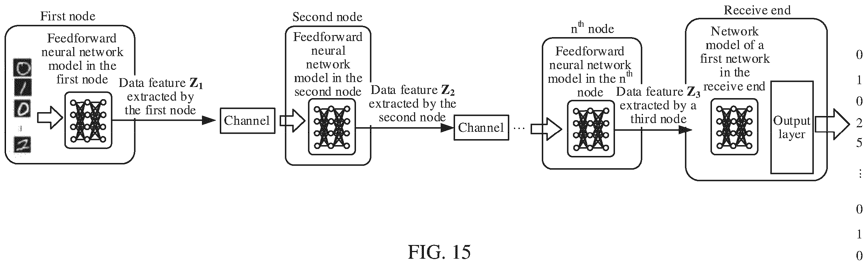

(2) As shown in FIG. 15, in the multi-node scenario, based on flexibility of a structure of a feedforward neural network and a clustering effect of features, it may be considered that transmission of data is deduced by using feedforward neural networks deployed on different network nodes, so that impact on a channel is reduced, and feature results of a plurality of receive ends can have high accuracy for use by the plurality of receive ends. As shown in FIG. 15, a first node extracts, through a feedforward neural network model obtained by using training data and category distribution information of the training data, a data feature $Z_1$ related to a classification task, and sends the data feature $Z_1$ extracted by the first node to a second node through channel transmission. Correspondingly, after receiving the data feature $Z_1$, the second node extracts, based on the data feature $Z_1$ and through a feedforward neural network model obtained by using category distribution information of training data, a data feature $Z_2$ related to the classification task, and by analogy, a data feature $Z_n$ related to the classification task extracted by a last node based on a data feature $Z_{n-1}$ extracted by a previous node and through a feedforward neural network model obtained by using category distribution information of training data is obtained, where n represents a quantity of nodes. Optionally, the data feature $Z_n$ may be input into a training readout layer in a first network, to obtain a final output result. The first network may be the feedforward neural network, a KNN, a CNN, or the like provided in embodiments of this application. In this scenario, data feature dimensions input and output by different communication nodes need to be kept the same.

In embodiments of this application, after training the feedforward neural network model according to the data processing method shown in FIG. 6, the training device further needs to evaluate, by using verification data, the model obtained through training, to ensure that the feedforward neural network model obtained through training has good generalization.

In an implementation, the training device separately trains a designed objective function in a gradient backhaul manner and a feedforward manner. Details are as follows.

(1) Back propagation

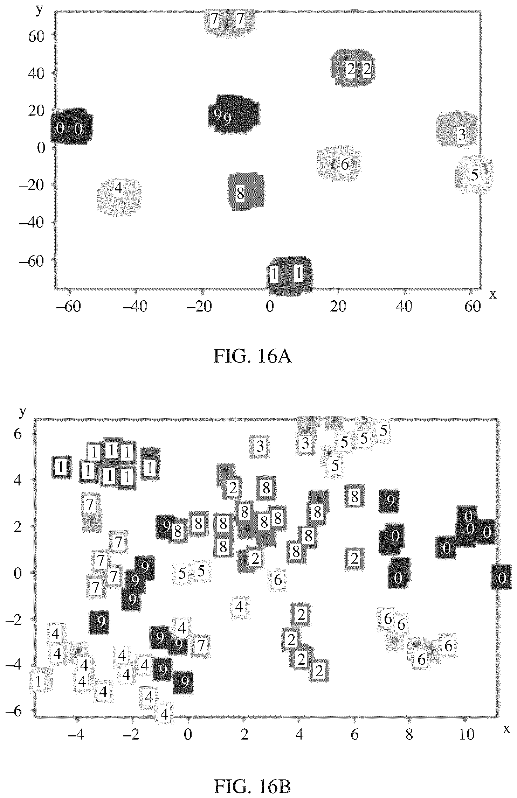

The training device uses Formula (1) as an objective function, where an MNIST handwritten font set is used as an example, and a used feature dimension is 128, obtains a result before a readout layer through training by using a Resnet18 network, and reduces the result before the readout layer to 2D visualized data by using a T-distributed stohastic neighbor embedding (t-distributed stohastic neighbor embedding, t-SNE) algorithm, which is specifically shown in FIG. 16A. The training device alternatively uses a mean square error (mean square error, MSE) as an objective function, and obtains a result before a readout layer through training, and reduces the result before the readout layer to 2D visualized data by using a t-SNE algorithm, which is specifically shown in FIG. 16B. It can be learned according to FIG. 16A and FIG. 16B that using Formula (1) as the objective function has a stronger constraint on classification of original data, thereby facilitating reduction of impact of noise on the classification of the original data during communication.

(2) Feedforward propagation

A multi-layer network structure is designed according to the foregoing feedforward neural network solution. A result of a k-nearest neighbor (k-nearest neighbor, KNN) classification algorithm of a final output feature is tested through an AWGN channel, which is specifically shown in Table 1. An MNIST handwritten font set is used as an example. A used feature dimension is the same as an input dimension and is 768, a learning rate of the feedforward neural network model $\lambda$ = 0.001, a signal-to-noise ratio SNR=25 db, $\eta$ = 500, $\eta$ is a hyperparameter for controlling estimation confidence when category labels are predicted, and a quantity of training samples m = 1000. It can be learned from Table 1 that, as a quantity of layers in a feedforward neural network increases, accuracy of an extracted data feature is higher. For example, when a quantity of intermediate layers in the feedforward neural network is 2, accuracy of a training set is 0.5247. When the quantity of intermediate layers in the feedforward neural network is 6, accuracy of the training set is 0.7135. The accuracy of the training set when the quantity of intermediate layers is 6 is higher than the accuracy of the training set when the quantity of intermediate layers is 2 by 0.1888.

**Table 1**

| Quantity of layers | 2 | 6 | 10 |
|---|---|---|---|
| Accuracy of a training set | 0.5247 | 0.7135 | 0.7365 |
| Accuracy of a test set | 0.5168 | 0.7012 | 0.7170 |

In the foregoing method, compared with a BP algorithm in which a transmit-end network needs to be updated through gradient backhaul, the method in embodiments of this application can reduce communication overheads caused by training and interaction, and improve training efficiency. A receive end needs to train only a readout layer network. In addition, a structure of the feedforward neural network is more flexible, and accuracy can be improved by increasing a quantity of network layers. In other words, when a value of l is larger, accuracy of the classification or clustering result of the to-be-processed data is higher, thereby avoiding a problem that retraining is needed due to different adaptations of different transmit/receive-end networks. In addition, the feedforward neural network model is interpretable, and a black box problem of a neural network can be interpreted. In addition, the output data feature of the to-be-processed data may be used as data preprocessing, and can be used for a subsequent readout layer operation.

The method in embodiments of this application is described in detail above. An apparatus in embodiments of this application is provided below.

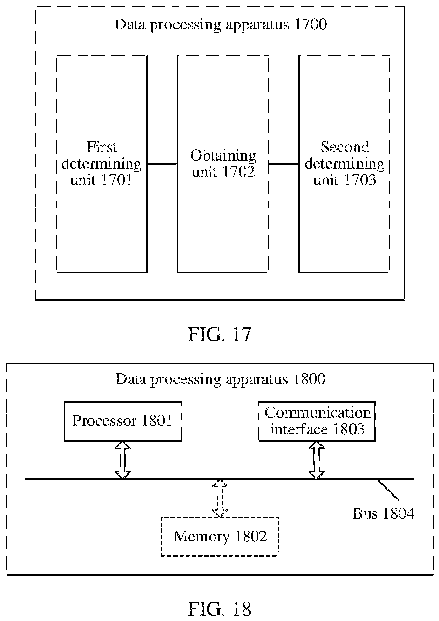

FIG. 17 is a diagram of a structure of a data processing apparatus 1700 according to an embodiment of this application. The data processing apparatus 1700 may include a first determining unit 1701, an obtaining unit 1702, and a second determining unit 1703. Detailed descriptions of the units are as follows.

The first determining unit 1701 is configured to determine a feedforward neural network model, where input information of an lth layer in the feedforward neural network model includes category distribution information of training data and a first data feature, output information of the lth layer includes a second data feature, the first data feature is an output of an (l-1)th layer, both the first data feature and the second data feature are classification or clustering information representing the training data, and l is a positive integer greater than 1.

The obtaining unit 1702 is configured to obtain to-be-processed data of unknown classification or clustering information.

The second determining unit 1703 is configured to input the to-be-processed data into the feedforward neural network model to determine a data feature of the to-be-processed data, where the data feature of the to-be-processed data is the classification or clustering information representing the to-be-processed data, and the data feature of the to-be-processed data is used to determine a classification or clustering result of the to-be-processed data.

In a possible implementation, a dimension of the data feature of the to-be-processed data is related to a data type of the to-be-processed data.

In another possible implementation, when l=2, and the first data feature is an output of a 1st layer, input information of the 1st layer includes the category distribution information of the training data and the training data, where the training data includes category labels, and the category distribution information of the training data is determined based on the category labels in the training data.

In another possible implementation, the first determining unit 1701 is specifically configured to obtain the first data feature $Z^{l-1}$; and determine network parameters of the lth layer based on the first data feature $Z^{l-1}$ and the category distribution information $\Pi_i$ of the training data, where the second data feature is determined based on the first data feature $Z^{l-1}$ and the network parameters of the lth layer.

In another possible implementation, the first determining unit 1701 is specifically configured to determine an objective function gradient expression based on the network parameters of the $l$th layer and the first data feature $Z^{l-1}$; and determine the second data feature $Z^l$ based on the first data feature $Z^{l-1}$, the category distribution information $\Pi_i$ of the training data, and the objective function gradient expression.

In another possible implementation, the first determining unit 1701 is specifically configured to determine, based on the first data feature $Z^{l-1}$ and the category distribution information $\Pi_i$ of the training data, a regularized autocorrelation matrix of data whose category label corresponds to each category in the training data; and determine the network parameters of the $l$th layer based on the regularized autocorrelation matrix of the data whose category label corresponds to each category in the training data.

In another possible implementation,

$$S_i = \frac{1}{m_i} Z^{l-1} \Pi_i (Z^{l-1})^T;$$

$$\widehat{S}_i = \epsilon I + S_i;$$

and

$$U_i^l = \sum_{j \neq i}^{K} \frac{\alpha_{i,j}}{m_i} \left( -\widehat{S}_i^{-1} \widehat{S}_j \widehat{S}_i^{-1} + \widehat{S}_j^{-1} \right),$$

where $m_i$ is a quantity of pieces of data whose category label corresponds to an $i$th category in m pieces of training data, $m = \sum_{i}^{K} m_i$, K is a quantity of all categories of category labels in the m pieces of training data, $\alpha_{i,j} = \frac{m_i + m_j}{m}$ is a weight parameter used to balance quantities of samples of the categories in the training data, $Z^{l-1}$ is the first data feature, $\Pi_i$ is the category distribution information of the training data, $S_i$ is an autocorrelation matrix of the data whose category label corresponds to the $i$th category in the training data, $\varepsilon$ is a regularization parameter, $\hat{S}_i$ is a regularized autocorrelation matrix of the data whose category label corresponds to the $i$th category in the training data, and $U_i^l$ is network parameters of the $i$th category of the $l$th layer.

In another possible implementation, $S_i = \frac{1}{m_i} Z^{l-1} \Pi_i (Z^{l-1})^T$;

$$\widehat{S}_i = \epsilon I + S_i;$$

and

$$A_i^l = \widehat{S}^{-1} - \widehat{S}_i^{-1},$$

where $m_i$ is a quantity of pieces of data whose category label corresponds to an $i$th category in m pieces of training data, $m = \sum_{i}^{K} m_i$, K is a quantity of all categories of category labels in the m pieces of training data, $Z^{l-1}$ is the first data feature, $\Pi_i$ is the category distribution information of the training data, $I$ is an identity matrix, $S_i$ is an autocorrelation matrix of the data whose category label corresponds to the $i$th category in the training data, $\varepsilon$ is a regularization parameter, $\hat{S}_i$ is a regularized autocorrelation matrix of the data whose category label corresponds to the $i$th category in the training data, $S$ is autocorrelation matrixes of data whose category labels correspond to all the categories in the training data, $\hat{S}$ is regularized autocorrelation matrixes of the data whose category labels correspond to all the categories in the training data, and $A_i^l$ is network parameters of the $i$th category of the $l$th layer.

In another possible implementation, the first determining unit 1701 is specifically configured to determine gradient parameters based on the category distribution information $\Pi_i$ of the training data; and determine the network parameters of the $l$th layer based on the first data feature $Z^{l-1}$ and the gradient parameters.

In another possible implementation,

$$G = [g_1, g_2, \ldots, g_i], g_i = \frac{1}{Tr(\boldsymbol{\Pi}_i)}\boldsymbol{\Pi}_i e;$$

$$H_i = \frac{1}{m_i}(I - g_i e^T)\boldsymbol{\Pi}_i(I - g_i e^T)^T;$$

and

$$C_i^1 = Z^{l-1}g_i$$

, where $Z^{l-1}$ satisfies an energy constraint: $Tr(Z^{l-1}(Z^{l-1})^T) = m(1 + \sigma^2 d)$, $\sigma$ is a Gaussian distribution variance, m is a quantity of samples of the training data, $d$ is a dimension of the training data, $Z^{l-1}$ is the first data feature, $e \in R^{m \times 1}$ is a column vector whose elements are all 1, $\boldsymbol{\Pi}_i$ is the category distribution information of the training data, $Tr()$ represents a trace operation, $I$ is an identity matrix, $m_i$ is a quantity of pieces of data whose category label corresponds to an $i^{th}$ category in the m pieces of training data, $m = \sum_i^K m_i$, K is a quantity of all categories of category labels in the m pieces of training data, $C_i^1$ is network parameters of the $i^{th}$ category of the $l^{th}$ layer, and $G$ and $H_i$ are the gradient parameters.

In another possible implementation, the second determining unit 1703 is specifically configured to determine, based on the to-be-processed data and the network parameters of the $l^{th}$ layer, category distribution information $\boldsymbol{\Pi}_i^l$ that corresponds to predicted category label and that is of the to-be-processed data; determine an objective function gradient expression based on the to-be-processed data and the category distribution information $\boldsymbol{\Pi}_i^l$ that corresponds to the predicted category labels and that is of the to-be-processed data; and determine the data feature of the to-be-processed data based on the to-be-processed data and the objective function gradient expression.

In another possible implementation, the second determining unit 1703 is specifically configured to determine projections of the predicted category labels in the to-be-processed data on a first category based on the to-be-processed data and the network parameters of the $l^{th}$ layer, where the first category is any one of a plurality of categories corresponding to the predicted category labels in the to-be-processed data; and determine, based on the projections of the to-be-processed data on the first category, the category distribution information that corresponds to the predicted category labels and that is of the to-be-processed data.

In another possible implementation,

$$p_i^l = U_i^l Z;$$

and

$$\boldsymbol{\Pi}_i^l = \frac{exp\left(-\eta\left\|p_i^l\right\|\right)}{\sum_i exp(-\eta\|p_i^l\|)} \in [0,1],$$

where $Z$ is the to-be-processed data, $U_i^l$ is network parameters of an $i^{th}$ category of the $l^{th}$ layer, $p_i^l$ is projections of the predicted category labels in the to-be-processed data on the $i^{th}$ category of the $l^{th}$ layer, $\boldsymbol{\Pi}_i^l$ is the category distribution information that corresponds to the predicted category labels and that is of the to-be-processed data, and $\eta$ is a hyperparameter for controlling estimation confidence.

In another possible implementation, the objective function gradient expression includes:

$$\frac{\partial L}{\partial Z} = \sum_{i=1}^K \sum_{j=i+1}^K \left(\frac{\alpha_{i,j}}{m_i}\left(-\widehat{S}_i^{-1}\widehat{S}_j\widehat{S}_i^{-1} + \widehat{S}_j^{-1}\right)Z\boldsymbol{\Pi}_i^l + \frac{\alpha_{i,j}}{m_j}\left(-\widehat{S}_j^{-1}\widehat{S}_i\widehat{S}_j^{-1} + \widehat{S}_i^{-1}\right)Z\boldsymbol{\Pi}_j^l\right) =$$

$$\sum_{i=1}^K \sum_{j\neq i}^K \frac{\alpha_{i,j}}{m_i}\left(-\widehat{S}_i^{-1}\widehat{S}_j\widehat{S}_i^{-1} + \widehat{S}_j^{-1}\right)Z\boldsymbol{\Pi}_i^l,$$

$m_i$ is a quantity of pieces of data whose predicted category label is the $i^{th}$ category in m pieces of to-be-processed data,

$m = \sum_i^K m_i$ , K is a quantity of all categories of predicted category labels in the m pieces of to-be-processed data,

$\alpha_{i,j} = \frac{m_i + m_j}{m}$ is a weight parameter used to balance quantities of samples of the predicted categories in the to-be-processed data, $Z$ is the to-be-processed data, $\Pi_i^l$ is the category distribution information that corresponds to the predicted category labels and that is of the to-be-processed data, $S_i$ is an autocorrelation matrix of the data whose predicted category label corresponds to the i$^{th}$ category in the to-be-processed data, and $\hat{S}_i$ is a regularized autocorrelation matrix of the data whose predicted category label corresponds to the i$^{th}$ category in the to-be-processed data.

In another possible implementation,

$$p_i^l = A_i^l Z;$$

and

$$\Pi_i^l = \frac{exp\left(-\eta\left\|p_i^l\right\|\right)}{\sum_i exp\left(-\eta\|p_i^l\|\right)} \in [0,1],$$

where $Z$ is the to-be-processed data, $A_i^l$ is network parameters of an i$^{th}$ category of the l$^{th}$ layer, $p_i^l$ is projections of the predicted category labels in the to-be-processed data on the i$^{th}$ category of the l$^{th}$ layer, $\Pi_i^l$ is the category distribution information that corresponds to the predicted category labels and that is of the to-be-processed data, and $\eta$ is a hyperparameter for controlling estimation confidence.

In another possible implementation, the objective function gradient expression includes:

$$\frac{\partial L}{\partial Z} = \sum_{k=1}^K \frac{\alpha_i}{m_i}\left(\hat{S}^{-1} - \hat{S}_i^{-1}\right)Z\Pi_i^l + \frac{\alpha_i}{m}\left(-\hat{S}^{-1}\hat{S}_i\hat{S}^{-1} + \hat{S}^{-1}\right)Z,$$

where $m_i$ is a quantity of pieces of data whose predicted category label is an i$^{th}$ category in m pieces of to-be-processed data, $\alpha_i = \frac{m_i}{m}$ , $\alpha_i$ is a weight parameter used to balance quantities of samples of predicted categories in the to-be-processed data, $Z$ is the to-be-processed data, $\Pi_i^l$ is the category distribution information that corresponds to the predicted category labels and that is of the to-be-processed data, $S_i$ is an autocorrelation matrix of the data whose predicted category label corresponds to the i$^{th}$ category in the to-be-processed data, $\hat{S}_i$ is a regularized autocorrelation matrix of the data whose predicted category label corresponds to the i$^{th}$ category in the to-be-processed data, $S$ is autocorrelation matrixes of data whose predicted category labels correspond to all the categories in the to-be-processed data, and $\hat{S}$ is regularized autocorrelation matrixes of the data whose predicted category labels correspond to all the categories in the to-be-processed data.

In another possible implementation, the category distribution information that corresponds to the predicted category labels and that is of the to-be-processed data includes one or more of the following: distance information, correlation information, differential information, or soft classification information.

In another possible implementation, $\Pi_i^l = \text{argmin dist}(Z, C_i^l)$ ; or

$$\Pi_i^l = argmin < Z, C_i^l >;$$

or

$$\Pi_i^l = \text{argmin dist}\left(Z^l, C_i^l\right) - \text{dist}\left(Z^{l-1}, C_i^{l-1}\right);$$

or

$$\Pi_i^l = \frac{\exp\left(\eta\, dist(\mathbf{Z}, \mathbf{c}_i^l)\right)}{\sum_i \exp(\eta\, dist(\mathbf{Z}, \mathbf{c}_i^l))},$$

where $\mathbf{Z}$ is the to-be-processed data, $\Pi_i^l$ is the category distribution information that corresponds to the predicted category labels and that is of the to-be-processed data, $\mathbf{c}_i^l$ is network parameters of an $i^{th}$ category of the $l^{th}$ layer, $\mathbf{Z}^l$ is a data feature of the to-be-processed data at the $l^{th}$ layer, $\mathbf{Z}^{l-1}$ is a data feature of the to-be-processed data at the $(1-1)^{th}$ layer, and < > represents an inner product.

In another possible implementation, the second determining unit 1703 is specifically configured to determine gradient parameters ($\mathbf{G}$ and $\mathbf{H}_i$) based on the category distribution information $\Pi_i^l$ that corresponds to the predicted category labels and that is of the to-be-processed data; and determine the objective function gradient expression based on the to-be-processed data and the gradient parameters.

In another possible implementation,

$$g_i = \frac{1}{Tr(\Pi_i^l)}\Pi_i^l e;$$

$$\mathbf{G} = [g_1, g_2, \ldots, g_i];$$

and

$$\mathbf{H}_i = \frac{1}{m_i}(\mathbf{I} - g_i e^T)\Pi_i^l(\mathbf{I} - g_i e^T)^T,$$

where $\Pi_i^l$ is the category distribution information that corresponds to the predicted category labels and that is of the to-be-processed data, $Tr()$ represents a trace operation, $I$ is an identity matrix, $m_i$ is a quantity of pieces of data of an $i^{th}$ category in m pieces of to-be-processed data, $m = \sum_i^K m_i$, K is a quantity of all categories of predicted category labels in the m pieces of to-be-processed data, and $\mathbf{G}$ and $\mathbf{H}_i$ represent the gradient parameters.

In another possible implementation, the objective function gradient expression includes:

$$\frac{\partial L}{\partial Z} = -\mathbf{Z}\mathbf{G}(\mathbf{G}^T\mathbf{Z}^T\mathbf{Z}\mathbf{G})^{-1}\mathbf{G}^T + \beta\sum_{k=1}^{K}\left(\frac{1}{\epsilon+\sigma^2}\mathbf{Z}\mathbf{H}_i - (\epsilon\mathbf{I} + \mathbf{Z}\mathbf{H}_i\mathbf{Z}^T)^{-1}\mathbf{Z}\mathbf{H}_i\right),$$

where $\mathbf{Z}$ is the to-be-processed data, $\sigma$ is a Gaussian distribution variance, $\varepsilon$ is a regularization parameter, $I$ is an identity matrix, $\mathbf{G}$ and $\mathbf{H}_i$ represent the gradient parameters, and $\beta$ represents a regularization parameter.

In another possible implementation,

$$\mathbf{Z}^l = \mathbf{Z}^{l-1} + \lambda\frac{\partial L}{\partial Z},$$

where $\mathbf{Z}^l$ is the data feature of the to-be-processed data, $\frac{\partial L}{\partial Z}$ is the objective function gradient expression, $\mathbf{Z}^{l-1}$ is the to-be-processed data, and $\mathbf{Z}^{l-1}$ is constrained in $(d-1)$-dimensional unit sphere space.

In another possible implementation, the data processing apparatus further includes an output unit. The output unit is configured to output the data feature of the to-be-processed data.

In another possible implementation, the to-be-processed data of the unknown classification or clustering information is a data feature of third data, the data feature of the third data is determined through another feed forward neural network, input information of an $l^{th}$ layer in the another feedforward neural network includes category distribution information of training data and a first data feature, output information of the $l^{th}$ layer includes a second data feature, the first data feature is an output of an $(1-1)^{th}$ layer, both the first data feature and the second data feature are classification or clustering information representing the training data, and 1 is a positive integer greater than 1.

It should be noted that, for implementation and beneficial effects of the units, refer to corresponding descriptions of the method embodiment shown in FIG. 6 or FIG. 10.

FIG. 18 shows a data processing apparatus 1800 according to an embodiment of this application. The data processing apparatus 1800 includes at least one processor 1801 and a communication interface 1803, and optionally, further includes a memory 1802. The processor 1801, the memory 1802, and the communication interface 1803 are connected to each other through a bus 1804.

The memory 1802 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1802 is configured to store a related computer program and data. The communication interface 1803 is configured to receive and send data.

The processor 1801 may be one or more central processing units (central processing units, CPUs). When the processor 1801 is one CPU, the CPU may be a single-core CPU or a multicore CPU.

The processor 1801 in the data processing apparatus 1800 is configured to read computer program code stored in the memory 1802, to perform the following operations:

determining a feedforward neural network model, where input information of an $l^{th}$ layer in the feedforward neural network model includes category distribution information of training data and a first data feature, output information of the $l^{th}$ layer includes a second data feature, the first data feature is an output of an $(l-1)^{th}$ layer, both the first data feature and the second data feature are classification or clustering information representing the training data, and l is a positive integer greater than 1;
obtaining to-be-processed data of unknown classification or clustering information; and
inputting the to-be-processed data into the feedforward neural network model to determine a data feature of the to-be-processed data, where the data feature of the to-be-processed data is the classification or clustering information representing the to-be-processed data, and the data feature of the to-be-processed data is used to determine a classification or clustering result of the to-be-processed data.

In a possible implementation, a dimension of the data feature of the to-be-processed data is related to a data type of the to-be-processed data.

In another possible implementation, when l=2, and the first data feature is an output of a $1^{st}$ layer, input information of the $1^{st}$ layer includes the category distribution information of the training data and the training data, where the training data includes category labels, and the category distribution information of the training data is determined based on the category labels in the training data.

In another possible implementation, the processor 1801 is configured to obtain the first data feature $Z^{l-1}$; and determine network parameters of the $l^{th}$ layer based on the first data feature $Z^{l-1}$ and the category distribution information $\Pi_i$ of the training data, where the second data feature is determined based on the first data feature $Z^{l-1}$ and the network parameters of the $l^{th}$ layer.

In another possible implementation, the processor 1801 is configured to determine an objective function gradient expression based on the network parameters of the $l^{th}$ layer and the first data feature $Z^{l-1}$; and determine the second data feature $Z^l$ based on the first data feature $Z^{l-1}$, the category distribution information $\Pi_i$ of the training data, and the objective function gradient expression.

In another possible implementation, the processor 1801 is configured to determine, based on the first data feature $Z^{l-1}$ and the category distribution information $\Pi_i$ of the training data, a regularized autocorrelation matrix of data whose category label corresponds to each category in the training data; and determine the network parameters of the $l^{th}$ layer based on the regularized autocorrelation matrix of the data whose category label corresponds to each category in the training data.

In another possible implementation,

$$S_i = \frac{1}{m_i} Z^{l-1} \Pi_i (Z^{l-1})^T;$$

$$\widehat{S}_i = \epsilon I + S_i;$$

and

$$U_i^l = \sum_{j \neq i}^{K} \frac{\alpha_{i,j}}{m_i} \left( -\widehat{S}_i^{-1} \widehat{S}_j \widehat{S}_i^{-1} + \widehat{S}_j^{-1} \right),$$

where $m_i$ is a quantity of pieces of data whose category label corresponds to an $i^{th}$ category in m pieces of training data, $m = \sum_i^K m_i$, K is a quantity of all categories of category labels in the m pieces of training data, $\alpha_{i,j} = \frac{m_i + m_j}{m}$ is a weight parameter used to balance quantities of samples of the categories in the training data, $\mathbf{Z}^{l-1}$ is the first data feature, $\Pi_i$ is the category distribution information of the training data, $\mathbf{S}_i$ is an autocorrelation matrix of the data whose category label corresponds to the $i^{th}$ category in the training data, $\varepsilon$ is a regularization parameter, $\hat{\mathbf{S}}_i$ is a regularized autocorrelation matrix of the data whose category label corresponds to the $i^{th}$ category in the training data, and $U_i^l$ is network parameters of the $i^{th}$ category of the $l^{th}$ layer.

In another possible implementation, $S_i = \frac{1}{m_i} Z^{l-1} \Pi_i (Z^{l-1})^T$ ;

$$\widehat{S}_i = \epsilon I + S_i;$$

and

$$A_i^l = \widehat{S}^{-1} - \widehat{S}_i^{-1},$$

where $m_i$ is a quantity of pieces of data whose category label corresponds to an $i^{th}$ category in m pieces of training data, $m = \sum_i^K m_i$, K is a quantity of all categories of category labels in the m pieces of training data, $\mathbf{Z}^{l-1}$ is the first data feature, $\Pi_i$ is the category distribution information of the training data, $I$ is an identity matrix, $\mathbf{S}_i$ is an autocorrelation matrix of the data whose category label corresponds to the $i^{th}$ category in the training data, $\varepsilon$ is a regularization parameter, $\hat{\mathbf{S}}_i$ is a regularized autocorrelation matrix of the data whose category label corresponds to the $i^{th}$ category in the training data, $\mathbf{S}$ is autocorrelation matrixes of data whose category labels correspond to all the categories in the training data, $\hat{\mathbf{S}}$ is regularized autocorrelation matrixes of the data whose category labels correspond to all the categories in the training data, and $A_i^l$ is network parameters of the $i^{th}$ category of the $l^{th}$ layer.

In another possible implementation, the processor 1801 is configured to determine gradient parameters based on the category distribution information $\Pi_i$ of the training data; and determine the network parameters of the $l^{th}$ layer based on the first data feature $\mathbf{Z}^{l-1}$ and the gradient parameters.

In another possible implementation,

$$G = [g_1, g_2, \dots, g_i], g_i = \frac{1}{Tr(\Pi_i)} \Pi_i e;$$

$$H_i = \frac{1}{m_i}(I - g_i e^T) \Pi_i (I - g_i e^T)^T;$$

and

$$C_i^l = Z^{l-1} g_i,$$

where $\mathbf{Z}^{l-1}$ satisfies an energy constraint: $Tr(\mathbf{Z}^{l-1}(\mathbf{Z}^{l-1})^T) = m(1 + \sigma^2 d)$, $\sigma$ is a Gaussian distribution variance, m is a quantity of samples of the training data, $d$ is a dimension of the training data, $\mathbf{Z}^{l-1}$ is the first data feature, $e \in \mathsf{R}^{m \times 1}$ is a column vector whose elements are all 1, $\Pi_i$ is the category distribution information of the training data, $Tr()$ represents a trace operation, $I$ is an identity matrix, $m_i$ is a quantity of pieces of data whose category label corresponds to an $i^{th}$ category in the m pieces of training data, $m = \sum_i^K m_i$, K is a quantity of all categories of category labels in the m pieces of training data, $C_i^l$ is network parameters of the $i^{th}$ category of the $l^{th}$ layer, and $G$ and $H_i$ are the gradient parameters.

In another possible implementation, the processor 1801 is configured to determine, based on the to-be-processed data and the network parameters of the $l^{th}$ layer, category distribution information $\Pi_i^l$ that corresponds to predicted category labels and that is of the to-be-processed data; determine an objective function gradient expression based on the to-be-processed data and the category distribution information $\Pi_i^l$ that corresponds to the predicted category labels and that is of the to-be-processed data; and determine the data feature of the to-be-processed data based on the to-be-processed data and the objective function gradient expression.

In another possible implementation, the processor 1801 is configured to determine projections of the predicted category labels in the to-be-processed data on a first category based on the to-be-processed data and the network parameters of the $\mathrm{l^{th}}$ layer, where the first category is any one of a plurality of categories corresponding to the predicted category labels in the to-be-processed data; and determine, based on the projections of the to-be-processed data on the first category, the category distribution information that corresponds to the predicted category labels and that is of the to-be-processed data.

In another possible implementation,

$$p_i^l = U_i^l Z;$$

and

$$\Pi_i^l = \frac{exp\left(-\eta\left\|p_i^l\right\|\right)}{\sum_i exp(-\eta\|p_i^l\|)} \in [0,1],$$

where $Z$ is the to-be-processed data, $U_i^l$ is network parameters of an $\mathrm{i^{th}}$ category of the $\mathrm{l^{th}}$ layer, $p_i^l$ is projections of the predicted category labels in the to-be-processed data on the $\mathrm{i^{th}}$ category of the $\mathrm{l^{th}}$ layer, $\Pi_i^l$ is the category distribution information that corresponds to the predicted category labels and that is of the to-be-processed data, and $\eta$ is a hyperparameter for controlling estimation confidence.

In another possible implementation, the objective function gradient expression includes:

$$\frac{\partial L}{\partial Z} = \sum_{i=1}^{K} \sum_{j=i+1}^{K} \left( \frac{\alpha_{i,j}}{m_i}\left(-\widehat{S}_i^{-1}\widehat{S}_j\widehat{S}_i^{-1} + \widehat{S}_j^{-1}\right)Z\Pi_i^l + \frac{\alpha_{i,j}}{m_j}\left(-\widehat{S}_j^{-1}\widehat{S}_i\widehat{S}_j^{-1} + \widehat{S}_i^{-1}\right)Z\Pi_j^l\right) =$$

$$\sum_{i=1}^{K} \sum_{j \neq i}^{K} \frac{\alpha_{i,j}}{m_i}\left(-\widehat{S}_i^{-1}\widehat{S}_j\widehat{S}_i^{-1} + \widehat{S}_j^{-1}\right)Z\Pi_i^l,$$

$m_i$ is a quantity of pieces of data whose predicted category label is the $\mathrm{i^{th}}$ category in m pieces of to-be-processed data, $m = \sum_i^K m_i$, K is a quantity of all categories of predicted category labels in the m pieces of to-be-processed data, $\alpha_{i,j} = \frac{m_i + m_j}{m}$ is a weight parameter used to balance quantities of samples of the predicted categories in the to-be-processed data, $Z$ is the to-be-processed data, $\Pi_i^l$ is the category distribution information that corresponds to the predicted category labels and that is of the to-be-processed data, $S_i$ is an autocorrelation matrix of the data whose predicted category label corresponds to the $\mathrm{i^{th}}$ category in the to-be-processed data, and $\hat{S}_i$ is a regularized autocorrelation matrix of the data whose predicted category label corresponds to the $\mathrm{i^{th}}$ category in the to-be-processed data.

In another possible implementation,

$$p_i^l = A_i^l Z;$$

and

$$\Pi_i^l = \frac{exp\left(-\eta\left\|p_i^l\right\|\right)}{\sum_i exp(-\eta\|p_i^l\|)} \in [0,1],$$

where $Z$ is the to-be-processed data, $A_i^l$ is network parameters of an $\mathrm{i^{th}}$ category of the $\mathrm{l^{th}}$ layer, $p_i^l$ is projections of the predicted category labels in the to-be-processed data on the $i^{th}$ category of the $l^{th}$ layer, $\Pi_i^l$ is the category distribution information that corresponds to the predicted category labels and that is of the to-be-processed data, and $\eta$ is a hyperparameter for controlling estimation confidence.

In another possible implementation, the objective function gradient expression includes:

$$\frac{\partial L}{\partial Z} = \sum_{k=1}^{K} \frac{\alpha_i}{m_i}\left(\widehat{S}^{-1} - \widehat{S}_i^{-1}\right)Z\Pi_i^l + \frac{\alpha_i}{m}\left(-\widehat{S}^{-1}\widehat{S}_i\widehat{S}^{-1} + \widehat{S}^{-1}\right)Z,$$

where $m_i$ is a quantity of pieces of data whose predicted category label is an $i^{th}$ category in m pieces of to-be-processed data, $\alpha_i = \dfrac{m_i}{m}$, $\alpha_i$ is a weight parameter used to balance quantities of samples of predicted categories in the to-be-processed data, $Z$ is the to-be-processed data, $\Pi_i^l$ is the category distribution information that corresponds to the predicted category labels and that is of the to-be-processed data, $S_i$ is an autocorrelation matrix of the data whose predicted category label corresponds to the $i^{th}$ category in the to-be-processed data, $\hat{S}_i$ is a regularized autocorrelation matrix of the data whose predicted category label corresponds to the $i^{th}$ category in the to-be-processed data, $S$ is autocorrelation matrixes of data whose predicted category labels correspond to all the categories in the to-be-processed data, and $\hat{S}$ is regularized autocorrelation matrixes of the data whose predicted category labels correspond to all the categories in the to-be-processed data.

In another possible implementation, the category distribution information that corresponds to the predicted category labels and that is of the to-be-processed data includes one or more of the following: distance information, correlation information, differential information, or soft classification information.

In another possible implementation, $\Pi_i^l = \text{argmin dist}(Z, C_i^l)$; or

$$\Pi_i^l = arg\text{min} < Z, C_i^l >;$$

or

$$\Pi_i^l = \text{argmin dist}\left(Z^l, C_i^l\right) - \text{dist}\left(Z^{l-1}, C_i^{l-1}\right);$$

or

$$\Pi_i^l = \frac{\exp\left(\eta dist(Z, C_i^l)\right)}{\sum_i \exp(\eta dist(Z, C_i^l))},$$

where $Z$ is the to-be-processed data, $\Pi_i^l$ is the category distribution information that corresponds to the predicted category labels and that is of the to-be-processed data, $C_i^l$ is network parameters of an $i^{th}$ category of the $l^{th}$ layer, $Z^l$ is a data feature of the to-be-processed data at the $l^{th}$ layer, $Z^{l-1}$ is a data feature of the to-be-processed data at the $(1-1)^{th}$ layer, and < > represents an inner product.

In another possible implementation, the processor 1801 is configured to determine gradient parameters (*G* and *H*$_i$) based on the category distribution information $\Pi_i^l$ that corresponds to the predicted category labels and that is of the to-be-processed data; and determine the objective function gradient expression based on the to-be-processed data and the gradient parameters.

In another possible implementation,

$$g_i = \frac{1}{Tr(\Pi_i^l)}\Pi_i^l e;$$

$$G = [g_1, g_2, \dots, g_i];$$

and

$$H_i = \frac{1}{m_i}(I - g_i e^T)\Pi_i^l(I - g_i e^T)^T,$$

where $\Pi_i^l$ is the category distribution information that corresponds to the predicted category labels and that is of the to-be-processed data, $Tr()$ represents a trace operation, $I$ is an identity matrix, $m_i$ is a quantity of pieces of data of an $i^{th}$ category in m pieces of to-be-processed data, $m = \sum_i^K m_i$, K is a quantity of all categories of predicted category labels in the m pieces of to-be-processed data, and $G$ and $H_i$ represent the gradient parameters.

In another possible implementation, the objective function gradient expression includes:

$$\frac{\partial L}{\partial Z} = -ZG(G^T Z^T ZG)^{-1}G^T + \beta \sum_{k=1}^K \left( \frac{1}{\epsilon+\sigma^2} ZH_i - (\epsilon I + ZH_i Z^T)^{-1} ZH_i \right),$$

where $Z$ is the to-be-processed data, $\sigma$ is a Gaussian distribution variance, $\varepsilon$ is a regularization parameter, $I$ is an identity matrix, $G$ and $H_i$ represent the gradient parameters, and $\beta$ represents a regularization parameter.

In another possible implementation,

$$Z^l = Z^{l-1} + \lambda \frac{\partial L}{\partial Z},$$

where $Z^l$ is the data feature of the to-be-processed data, $\frac{\partial L}{\partial Z}$ is the objective function gradient expression, $Z^{l-1}$ is the to-be-processed data, and $Z^{l-1}$ is constrained in (d-1)-dimensional unit sphere space.

In another possible implementation, the processor 1801 is configured to output the data feature of the to-be-processed data.

In another possible implementation, the to-be-processed data of the unknown classification or clustering information is a data feature of third data, the data feature of the third data is determined through another feed forward neural network, input information of an l$^{th}$ layer in the another feedforward neural network includes category distribution information of training data and a first data feature, output information of the l$^{th}$ layer includes a second data feature, the first data feature is an output of an (1-1)$^{th}$ layer, both the first data feature and the second data feature are classification or clustering information representing the training data, and l is a positive integer greater than 1.

It should be noted that, for implementation and beneficial effects of the operations, refer to corresponding descriptions of the method embodiment shown in FIG. 6 or FIG. 10.

It may be understood that the processor in embodiments of this application may be a central processing unit (Central Processing Unit, CPU), or may be another general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in a base station or a terminal. Certainly, the processor and the storage medium may alternatively exist in a base station or a terminal as discrete components.

All or some of the foregoing embodiments may be implemented by using software, hardware, firmware, or any combination thereof. When the software is used to implement embodiments, all or a part of embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

In the descriptions of this application, terms such as "first", "second", "S601", or "S602" are merely used for distinguishing between descriptions and for ease of context. Different sequence numbers have no specific technical meaning, and cannot be understood as an indication or implication of relative importance, or an indication or implication of an execution sequence of operations. The execution sequence of each process should be determined based on functions and internal logic of the processes.

The term "and/or" in this application describes only an association relationship for associated objects, and indicates that three relationships may exist. For example, "A and/or B" may indicate the following three cases: Only A exists; both A and B exist; or only B exists. A and B may be singular or plural. In addition, the character "/" in this specification indicates an "or" relationship between the associated objects.

In this application, "transmission" may include the following three cases: data sending, data receiving, or data sending and data receiving. In this application, "data" may include service data and/or signaling data.

In this application, the terms "include" or "have" and any variation thereof are intended to cover non-exclusive inclusion. For example, a process/method that includes a series of steps, or a system/product/device that includes a series of units is not necessarily limited to those expressly listed steps or units, but may include other steps or units not explicitly listed or inherent to these processes/methods/products/devices.

In addition, in descriptions of this application, unless otherwise specified, a quantity of nouns indicates "a singular noun or a plural noun", that is, "one or more". "At least one" indicates one or more. "At least one of the following: A, B, and C is included" may indicate that A is included, B is included, C is included, A and B are included, A and C are included, B and C are included, or A, B and C are included. A, B, and C may be one or more. A, B, and C may be singular or plural.

**Claims**

1. A data processing method, comprising:

   determining a feedforward neural network model, wherein input information of an $I^{th}$ layer in the feedforward neural network model comprises category distribution information of training data and a first data feature, output information of the $I^{th}$ layer comprises a second data feature, the first data feature is an output of an $(1-1)^{th}$ layer, both the first data feature and the second data feature are classification or clustering information representing the training data, and I is a positive integer greater than 1;
   obtaining to-be-processed data of unknown classification or clustering information; and
   inputting the to-be-processed data into the feedforward neural network model to determine a data feature of the to-be-processed data, wherein the data feature of the to-be-processed data is the classification or clustering information representing the to-be-processed data, and the data feature of the to-be-processed data is used to determine a classification or clustering result of the to-be-processed data.

2. The method according to claim 1, wherein
   a dimension of the data feature of the to-be-processed data is related to a data type of the to-be-processed data.

3. The method according to claim 1 or 2, wherein
   when 1=2, and the first data feature is an output of a $1^{st}$ layer, input information of the $1^{st}$ layer comprises the category distribution information of the training data and the training data, wherein the training data comprises category labels, and the category distribution information of the training data is determined based on the category labels in the training data.

4. The method according to any one of claims 1 to 3, wherein the determining a feedforward neural network model comprises:

obtaining the first data feature $\boldsymbol{Z}^{l-1}$; and
determining network parameters of the $l^{th}$ layer based on the first data feature $\boldsymbol{Z}^{l-1}$ and the category distribution information $\Pi_i$ of the training data, wherein the second data feature is determined based on the first data feature $\boldsymbol{Z}^{l-1}$ and the network parameters of the $l^{th}$ layer.

5. The method according to claim 4, wherein that the second data feature is determined based on the first data feature $\boldsymbol{Z}^{l-1}$ and the network parameters of the $l^{th}$ layer comprises:

determining an objective function gradient expression based on the network parameters of the $l^{th}$ layer and the first data feature $\boldsymbol{Z}^{l-1}$; and
determining the second data feature $\boldsymbol{Z}^l$ based on the first data feature $\boldsymbol{Z}^{l-1}$, the category distribution information $\Pi_i$ of the training data, and the objective function gradient expression.

6. The method according to claim 4 or 5, wherein the determining network parameters of the $l^{th}$ layer based on the first data feature $\boldsymbol{Z}^{l-1}$ and the category distribution information $\Pi_i$ of the training data comprises:

determining, based on the first data feature $\boldsymbol{Z}^{l-1}$ and the category distribution information $\Pi_i$ of the training data, a regularized autocorrelation matrix of data whose category label corresponds to each category in the training data; and
determining the network parameters of the $l^{th}$ layer based on the regularized autocorrelation matrix of the data whose category label corresponds to each category in the training data.

7. The method according to claim 6, wherein

$$S_i = \frac{1}{m_i} Z^{l-1} \Pi_i (Z^{l-1})^T;$$

$$\widehat{S}_i = \epsilon I + S_i;$$

and

$$U_i^l = \sum_{j \neq i}^{K} \frac{\alpha_{i,j}}{m_i} \left( -\widehat{S}_i^{-1} \widehat{S}_j \widehat{S}_i^{-1} + \widehat{S}_j^{-1} \right),$$

wherein $m_i$ is a quantity of pieces of data whose category label corresponds to an $i^{th}$ category in m pieces of training data, $m = \sum_i^K m_i$, K is a quantity of all categories of category labels in the m pieces of training data, $\alpha_{i,j} = \frac{m_i + m_j}{m}$ is a weight parameter used to balance quantities of samples of the categories in the training data, $\boldsymbol{Z}^{l-1}$ is the first data feature, $\Pi_i$ is the category distribution information of the training data, $\boldsymbol{S}_i$ is an autocorrelation matrix of the data whose category label corresponds to the $i^{th}$ category in the training data, $\varepsilon$ is a regularization parameter, $\hat{\boldsymbol{S}}_i$ is a regularized autocorrelation matrix of the data whose category label corresponds to the $i^{th}$ category in the training data, and $U_i^l$ is network parameters of the $i^{th}$ category of the $l^{th}$ layer.

8. The method according to claim 6, wherein

$$S_i = \frac{1}{m_i} Z^{l-1} \Pi_i (Z^{l-1})^T;$$

$$\widehat{S}_i = \epsilon I + S_i;$$

and

$$A_i^l = \widehat{S}^{-1} - \widehat{S}_i^{-1},$$

wherein $m_i$ is a quantity of pieces of data whose category label corresponds to an $i^{th}$ category in m pieces of training data, $m = \sum_i^K m_i$, K is a quantity of all categories of category labels in the m pieces of training data, $\mathbf{Z}^{l-1}$ is the first data feature, $\Pi_i$ is the category distribution information of the training data, $\mathbf{I}$ is an identity matrix, $\mathbf{S}_i$ is an autocorrelation matrix of the data whose category label corresponds to the $i^{th}$ category in the training data, $\varepsilon$ is a regularization parameter, $\hat{\mathbf{S}}_i$ is a regularized autocorrelation matrix of the data whose category label corresponds to the $i^{th}$ category in the training data, $\mathbf{S}$ is autocorrelation matrixes of data whose category labels correspond to all the categories in the training data, $\hat{\mathbf{S}}$ is regularized autocorrelation matrixes of the data whose category labels correspond to all the categories in the training data, and $A_i^l$ is network parameters of the $i^{th}$ category of the $l^{th}$ layer.

9.  The method according to claim 4 or 5, wherein the determining network parameters of the $l^{th}$ layer based on the first data feature $\mathbf{Z}^{l-1}$ and the category distribution information $\Pi_i$ of the training data comprises:

    determining gradient parameters based on the category distribution information $\Pi_i$ of the training data; and determining the network parameters of the $l^{th}$ layer based on the first data feature $\mathbf{Z}^{l-1}$ and the gradient parameters.

10. The method according to claim 9, wherein

$$G = [g_1, g_2, \dots, g_i], g_i = \frac{1}{Tr(\Pi_i)}\Pi_i e;$$

$$H_i = \frac{1}{m_i}(I - g_i e^T)\Pi_i(I - g_i e^T)^T;$$

and

$$C_i^l = \mathbf{Z}^{l-1}g_i,$$

wherein $\mathbf{Z}^{l-1}$ satisfies an energy constraint: $Tr(\mathbf{Z}^{l-1}(\mathbf{Z}^{l-1})^T) = m(1 + \sigma^2 d)$, $\sigma$ is a Gaussian distribution variance, m is a quantity of samples of the training data, d is a dimension of the training data, $\mathbf{Z}^{l-1}$ is the first data feature, $e \in \mathrm{R}^{m \times 1}$ is a column vector whose elements are all 1, $\Pi_i$ is the category distribution information of the training data, $Tr()$ represents a trace operation, $\mathbf{I}$ is an identity matrix, $m_i$ is a quantity of pieces of data whose category label corresponds to an $i^{th}$ category in the m pieces of training data, $m = \sum_i^K m_i$, K is a quantity of all categories of category labels in the m pieces of training data, $C_i^l$ is network parameters of the $i^{th}$ category of the $l^{th}$ layer, and $G$ and $H_i$ are the gradient parameters.

11. The method according to claim 4, wherein the inputting the to-be-processed data into the feedforward neural network model to determine a data feature of the to-be-processed data comprises:

    determining, based on the to-be-processed data and the network parameters of the $l^{th}$ layer, category distribution information $\Pi_i^l$ that corresponds to predicted category labels and that is of the to-be-processed data; determining an objective function gradient expression based on the to-be-processed data and the category distribution information $\Pi_i^l$ that corresponds to the predicted category labels and that is of the to-be-processed data; and determining the data feature of the to-be-processed data based on the to-be-processed data and the objective function gradient expression.

12. The method according to claim 11, wherein the determining, based on the to-be-processed data and the network parameters of the l$^{th}$ layer, category distribution information that corresponds to predicted category labels and that is of the to-be-processed data comprises:

    determining projections of the predicted category labels in the to-be-processed data on a first category based on the to-be-processed data and the network parameters of the l$^{th}$ layer, wherein the first category is any one of a plurality of categories corresponding to the predicted category labels in the to-be-processed data; and determining, based on the projections of the to-be-processed data on the first category, the category distribution information that corresponds to the predicted category labels and that is of the to-be-processed data.

13. The method according to claim 12, wherein

$$p_i^l = U_i^1 Z;$$

and

$$\Pi_i^l = \frac{exp\left(-\eta \left\| p_i^l \right\|\right)}{\sum_i exp\left(-\eta \|p_i^l\|\right)} \in [0,1],$$

wherein $Z$ is the to-be-processed data, $U_i^1$ is network parameters of an i$^{th}$ category of the l$^{th}$ layer, $p_i^l$ is projections of the predicted category labels in the to-be-processed data on the i$^{th}$ category of the l$^{th}$ layer, $\Pi_i^l$ is the category distribution information that corresponds to the predicted category labels and that is of the to-be-processed data, and $\eta$ is a hyperparameter for controlling estimation confidence.

14. The method according to any one of claims 11 to 13, wherein the objective function gradient expression comprises:

$$\frac{\partial L}{\partial Z} = \sum_{i=1}^{K} \sum_{j=i+1}^{K} \left( \frac{\alpha_{i,j}}{m_i} \left( -\widehat{S}_i^{-1} \widehat{S}_j \widehat{S}_i^{-1} + \widehat{S}_j^{-1} \right) Z \Pi_i^l + \frac{\alpha_{i,j}}{m_j} \left( -\widehat{S}_j^{-1} \widehat{S}_i \widehat{S}_j^{-1} + \widehat{S}_i^{-1} \right) Z \Pi_j^l \right) =$$

$$\sum_{i=1}^{K} \sum_{j \neq i}^{K} \frac{\alpha_{i,j}}{m_i} \left( -\widehat{S}_i^{-1} \widehat{S}_j \widehat{S}_i^{-1} + \widehat{S}_j^{-1} \right) Z \Pi_i^l,$$

$m_i$ is a quantity of pieces of data whose predicted category label is the i$^{th}$ category in m pieces of to-be-processed data, $m = \sum_i^K m_i$, K is a quantity of all categories of predicted category labels in the m pieces of to-be-processed data, $\alpha_{i,j} = \frac{m_i + m_j}{m}$ is a weight parameter used to balance quantities of samples of the predicted categories in the to-be-processed data, $Z$ is the to-be-processed data, $\Pi_i^l$ is the category distribution information that corresponds to the predicted category labels and that is of the to-be-processed data, $S_i$ is an autocorrelation matrix of the data whose predicted category label corresponds to the i$^{th}$ category in the to-be-processed data, and $\hat{S}_i$ is a regularized autocorrelation matrix of the data whose predicted category label corresponds to the i$^{th}$ category in the to-be-processed data.

15. The method according to claim 12, wherein

$$p_i^l = A_i^1 Z;$$

and

$$\Pi_i^l = \frac{exp\left(-\eta \left\| p_i^l \right\|\right)}{\sum_i exp\left(-\eta \|p_i^l\|\right)} \in [0,1],$$

wherein $Z$ is the to-be-processed data, $A_i^l$ is network parameters of an $i^{th}$ category of the $l^{th}$ layer, $p_i^l$ is projections of the predicted category labels in the to-be-processed data on the $i^{th}$ category of the $l^{th}$ layer, $\Pi_i^l$ is the category distribution information that corresponds to the predicted category labels and that is of the to-be-processed data, and $\eta$ is a hyperparameter for controlling estimation confidence.

16. The method according to claim 11 or 12, wherein the objective function gradient expression comprises:

$$\frac{\partial L}{\partial Z} = \sum_{k=1}^{K} \frac{\alpha_i}{m_i} \left( \widehat{S}^{-1} - \widehat{S}_i^{-1} \right) Z \Pi_i^l + \frac{\alpha_i}{m} \left( -\widehat{S}^{-1} \widehat{S}_i \widehat{S}^{-1} + \widehat{S}^{-1} \right) Z,$$

wherein $m_i$ is a quantity of pieces of data whose predicted category label is an $i^{th}$ category in m pieces of to-be-processed data, $\alpha_i = \frac{m_i}{m}$, $\alpha_i$ is a weight parameter used to balance quantities of samples of predicted categories in the to-be-processed data, K is a quantity of all the categories of predicted category labels in the m pieces of to-be-processed data, $Z$ is the to-be-processed data, $\Pi_i^l$ is the category distribution information that corresponds to the predicted category labels and that is of the to-be-processed data, $S_i$ is an autocorrelation matrix of the data whose predicted category label corresponds to the $i^{th}$ category in the to-be-processed data, $\hat{S}_i$ is a regularized autocorrelation matrix of the data whose predicted category label corresponds to the $i^{th}$ category in the to-be-processed data, $S$ is autocorrelation matrixes of data whose predicted category labels correspond to all the categories in the to-be-processed data, and $\hat{S}$ is regularized autocorrelation matrixes of the data whose predicted category labels correspond to all the categories in the to-be-processed data.

17. The method according to claim 11, wherein the category distribution information that corresponds to the predicted category labels and that is of the to-be-processed data comprises one or more of the following: distance information, correlation information, differential information, or soft classification information.

18. The method according to claim 17, wherein the determining, based on the to-be-processed data and the network parameters of the $l^{th}$ layer, category distribution information that corresponds to predicted category labels and that is of the to-be-processed data comprises:

$$\Pi_i^l = \operatorname{argmin} \operatorname{dist}(Z, C_i^l);$$

or

$$\Pi_i^l = \operatorname{argmin} < Z, C_i^l >;$$

or

$$\Pi_i^l = \operatorname{argmin} \operatorname{dist}\left(Z^l, C_i^l\right) - \operatorname{dist}\left(Z^{l-1}, C_i^{l-1}\right);$$

or

$$\Pi_i^l = \frac{\exp\left(\eta dist\left(Z, C_i^l\right)\right)}{\sum_i \exp(\eta dist(Z, C_i^l))},$$

wherein $Z$ is the to-be-processed data, $\Pi_i^l$ is the category distribution information that corresponds to the predicted category labels and that is of the to-be-processed data, $C_i^l$ is network parameters of an $i^{th}$ category of the $l^{th}$ layer, $Z^l$ is a data feature of the to-be-processed data at the $l^{th}$ layer, $Z^{l-1}$ is a data feature of the to-be-processed data at the (1-1)th layer, and < > represents an inner product.

19. The method according to claim 11, wherein the determining an objective function gradient expression based on the to-be-processed data and the category distribution information that corresponds to the predicted category labels and that is of the to-be-processed data comprises:

determining gradient parameters (*G* and *H$_i$*) based on the category distribution information $\Pi_i^l$ that corresponds to the predicted category labels and that is of the to-be-processed data; and
determining the objective function gradient expression based on the to-be-processed data and the gradient parameters.

20. The method according to claim 19, wherein the determining gradient parameters based on the category distribution information $\Pi_i^l$ that corresponds to the predicted category labels and that is of the to-be-processed data comprises:

$$g_i = \frac{1}{Tr(\Pi_i^l)}\Pi_i^l e;$$

$$G = [g_1, g_2, \dots, g_i];$$

and

$$H_i = \frac{1}{m_i}(I - g_i e^T)\Pi_i^l(I - g_i e^T)^T,$$

wherein $\Pi_i^l$ is the category distribution information that corresponds to the predicted category labels and that is of the to-be-processed data, *Tr*() represents a trace operation, *I* is an identity matrix, $m_i$ is a quantity of pieces of data of an i$^{th}$ category in m pieces of to-be-processed data, $m = \sum_i^K m_i$ , K is a quantity of all categories of predicted category labels in the m pieces of to-be-processed data, and *G* and *H$_i$* represent the gradient parameters.

21. The method according to claim 20, wherein the objective function gradient expression comprises:

$$\frac{\partial L}{\partial Z} = -ZG(G^T Z^T Z G)^{-1}G^T + \beta \sum_{k=1}^K \left(\frac{1}{\epsilon+\sigma^2}ZH_i - (\epsilon I + ZH_i Z^T)^{-1}ZH_i\right),$$

wherein *Z* is the to-be-processed data, $\sigma$ is a Gaussian distribution variance, $\varepsilon$ is a regularization parameter, *I* is an identity matrix, *G* and *H$_i$* represent the gradient parameters, and $\beta$ represents a regularization parameter.

22. The method according to any one of claims 1 to 21, wherein the determining the data feature of the to-be-processed data based on the to-be-processed data and the objective function gradient expression comprises:

$$Z^l = Z^{l-1} + \lambda\frac{\partial L}{\partial Z}, \; Z^l \in \mathbb{S}^{d-1},$$

wherein *Z$^l$* is the data feature of the to-be-processed data, $\frac{\partial L}{\partial Z}$ is the objective function gradient expression, *Z$^{l-1}$* is the to-be-processed data, and *Z$^{l-1}$* is constrained in (d-1)-dimensional unit sphere space.

23. The method according to any one of claims 1 to 22, wherein the method further comprises: outputting the data feature of the to-be-processed data.

24. The method according to any one of claims 1 to 23, wherein the to-be-processed data of the unknown classification or clustering information is a data feature of third data, the data feature of the third data is determined through another feedforward neural network, input information of an $l^{th}$ layer in the another feedforward neural network comprises category distribution information of training data and a first data feature, output information of the $l^{th}$ layer comprises a second data feature, the first data feature is an output of an $(1\text{-}1)^{th}$ layer, both the first data feature and the second data feature are classification or clustering information representing the training data, and l is a positive integer greater than 1.

25. A data processing apparatus, comprising:

    a first determining unit, configured to determine a feedforward neural network model, wherein input information of an $l^{th}$ layer in the feedforward neural network model comprises category distribution information of training data and a first data feature, output information of the $l^{th}$ layer comprises a second data feature, the first data feature is an output of an $(1\text{-}1)^{th}$ layer, both the first data feature and the second data feature are classification or clustering information representing the training data, and l is a positive integer greater than 1;

    an obtaining unit, configured to obtain to-be-processed data of unknown classification or clustering information; and

    a second determining unit, configured to input the to-be-processed data into the feedforward neural network model to determine a data feature of the to-be-processed data, wherein the data feature of the to-be-processed data is the classification or clustering information representing the to-be-processed data, and the data feature of the to-be-processed data is used to determine a classification or clustering result of the to-be-processed data.

26. The apparatus according to claim 25, wherein a dimension of the data feature of the to-be-processed data is related to a data type of the to-be-processed data.

27. The apparatus according to claim 25 or 26, wherein

when 1=2, and the first data feature is an output of a $1^{st}$ layer, input information of the $1^{st}$ layer comprises the category distribution information of the training data and the training data, wherein the training data comprises category labels, and the category distribution information of the training data is determined based on the category labels in the training data.

28. The apparatus according to any one of claims 25 to 27, wherein the first determining unit is specifically configured to:

    obtain the first data feature $\boldsymbol{Z}^{l\text{-}1}$; and

    determine network parameters of the $l^{th}$ layer based on the first data feature $\boldsymbol{Z}^{l\text{-}1}$ and the category distribution information $\boldsymbol{\Pi}_i$ of the training data, wherein the second data feature is determined based on the first data feature $\boldsymbol{Z}^{l\text{-}1}$ and the network parameters of the $l^{th}$ layer.

29. The apparatus according to claim 28, wherein the first determining unit is specifically configured to:

    determine an objective function gradient expression based on the network parameters of the $l^{th}$ layer and the first data feature $\boldsymbol{Z}^{l\text{-}1}$; and

    determine the second data feature $\boldsymbol{Z}^{l}$ based on the first data feature $\boldsymbol{Z}^{l\text{-}1}$, the category distribution information $\boldsymbol{\Pi}_i$ of the training data, and the objective function gradient expression.

30. The apparatus according to claim 28 or 29, wherein the first determining unit is specifically configured to:

    determine, based on the first data feature $\boldsymbol{Z}^{l\text{-}1}$ and the category distribution information $\boldsymbol{\Pi}_i$ of the training data, a regularized autocorrelation matrix of data whose category label corresponds to each category in the training data; and

    determine the network parameters of the $l^{th}$ layer based on the regularized autocorrelation matrix of the data whose category label corresponds to each category in the training data.

31. The apparatus according to claim 30, wherein

$$S_i = \frac{1}{m_i} Z^{l-1} \boldsymbol{\Pi}_i (Z^{l-1})^{T};$$

$$\widehat{S}_i = \epsilon I + S_i;$$

and

$$U_i^l = \sum_{j \neq i}^K \frac{\alpha_{i,j}}{m_i}\left(-\widehat{S}_i^{-1}\widehat{S}_j\widehat{S}_i^{-1} + \widehat{S}_j^{-1}\right),$$

wherein $m_i$ is a quantity of pieces of data whose category label corresponds to an $i^{th}$ category in m pieces of training data, $m = \sum_i^K m_i$, K is a quantity of all categories of category labels in the m pieces of training data, $\alpha_{i,j} = \frac{m_i + m_j}{m}$ is a weight parameter used to balance quantities of samples of the categories in the training data, $Z^{l-1}$ is the first data feature, $\Pi_i$ is the category distribution information of the training data, $S_i$ is an autocorrelation matrix of the data whose category label corresponds to the $i^{th}$ category in the training data, $\varepsilon$ is a regularization parameter, $\hat{S}_i$ is a regularized autocorrelation matrix of the data whose category label corresponds to the $i^{th}$ category in the training data, and $U_i^l$ is network parameters of the $i^{th}$ category of the $l^{th}$ layer.

32. The apparatus according to claim 30, wherein

$$S_i = \frac{1}{m_i} Z^{l-1} \Pi_i (Z^{l-1})^T;$$

$$\widehat{S}_i = \epsilon I + S_i;$$

and

$$A_i^l = \widehat{S}^{-1} - \widehat{S}_i^{-1},$$

wherein $m_i$ is a quantity of pieces of data whose category label corresponds to an $i^{th}$ category in m pieces of training data, $m = \sum_i^K m_i$, K is a quantity of all categories of category labels in the m pieces of training data, $Z^{l-1}$ is the first data feature, $\Pi_i$ is the category distribution information of the training data, $I$ is an identity matrix, $S_i$ is an autocorrelation matrix of the data whose category label corresponds to the $i^{th}$ category in the training data, $\varepsilon$ is a regularization parameter, $\hat{S}_i$ is a regularized autocorrelation matrix of the data whose category label corresponds to the $i^{th}$ category in the training data, $S$ is autocorrelation matrixes of data whose category labels correspond to all the categories in the training data, $\hat{S}$ is regularized autocorrelation matrixes of the data whose category labels correspond to all the categories in the training data, and $A_i^l$ is network parameters of the $i^{th}$ category of the $l^{th}$ layer.

33. The apparatus according to claim 28 or 29, wherein the first determining unit is specifically configured to:

determine gradient parameters based on the category distribution information $\Pi_i$ of the training data; and
determine the network parameters of the $l^{th}$ layer based on the first data feature $Z^{l-1}$ and the gradient parameters.

34. The apparatus according to claim 33, wherein

$$G = [g_1, g_2, \ldots, g_i], g_i = \frac{1}{Tr(\Pi_i)}\Pi_i e;$$

$$H_i = \frac{1}{m_i}(I - g_i e^T)\Pi_i(I - g_i e^T)^T;$$

and

$$C_i^l = Z^{l-1} g_i$$

wherein $Z^{l-1}$ satisfies an energy constraint: $Tr(Z^{l-1}(Z^{l-1})^T) = m(1 + \sigma^2 d)$, $\sigma$ is a Gaussian distribution variance, m is a quantity of samples of the training data, d is a dimension of the training data, $Z^{l-1}$ is the first data feature, $e \in R^{m \times 1}$ is a column vector whose elements are all 1, $\Pi_i$ is the category distribution information of the training data, $Tr()$ represents a trace operation, $I$ is an identity matrix, $m_i$ is a quantity of pieces of data whose category label corresponds to an $i^{th}$ category in the m pieces of training data, $m = \sum_i^K m_i$, K is a quantity of all categories of category labels in the m pieces of training data, $C_i^l$ is network parameters of the $i^{th}$ category of the $l^{th}$ layer, and $G$ and $H_i$ are the gradient parameters.

35. The apparatus according to claim 28, wherein the second determining unit is specifically configured to:

determine, based on the to-be-processed data and the network parameters of the $l^{th}$ layer, category distribution information $\Pi_i^l$ that corresponds to predicted category labels and that is of the to-be-processed data;
determine an objective function gradient expression based on the to-be-processed data and the category distribution information $\Pi_i^l$ that corresponds to the predicted category labels and that is of the to-be-processed data; and
determine the data feature of the to-be-processed data based on the to-be-processed data and the objective function gradient expression.

36. The apparatus according to claim 35, wherein the second determining unit is specifically configured to:

determine projections of the predicted category labels in the to-be-processed data on a first category based on the to-be-processed data and the network parameters of the $l^{th}$ layer, wherein the first category is any one of a plurality of categories corresponding to the predicted category labels in the to-be-processed data; and
determine, based on the projections of the to-be-processed data on the first category, the category distribution information that corresponds to the predicted category labels and that is of the to-be-processed data.

37. The apparatus according to claim 36, wherein

$$p_i^l = U_i^l Z;$$

and

$$\Pi_i^l = \frac{exp\left(-\eta \|p_i^l\|\right)}{\sum_i exp(-\eta \|p_i^l\|)} \in [0,1],$$

wherein $Z$ is the to-be-processed data, $U_i^l$ is network parameters of an $i^{th}$ category of the $l^{th}$ layer, $p_i^l$ is projections of the predicted category labels in the to-be-processed data on the $i^{th}$ category of the $l^{th}$ layer, $\Pi_i^l$ is the category distribution information that corresponds to the predicted category labels and that is of the to-be-processed data, and $\eta$ is a hyperparameter for controlling estimation confidence.

38. The apparatus according to any one of claims 35 to 37, wherein the objective function gradient expression comprises:

$$\frac{\partial L}{\partial Z} = \sum_{i=1}^{K} \sum_{j=i+1}^{K} \left( \frac{\alpha_{i,j}}{m_i} \left( -\widehat{S}_i^{-1} \widehat{S}_j \widehat{S}_i^{-1} + \widehat{S}_j^{-1} \right) Z \Pi_i^l + \frac{\alpha_{i,j}}{m_j} \left( -\widehat{S}_j^{-1} \widehat{S}_i \widehat{S}_j^{-1} + \widehat{S}_i^{-1} \right) Z \Pi_j^l \right) =$$

$$\sum_{i=1}^{K} \sum_{j \neq i}^{K} \frac{\alpha_{i,j}}{m_i} \left( -\widehat{S}_i^{-1} \widehat{S}_j \widehat{S}_i^{-1} + \widehat{S}_j^{-1} \right) Z \Pi_i^l,$$

$m_i$ is a quantity of pieces of data whose predicted category label is the $i^{th}$ category in m pieces of to-be-processed data, $m = \sum_i^K m_i$ , K is a quantity of all categories of predicted category labels in the m pieces of to-be-processed data, $\alpha_{i,j} = \frac{m_i + m_j}{m}$ is a weight parameter used to balance quantities of samples of the predicted categories in the to-be-processed data, $Z$ is the to-be-processed data, $\Pi_i^l$ is the category distribution information that corresponds to the predicted category labels and that is of the to-be-processed data, $S_i$ is an autocorrelation matrix of the data whose predicted category label corresponds to the $i^{th}$ category in the to-be-processed data, and $\hat{S}_i$ is a regularized autocorrelation matrix of the data whose predicted category label corresponds to the $i^{th}$ category in the to-be-processed data.

39. The apparatus according to claim 35, wherein

$$p_i^l = A_i^l Z;$$

and

$$\Pi_i^l = \frac{exp\left(-\eta \left\| p_i^l \right\| \right)}{\sum_i exp(-\eta \| p_i^l \|)} \in [0,1],$$

wherein $Z$ is the to-be-processed data, $A_i^l$ is network parameters of an $i^{th}$ category of the $l^{th}$ layer, $p_i^l$ is projections of the predicted category labels in the to-be-processed data on the $i^{th}$ category of the $l^{th}$ layer, $\Pi_i^l$ is the category distribution information that corresponds to the predicted category labels and that is of the to-be-processed data, and $\eta$ is a hyperparameter for controlling estimation confidence.

40. The apparatus according to claim 35 or 36, wherein the objective function gradient expression comprises:

$$\frac{\partial L}{\partial Z} = \sum_{k=1}^{K} \frac{\alpha_i}{m_i} \left( \widehat{S}^{-1} - \widehat{S}_i^{-1} \right) Z \Pi_i^l + \frac{\alpha_i}{m} \left( -\widehat{S}^{-1} \widehat{S}_i \widehat{S}^{-1} + \widehat{S}^{-1} \right) Z,$$

wherein $m_i$ is a quantity of pieces of data whose predicted category label is an $i^{th}$ category in m pieces of to-be-processed data, $\alpha_i = \frac{m_i}{m}$, $\alpha_i$ is a weight parameter used to balance quantities of samples of predicted categories in the to-be-processed data, K is a quantity of all the categories of predicted category labels in the m pieces of to-be-processed data, $Z$ is the to-be-processed data, $\Pi_i^l$ is the category distribution information that corresponds to the predicted category labels and that is of the to-be-processed data, $S_i$ is an autocorrelation matrix of the data whose predicted category label corresponds to the $i^{th}$ category in the to-be-processed data, $\hat{S}_i$ is a regularized autocorrelation matrix of the data whose predicted category label corresponds to the $i^{th}$ category in the to-be-processed data, $S$ is autocorrelation matrixes of data whose predicted category labels correspond to all the categories in the to-be-processed data, and $\hat{S}$ is regularized autocorrelation matrixes of the data whose predicted category labels correspond to all the categories in the to-be-processed data.

41. The apparatus according to claim 35, wherein the category distribution information that corresponds to the predicted category labels and that is of the to-be-processed data comprises one or more of the following: distance information, correlation information, differential information, or soft classification information.

42. The apparatus according to claim 41, wherein

$$\Pi_i^l = \text{argmin dist}(Z, C_i^l);$$

or

$$\Pi_i^l = arg\text{min} < Z, C_i^l >;$$

or

$$\Pi_i^l = \text{argmin dist}(Z^l, C_i^l) - \text{dist}(Z^{l-1}, C_i^{l-1});$$

or

$$\Pi_i^l = \frac{\exp(\eta dist(Z, C_i^l))}{\sum_i \exp(\eta dist(Z, C_i^l))},$$

wherein **Z** is the to-be-processed data, $\Pi_i^l$ is the category distribution information that corresponds to the predicted category labels and that is of the to-be-processed data, $C_i^l$ is network parameters of an $i^{th}$ category of the $l^{th}$ layer, **Z^l** is a data feature of the to-be-processed data at the $l^{th}$ layer, **Z^{l-1}** is a data feature of the to-be-processed data at the $(1-1)^{th}$ layer, and < > represents an inner product.

43. The apparatus according to claim 35, wherein the second determining unit is specifically configured to:

determine gradient parameters (**G** and **H_i**) based on the category distribution information $\Pi_i^l$ that corresponds to the predicted category labels and that is of the to-be-processed data; and
determine the objective function gradient expression based on the to-be-processed data and the gradient parameters.

44. The apparatus according to claim 43, wherein

$$g_i = \frac{1}{Tr(\Pi_i^l)} \Pi_i^l e;$$

$$G = [g_1, g_2, ..., g_i];$$

and

$$H_i = \frac{1}{m_i} (I - g_i e^T) \Pi_i^l (I - g_i e^T)^T,$$

wherein $\Pi_i^l$ is the category distribution information that corresponds to the predicted category labels and that is of the to-be-processed data, $Tr()$ represents a trace operation, *I* is an identity matrix, $m_i$ is a quantity of pieces of data of an $i^{th}$ category in m pieces of to-be-processed data, $m = \sum_i^K m_i$, K is a quantity of all categories of predicted category labels in the m pieces of to-be-processed data, and **G** and **H_i** represent the gradient parameters.

45. The apparatus according to claim 44, wherein the objective function gradient expression comprises:

$$\frac{\partial L}{\partial Z} = -ZG(G^T Z^T Z G)^{-1} G^T + \beta \sum_{k=1}^{K} \left( \frac{1}{\epsilon + \sigma^2} Z H_i - (\epsilon I + Z H_i Z^T)^{-1} Z H_i \right),$$

wherein $Z$ is the to-be-processed data, $\sigma$ is a Gaussian distribution variance, $\varepsilon$ is a regularization parameter, $I$ is an identity matrix, $G$ and $H_i$ represent the gradient parameters, and $\beta$ represents a regularization parameter.

46. The apparatus according to any one of claims 25 to 45, wherein

$$Z^l = Z^{l-1} + \lambda \frac{\partial L}{\partial Z}, \ \ Z^l \in \mathbb{S}^{d-1},$$

wherein $Z^l$ is the data feature of the to-be-processed data, $\frac{\partial L}{\partial Z}$ is the objective function gradient expression, $Z^{l-1}$ is the to-be-processed data, and $Z^{l-1}$ is constrained in (d-1)-dimensional unit sphere space.

47. The apparatus according to any one of claims 25 to 46, wherein the data processing apparatus further comprises an output unit, wherein
the output unit is configured to output the data feature of the to-be-processed data.

48. The apparatus according to any one of claims 25 to 47, wherein the to-be-processed data of the unknown classification or clustering information is a data feature of third data, the data feature of the third data is determined through another feedforward neural network, input information of an l<sup>th</sup> layer in the another feedforward neural network comprises category distribution information of training data and a first data feature, output information of the l<sup>th</sup> layer comprises a second data feature, the first data feature is an output of an (1-1)<sup>th</sup> layer, both the first data feature and the second data feature are classification or clustering information representing the training data, and l is a positive integer greater than 1.

49. A data processing apparatus, comprising at least one processor and a communication interface, wherein the at least one processor invokes a computer program or instructions stored in a memory to perform the method according to any one of claims 1 to 24.

50. A data processing system, comprising the apparatus according to any one of claims 25 to 48.

51. A computer-readable storage medium, storing computer instructions, wherein when the computer instructions are run on a processor, the method according to any one of claims 1 to 24 is implemented.

52. A computer program product, comprising computer program code, wherein when the computer program code is run on a computer, the method according to any one of claims 1 to 24 is implemented.

FIG. 1

Intelligent information chain

Intelligent product and industry application

| Translation/Text analysis/... | Voice/Vision/ Image/... |

| Data | | Data processing: | Data training/ Machine learning/ Deep learning | Searching/ Inference/ Decision-making | ... |

| Infrastructure | Sensor | Intelligent chip | Basic platform | ... |

IT value chain

FIG. 2

FIG. 3

FIG. 4

```
┌─────────────┐    ┌──────────────┐    ┌──────────────┐    ┌──────────────┐
│             │    │ Network      │    │ Target function│   │ Data feature Z¹│
│ Training Data│──▶│ parameters of a│─▶│ gradient      │──▶│ of the training│
│             │    │ 1ˢᵗ layer    │    │ expression    │    │ data          │
└─────────────┘    └──────────────┘    └──────────────┘    └──────────────┘

┌─────────────┐    ┌──────────────┐
│ Category labels│  │ Category     │
│ in the training│─▶│ distribution │
│ data        │    │ information of│
│             │    │ the training data│
└─────────────┘    └──────────────┘
```

FIG. 4A

```
┌─────────────┐    ┌──────────────┐    ┌──────────────┐    ┌──────────────┐
│ Data feature Z¹│ │ Network      │    │ Target function│   │ Data feature Z²│
│ of training data│▶│ parameters of a│─▶│ gradient     │──▶│ of the 2ⁿᵈ layer│
│             │    │ 2ⁿᵈ layer    │    │ expression    │    │              │
└─────────────┘    └──────────────┘    └──────────────┘    └──────────────┘

┌─────────────┐    ┌──────────────┐
│ Category labels│  │ Category     │
│ in the training│─▶│ distribution │
│ data        │    │ information of│
│             │    │ the training data│
└─────────────┘    └──────────────┘
```

FIG. 4B

```
┌─────────────┐    ┌──────────────┐    ┌──────────────┐    ┌──────────────┐
│ Data feature Z²│ │ Network      │    │ Target function│   │ Data feature Z³│
│ of a 2ⁿᵈ layer │▶│ parameters of a│─▶│ gradient     │──▶│ of the 3ʳᵈ layer│
│             │    │ 3ʳᵈ layer    │    │ expression    │    │              │
└─────────────┘    └──────────────┘    └──────────────┘    └──────────────┘

┌─────────────┐    ┌──────────────┐
│ Category labels│  │ Category     │
│ in the training│─▶│ distribution │
│ data        │    │ information of│
│             │    │ the training data│
└─────────────┘    └──────────────┘
```

FIG. 4C

## FIG. 4D

Network parameters of a 1$^{st}$ layer

Category distribution information that corresponds to predicted category labels and that is of the to-be-processed data

Target function gradient expression

Data feature $\mathbf{Z}^1$ of the 1$^{st}$ layer

To-be-processed data

## FIG. 4E

Network parameters of a 2$^{nd}$ layer

Category distribution information that corresponds to predicted category labels and that is of the to-be-processed data

Target function gradient expression

Data feature $\mathbf{Z}^2$ of the 2$^{nd}$ layer

Data feature $\mathbf{Z}^1$ of a 1$^{st}$ layer

EP 4 468 254 A1

FIG. 4F

FIG. 5

59

FIG. 6

FIG. 7A

FIG. 7B

$(l-1)^{th}$ layer in a feedforward
neural network model

Data feature $\mathbf{Z}^{l-2}$ of an $(l-2)^{th}$ layer

Category labels in training data

Network parameters $\mathbf{A}_i^{l-1}$ and $\mathbf{B}_i^{l-1}$ of the $(l-1)^{th}$ layer

Category distribution information $\mathbf{\Pi}_i$ of the training data

Target function gradient expression

*lr

+

$\mathbf{P_s}^{d-1}$

Data feature $\mathbf{Z}^{l-1}$ of the $(l-1)^{th}$ layer

TO FIG. 8B

FIG. 8A

$l^{th}$ layer in the feedforward
neural network model

CONT. FROM FIG. 8A

Category labels in the training data

Network parameters $\mathbf{A}_i^l$ and $\mathbf{B}_i^l$ of the $l^{th}$ layer

Category distribution information $\mathbf{\Pi}_i$ of the training data

Target function gradient expression

*lr

+

$\mathbf{P_s}^{d-1}$

Data feature $\mathbf{Z}^l$ of the $l^{th}$ layer

FIG. 8B

$(l-1)^{th}$ layer in a feedforward
neural network model

Data
feature $\mathbf{Z}^{l-2}$
of an $(l-2)^{th}$
layer

Network
parameters
$\mathbf{C}_i^{l-1}$ of the
$(l-1)^{th}$ layer

Target
function
gradient
expression

$+$

$*lr$

$\mathbf{P}_{s^{d-1}}$

Data
feature $\mathbf{Z}^{l-1}$
of the $(l-1)^{th}$ layer

TO FIG.
9B

Category
labels in
training
data

Category
distribution
information
$\mathbf{\Pi}_i$ of the
training data

Gradient
parameter G

Gradient
parameter $\mathbf{H}_i$

FIG. 9A

$l^{th}$ layer in the feedforward
neural network model

CONT.
FROM
FIG. 9A

Network
parameters
$\mathbf{C}_i^l$ of the
$l^{th}$ layer

Target
function
gradient
expression

$+$

$*lr$

$\mathbf{P}_{s^{d-1}}$

Data
feature $\mathbf{Z}^l$
of the $l^{th}$ layer

Category
labels in
the
training
data

Category
distribution
information
$\mathbf{\Pi}_i$ of the
training data

Gradient
parameter G

Gradient
parameter $\mathbf{H}_i$

FIG. 9B

S1001

> Determine a feedforward neural network model

S1002

> Obtain to-be-processed data of unknown classification or clustering information

S1003

> Input the to-be-processed data into the feedforward neural network model to determine a data feature of the to-be-processed data

FIG. 10

$l^{th}$ layer in a feedforward neural network model

To-be-processed data

Network parameters $U_i^l$ of the $l^{th}$ layer

Category distribution information $\Pi_i^l$ that corresponds to predicted category labels and that is of the to-be-processed data

Target function gradient expression

$*lr$

$+$

$P_{s^{d-1}}$

Data feature of the to-be-processed data

FIG. 11

$l^{th}$ layer in a feedforward neural
network model

Network
parameters $\mathbf{A}_i^l$ and
$\mathbf{B}_i^l$ of the $l^{th}$ layer

Target function
gradient
expression

$*lr$

$+$

$\mathbf{P}_{s^{d-1}}$

To-be-
processed
data

Category distribution
information $\mathbf{\Pi}_i^l$ that
corresponds to
predicted category
labels and that is of the
to-be-processed data

Data feature
of the to-be-
processed
data

FIG. 12

$l^{th}$ layer in a feedforward
neural network model

Network
parameters $\mathbf{C}_i^l$
of the $l^{th}$ layer

Target function
gradient
expression

$*lr$

$+$

$\mathbf{P}_{s^{d-1}}$

Category distribution
information $\mathbf{\Pi}_i^l$ that
corresponds to
predicted category
labels and that is of
the to-be-processed
data

Gradient
parameter G

Gradient
parameter $\mathbf{H}_i$

To-be-
processed
data

Data
feature of
the to-be-
processed
data

FIG. 13

FIG. 14

First node

Feedforward neural network model in the first node

Data feature $Z_1$ extracted by the first node

Channel

Second node

Feedforward neural network model in the second node

Data feature $Z_2$ extracted by the second node

Channel

$n^{th}$ node

Feedforward neural network model in the $n^{th}$ node

Data feature $Z_3$ extracted by a third node

Receive end

Network model of a first network in the receive end

Output layer

0
1
0
2
5
⋮
0
1
0

FIG. 15

FIG. 16A

FIG. 16B

Data processing apparatus 1700

| First determining unit 1701 | Obtaining unit 1702 | Second determining unit 1703 |

FIG. 17

Data processing apparatus 1800

Processor 1801

Communication interface 1803

Memory 1802

Bus 1804

FIG. 18

## INTERNATIONAL SEARCH REPORT

| International application No. |
| --- |
| **PCT/CN2023/082740** |

| A. | CLASSIFICATION OF SUBJECT MATTER |
| --- | --- |

G06V10/774(2022.01)i

According to International Patent Classification (IPC) or to both national classification and IPC

| B. | FIELDS SEARCHED |
| --- | --- |

Minimum documentation searched (classification system followed by classification symbols)

IPC: G06V

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, EPODOC, IEEE: 前馈神经网络, 前馈网络, 感知器网络, 感知机, BP 神经网络, RBF神经网络, 分类, 聚类, 类别, 类型, 标签, 训练, 输入, 输出, 层, 多层, 梯度, 能量约束, FFNN, feedforward neural network, feedforward network, perceptron network, perceptron, BP neural network, RBF neural network, classification, clustering, class, type, label, training, input, output, layer, multilayer, gradient, energy constraint

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 110751230 A (SHENZHEN INSTITUTE OF TERAHERTZ TECHNOLOGY AND INNOVATION CO., LTD. et al.) 04 February 2020 (2020-02-04) description, paragraphs [0030]-[0095] | 1-2, 23, 25-26, 47, 49-52 |
| A | CN 112069313 A (BEIJING UNIVERSITY OF TECHNOLOGY) 11 December 2020 (2020-12-11) entire document | 1-52 |
| A | CN 113627471 A (XIDIAN UNIVERSITY) 09 November 2021 (2021-11-09) entire document | 1-52 |
| A | US 2008065574 A1 (MORGAN STANLEY) 13 March 2008 (2008-03-13) entire document | 1-52 |
| A | US 2020034366 A1 (DRCHRONO INC.) 30 January 2020 (2020-01-30) entire document | 1-52 |

☐ Further documents are listed in the continuation of Box C. ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **12 June 2023** | **16 June 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/082740**

| Patent document cited in search report | | | Publication date (day/month/year) | Patent family member(s) | Publication date (day/month/year) |
|---|---|---|---|---|---|
| CN | 110751230 | A | 04 February 2020 | None | |
| CN | 112069313 | A | 11 December 2020 | None | |
| CN | 113627471 | A | 09 November 2021 | None | |
| US | 2008065574 | A1 | 13 March 2008 | None | |
| US | 2020034366 | A1 | 30 January 2020 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210290759